# DEMANDE DE BREVET EUROPEEN

(11) **EP 1 408 428 A1**
(43) Date de publication de la demande: **14.04.2004**
(21) Numéro de dépôt: 03364022.8
(22) Date de dépôt: 09.10.2003
(51) Int. Cl.: G06F 17/30, G06T 17/00, G06T 15/00

(54) **Système et procédé de traitement et de visualisation des résultats de recherches effectuées par un moteur de recherche à base d'indexation, modèle d'interface et méta-modèle correspondants**

(30) Priorité: 09.10.2002 FR 0212558
(71) Demandeur: FRANCE TELECOM, 75015 Paris (FR)
(72) Inventeur: Bouville, Christian, 35770 Vern sur Seiche (FR); Cellary, Wojciech, 60-179 Poznan (PL); Walczak, Krystof, 60-687 Poznan (PL); Wisa, Wojciech, 60-681 Poznan (PL); Cotarmanac'h, Alexandre, 35350 Saint Meloir des Ondes (FR)
(74) Mandataire: Vidon, Patrice

(57) **Abrégé**

L'invention concerne un système de traitement et de visualisation des résultats de recherches effectuées par au moins un moteur de recherche à base d'indexation. Ce système comprend : des moyens de gestion d'un ensemble de modèles d'interface comprenant un premier sous-ensemble comprenant au moins deux modèles d'interface dont les modèles de scène virtuelle 3D associés sont distincts et permettent chacun de visualiser la totalité du résultat de la au moins une recherche ; des moyens de sélection d'un modèle d'interface, comprenant des moyens de sélection initiale d'un modèle d'interface au sein du premier sous-ensemble (la sélection initiale étant fonction d'au moins un attribut du résultat de la au moins une recherche et/ou d'au moins une interaction de l'utilisateur avec le système) et des moyens de changement du modèle d'interface courant (par sélection d'un modèle d'interface suivant au sein dudit ensemble de modèles d'interface, en fonction d'au moins une interaction de l'utilisateur avec le système et, éventuellement, d'au moins un attribut du résultat de la recherche) ; des moyens de génération et restitution d'une interface utilisateur, selon le modèle d'interface utilisateur sélectionné ; des moyens de génération et restitution d'une scène virtuelle 3D, en fonction du résultat de la au moins une recherche et selon le modèle de scène virtuelle 3D sélectionné.

## Description

Le domaine de l'invention est celui de la visualisation des résultats de recherches effectuées par un moteur de recherche.

Plus précisément, l'invention concerne un système et un procédé permettant une telle visualisation, lorsque les recherches sont effectuées par un moteur de recherche à base d'indexation.

L'invention s'applique notamment, mais non exclusivement, à la visualisation des résultats de recherches effectuées sur le réseau Internet, ou encore à la visualisation des résultats de recherches effectuées au sein d'une base de données.

Plus généralement, elle peut s'appliquer dans tous les cas où les résultats à visualiser comprennent de très grandes quantités d'informations.

Les moteurs de recherche, notamment sur le réseau Internet, sont des outils très importants, fournissant un accès aux informations stockées dans les systèmes interconnectés par le réseau Internet. Au cours des dernières années, d'importants progrès ont été accomplis dans le domaine des bases de données stockant des informations relatives aux pages Web disponibles sur le réseau Internet, ainsi que dans le domaine des robots d'indexation et de recherche. Au contraire, les techniques de visualisation des résultats des recherches effectuées sur le réseau Internet ont peu progressé. On utilise encore aujourd'hui des techniques issues d'une époque où le nombre de pages trouvées en réponse à une requête était de l'ordre de quelques dizaines ou d'une centaine. L'accès à ce nombre de pages une par une n'était pas impossible et permettait éventuellement de trouver l'information utile recherchée.

La situation actuelle est différente. La croissance fulgurante du contenu du Web donne des milliers de pages (adresses URL) en réponse à une requête. Un tel nombre très élevé de pages ne peut être vérifié une par une, donc, paradoxalement, il devient plus difficile d'obtenir l'information recherchée. Il est proposé des systèmes basés sur l'affinage des requêtes. Mais ils ne constituent pas une aide suffisante car, même après affinage des requêtes, le nombre de pages trouvées reste trop élevé. En outre, l'ordre de présentation des pages par les moteurs de recherche est généralement différent de l'ordre souhaité par un utilisateur. Par exemple, les pages américaines viennent généralement avant les pages européennes.

On distingue généralement trois types de moteur de recherche, selon la technique utilisée pour collecter les informations : les répertoires, les moteurs de recherche à base d'indexation et les moteurs de recherche d'égal à égal.

Les répertoires (« directories » en anglais) sont des listes d'adresses URL groupées selon une hiérarchie de catégories. Les catégories sont définies par un administrateur de répertoires. Les répertoires sont critiqués pour le faible de nombre d'adresses URL stockées, l'absence d'un mécanisme d'expiration et une catégorisation ambiguë.

Les moteurs de recherche à base d'indexation comprennent un sous-système d'indexation et un sous-système de gestion des requêtes. Le sous-système d'indexation gère l'exploration des pages Web sur le réseau Internet, en utilisant des programmes spécifiques appelés « robots » (ou encore « spiders », « scooters » ou « crawlers »). Chaque robot navigue au sein des pages Web et index les mots trouvés. Les documents indexés avec leurs adresses URL sont stockés dans une base de données. Après exploration d'une page Web, le robot passe à l'adresse URL suivante, suivant des liens trouvés. En fonction de la taille d'un moteur de recherche, un sous-système d'indexation peut déployer plusieurs centaines de robots explorant le réseau Internet en parallèle. Les sous-systèmes d'indexation actuels peuvent indexer non seulement des pages HTML, mais aussi des documents stockés sous différents formats tels que « Adobe Acrobat PDF » (marque déposée), « Word » (marque déposée), « Excel » (marque déposée), etc. Les documents stockés dans la base de données sont utilisés par le sous-système de gestion des requêtes, qui reçoit, interprète et exécute des requêtes des utilisateurs. Les utilisateurs se connectent au sous-système de gestion des requêtes en utilisant leur navigateur Web (« Web browser »), sur lequel un formulaire est affiché, présentant un ou plusieurs champs d'entrée de mots-clés relatifs aux informations recherchées. Quand un utilisateur soumet une requête, le sous-système de gestion des requêtes trouve des adresses URL de pages Web qui sont les plus pertinentes vis-à-vis des mots-clés, et les présente à l'utilisateur. Les techniques de calcul de la pertinence des documents (pages Web) trouvés diffèrent légèrement d'un moteur de recherche à l'autre.

Les moteurs de recherche à base d'indexation présentent plusieurs avantages : nombre élevé d'adresses URL stockées dans la base de données, mécanisme de ré-indexation et vitesse élevée d'interprétation des requêtes et de présentation des résultats. Actuellement, leurs inconvénients sont les suivants : la pertinence des informations trouvées dépend d'algorithmes incorporés qui restent hors de contrôle des utilisateurs ; souvent, une recherche imprécise se traduit par un nombre si élevé d'adresses URL retournées que l'utilisateur est incapable de les analyser.

Les moteurs de recherche d'égal à égal (« peer-to-peer search engines » en anglais) n'utilisent pas un site Web central ou un serveur central, dans lequel toutes les informations sont stockées. A la place, une requête pour l'obtention d'une information particulière est propagée à travers le réseau vers tous les ordinateurs participants. L'ordinateur ayant le document demandé envoie une information au requérant, ce dernier pouvant ainsi ensuite se connecter directement à cet ordinateur et récupérer le document demandé.

Les principaux avantages des moteurs de recherche d'égal à égal sont les suivants : c'est une solution économique en comparaison des moteurs de recherche à base d'indexation et des répertoires, du fait de l'absence de serveur central sophistiqué et coûteux ; l'information collectée est toujours à jour, puisqu'il s'agit d'une image instantanée (« snapshot ») du réseau. Leurs inconvénients sont les suivants : chaque ordinateur participant à la recherche et à la fourniture d'informations doit être équipé d'un logiciel spécial ; la recherche d'informations peut prendre beaucoup plus de temps que dans le cas d'un moteur de recherche à base d'indexation ; la pertinence des informations trouvées dépend d'algorithmes incorporés qui restent hors de contrôle des utilisateurs.

La visualisation des résultats de recherches est l'un des plus importants facteurs qui permet à l'utilisateur de trouver des informations appropriées au sein des résultats de recherche. On distingue généralement trois techniques de visualisation de résultats de recherches : visualisation par interface textuelle, visualisation par interface graphique 2D (bidimensionnelle) et visualisation par interface graphique 3D (tridimensionnelle).

Dans le cas des répertoires, la visualisation par interface textuelle consiste à collecter sur une même page (généralement une page est dédiée à une catégorie) toutes les adresses URL qui sont conformes aux critères de recherche de l'utilisateur. Habituellement, la liste d'adresses URL est classée dans l'ordre alphabétique.

Dans le cas des moteur de recherche à base d'indexation, la visualisation par interface textuelle consiste à présenter les résultats des recherches sous forme de listes de réponses. Chaque réponse consiste typiquement en une adresse URL d'une page Web, ainsi que diverses propriétés de cette page Web : titre, résumé, date de dernière modification, taille, langue, etc. Généralement, le nombre d'adresses URL trouvées étant très élevé, les listes ne sont affichées que partiellement, avec 10 à 25 réponses à la fois.

La visualisation par interface textuelle présente plusieurs inconvénients :
- nombre limité de réponses présentées simultanément ; généralement seulement 10 réponses sont visualisées à la fois, ce nombre pouvant parfois être porté à 25, voire à 50) ;
- disponibilité limitée des réponses : les moteurs de recherche peuvent afficher un nombre limité de pages avec les résultats de la recherche (par exemple 20 pages) ; le nombre total de réponses présentées (qui est égal au nombre maximum de pages multiplié par le nombre de réponses par page) est en conséquence limité et très souvent ne dépasse pas quelques pour-cents du nombre total de réponses satisfaisant la requête ;
- un seul critère de pertinence (aussi appelé attribut du résultat) peut être utilisé pour visualiser les résultats. La pertinence d'un document est visualisée simplement par le rang de la réponse correspondante. Généralement, les documents placés en haut de la liste des réponses sont les plus pertinents ;
- absence de recherche comparée : l'utilisateur ne peut pas comparer les résultats de recherches obtenus à partir de requêtes différentes ou comparer différentes catégories pertinentes en même temps ;
- interaction limitée avec l'utilisateur : un utilisateur peut seulement sélectionner une adresse URL dans la liste, et en cliquant sur le lien passer au document sélectionné ; un utilisateur ne peut pas sélectionner un groupe de documents avec lesquels il souhaite travailler ;
- perception d'informations textuelles moins efficace que leur représentation graphique.

Dans le cas des répertoires, la visualisation par interface graphique 2D ou 3D consiste par exemple à présenter un répertoire sous la forme d'un paysage urbain, dans lequel différentes zones (centre ville, quartier commercial, etc.) sont synonymes de catégories de répertoire, tandis que les immeubles représentent des sites Web ou des adresses URL.

Dans ce cas, les inconvénients de la visualisation par interface graphique 2D ou 3D sont notamment les suivants :
- nombre limité de fonctionnalité du fait que l'interface graphique est construite en haut des répertoires et hérite de tous leurs inconvénients : faible nombre de réponses stockées (en comparaison des moteurs de recherche à base d'indexation), catégorisation ambiguë et absence de mécanisme d'expiration ;
- faible niveau d'interaction avec l'utilisateur : comme avec une interface textuelle, un utilisateur peut seulement sélectionner un objet visuel, et en cliquant sur cet objet passer à l'adresse URL représentée par cet objet ; un utilisateur ne peut ni sélectionner un groupe d'objets, ni les manipuler (déplacement, rotation, etc.) ;
- non exploitation des possibilités graphiques : les interfaces graphiques sont crées plus pour un plaisir visuel que pour exploiter les avantages de la visualisation graphique de résultats de recherche (formes, couleurs, dimensions, etc.).

Dans le cas des moteurs de recherche à base d'indexation, la visualisation par interface graphique 2D ou 3D consiste à présenter à l'utilisateur un environnement 3D dans lequel chaque document des résultats de la recherche est représenté par un objet 3D.

Dans ce cas, les inconvénients de la visualisation par interface graphique 2D ou 3D sont notamment les suivants :
- il n'est pas offert à l'utilisateur la possibilité de choisir un modèle d'interface parmi plusieurs, en fonction des résultats à visualiser ;
- il n'est pas proposé ni suggéré de présenter à l'utilisateur d'abord collectivement des données, puis, en réponse à une interaction de l'utilisateur, des données plus spécifiques ;
- comme pour les interfaces textuelles, le facteur de pertinence des documents retrouvés est calculé par le système, et les résultats sont présentés de façon fixe à l'utilisateur ;
- comme pour les interfaces textuelles, un seul facteur de pertinence est utilisé ;
- les interactions de l'utilisateur avec le système sont limitées au changement de point de vue et à l'ouverture d'un document souhaité. Il est impossible de manipuler les objets (déplacement, rotation, changement d'attributs, etc.) ;
- le mappage (ou « mapping » en anglais, c'est-à-dire l'association) de propriétés du résultat de la recherche avec des attributs visuels de l'environnement 3D est figé et ne peut pas être modifié par l'utilisateur ;
- les solutions existantes utilisent un logiciel spécialisé qui nécessite une installation complexe et n'est pas compatible avec les standards de visualisation 3D (VRML, X3D) ;
- les interfaces graphiques 3D permettent de visualiser des informations dans un environnement 3D universel, donc différents volumes d'informations doivent être présentés dans une même scène. Dans certains cas, ceci peut conduire à une présentation mal adaptée des informations et réduit la perception de l'utilisateur.

L'invention a notamment pour objectif de pallier ces différents inconvénients de l'état de la technique.

Plus précisément, l'un des objectifs de la présente invention est de fournir une nouvelle technique (système et procédé) de visualisation des résultats de recherches effectuées par un moteur de recherche à base d'indexation.

L'invention a également pour objectif de fournir une telle technique permettant de visualiser le résultat, complet ou partiel, d'une recherche, de la manière la mieux appropriée pour l'utilisateur.

Un objectif complémentaire de l'invention est de fournir une telle technique permettant à l'utilisateur de naviguer entre plusieurs environnements représentant différents niveaux d'abstraction, de façon à permettre à l'utilisateur de passer d'une vue globale du résultat d'une recherche, jusqu'à une visualisation précise des documents individuels qui l'intéressent, en passant éventuellement entre-temps par une ou plusieurs vues groupées de résultats intermédiaires.

Un autre objectif de l'invention est de fournir une telle technique permettant d'assigner (« mapping ») de manière flexible des propriétés du résultat d'une recherche à des attributs visuels des environnements tridimensionnels.

Encore un autre objectif de l'invention est de fournir une telle technique permettant de visualiser en même temps plusieurs facteurs de pertinence des réponses trouvées.

Un autre objectif de l'invention est de fournir une telle technique permettant de visualiser et comparer les résultats de plusieurs recherches.

Encore un autre objectif de l'invention est de fournir une telle technique permettant de construire une hiérarchisation du contenu du résultat d'une recherche à visualiser.

Ces différents objectifs, ainsi que d'autres qui apparaîtront par la suite, sont atteints selon l'invention à l'aide d'un système de traitement et de visualisation des résultats de recherches effectuées par au moins un moteur de recherche à base d'indexation. Selon l'invention, ce système comprend :
- des moyens de gestion d'un ensemble de modèles d'interface, chaque interface de modèle étant associé à un modèle d'interface utilisateur et un modèle de scène virtuelle 3D qui sont liés, chaque modèle de scène virtuelle 3D définissant un mappage particulier entre des paramètres dudit modèle de scène virtuelle 3D et des attributs du résultat d'au moins une recherche, l'ensemble de modèles d'interface comprenant un premier sous-ensemble comprenant au moins deux modèles d'interface dont les modèles de scène virtuelle 3D associés sont distincts et permettent chacun de visualiser la totalité du résultat de la au moins une recherche ;
- des moyens de sélection d'un modèle d'interface, comprenant :
   * des moyens de sélection initiale d'un modèle d'interface au sein dudit premier sous-ensemble de modèles d'interface, la sélection initiale étant fonction d'au moins un attribut du résultat de la au moins une recherche et/ou d'au moins une interaction de l'utilisateur avec le système ;
   * des moyens de changement du modèle d'interface courant, par sélection d'un modèle d'interface suivant au sein dudit ensemble de modèles d'interface, en fonction d'au moins une interaction de l'utilisateur avec le système et, éventuellement, d'au moins un attribut du résultat de la recherche ;
- des moyens de génération et restitution d'une interface utilisateur, selon le modèle d'interface utilisateur sélectionné par les moyens de sélection ;
- des moyens de génération et restitution d'une scène virtuelle 3D, en fonction du résultat de la au moins une recherche et selon le modèle de scène virtuelle 3D sélectionné par les moyens de sélection, la scène virtuelle 3D restituée permettant à l'utilisateur de visualiser la totalité du résultat de la au moins une recherche.

Le principe général de l'invention consiste donc à gérer une pluralité de modèles d'interface et à permettre une sélection initiale dynamique, par le système et/ou par l'utilisateur, d'un des modèles d'interface dont les modèles de scène virtuelle 3D associés permettent chacun de visualiser la totalité du résultat d'une recherche.

En d'autres termes, la technique selon l'invention permet de visualiser le résultat complet d'une recherche, de la manière la mieux appropriée pour l'utilisateur, grâce à une visualisation dans un environnement tridimensionnel choisi dynamiquement, par le système et/ou l'utilisateur, en fonction d'un ou plusieurs attribut(s) du résultat de la recherche et/ou d'une ou plusieurs interaction(s) de l'utilisateur avec le système.

Par exemple, si le nombre de domaines où résident les documents retrouvés (et appartenant au résultat d'une recherche) n'excède pas 20, les objets visuels 3D de l'environnement 3D (scène virtuelle 3D) représentent ces domaines. Sinon, les objets visuels 3D représentent des groupes de documents dans la même langue ou, si tous les documents sont dans la même langue, des groupes de documents contenant un même mot-clé.

En outre, la technique selon l'invention permet de visualiser en même temps, dans un même environnement 3D, plusieurs facteurs de pertinence des réponses trouvées (c'est-à-dire plusieurs attributs du résultat).

Par exemple, un facteur de pertinence reflétant le nombre de répétitions d'un mot-clé donné dans le(s) document(s) retrouvé(s) est associé à l'axe des abscisses, tandis qu'un facteur de pertinence reflétant les positions des occurrences de ce mot-clé dans le(s) document(s) retrouvé(s) est associé à l'axe des ordonnées.

Il convient également de noter que la technique selon l'invention permet de définir des moyens d'interpréter le résultat de la recherche et de le représenter en 3D, par regroupement des pages et structuration en fonction des résultats de la recherche. On rappelle qu'au contraire, avec les systèmes basés sur des répertoire, on sait à tout moment le nombre de pages à afficher dans une catégorie et on peut donc aisément construire hors ligne, pour chaque catégorie finale, un modèle de scène 3D.

La technique selon l'invention permet aussi à l'utilisateur de naviguer entre plusieurs environnements représentant soit un même niveau d'abstraction, soit différents niveaux d'abstraction.

De façon avantageuse, l'ensemble de modèles d'interface comprend en outre un modèle d'interface, dit modèle d'interface initial, utilisé au moins à l'initialisation du système et permettant à l'utilisateur d'interagir avec le système pour effectuer un choix de modèle d'interface au sein dudit premier sous-ensemble de modèles d'interface. Les moyens de sélection initiale d'un modèle d'interface effectuent la sélection initiale en fonction du choix de l'utilisateur.

Dans un mode de réalisation particulier de l'invention, le système comprend des moyens de gestion d'une pluralité de méta-modèles, chaque méta-modèle définissant des changements de modèle d'interface au sein d'un groupe spécifique de modèles d'interface comprenant au moins deux modèles d'interface. Ladite au moins une interaction de l'utilisateur avec le système permet au système de fournir aux moyens de changement du modèle d'interface courant : une demande d'exécution d'un méta-modèle donné parmi la pluralité de méta-modèles ; au moins une variable passée en paramètre de la demande d'exécution. Les moyens de changement du modèle d'interface courant effectuent la sélection du modèle d'interface suivant selon le méta-modèle donné et en fonction de ladite au moins une variable passée en paramètre de la demande d'exécution du méta-modèle donné.

Avantageusement, au moins un changement de modèle d'interface courant est défini, dans au moins un des méta-modèles, par un mécanisme de routes statiques, dans lequel le choix d'une route statique donnée entre le modèle d'interface courant et un modèle d'interface suivant possible dépend uniquement de la valeur particulière de ladite au moins une variable passée en paramètre de la demande d'exécution du méta-modèle.

De façon avantageuse, au moins un changement de modèle d'interface courant est défini, dans au moins un des méta-modèles, par un mécanisme de routes dynamiques, dans lequel le choix d'une route dynamique donnée entre le modèle d'interface courant et un modèle d'interface suivant possible dépend : de la valeur particulière de ladite au moins une variable passée en paramètre de la demande d'exécution du méta-modèle ; et d'informations obtenues dynamiquement par au moins un calcul algorithmique et/ou une recherche complémentaire effectuée par ledit au moins un moteur de recherche à base d'indexation.

Selon une caractéristique avantageuse, au moins certains des modèles d'interface utilisateur définissent au moins un des boutons de navigation appartenant au groupe comprenant :
- un bouton « précédent », permettant à l'utilisateur de demander au système d'utiliser le modèle d'interface précédent à la place du modèle d'interface courant ;
- un bouton « suivant », permettant à l'utilisateur de demander au système d'utiliser un modèle d'interface suivant à la place du modèle d'interface courant ;
- un bouton « initial », permettant à l'utilisateur de demander au système d'utiliser le modèle d'interface initial à la place du modèle d'interface courant ;
- un bouton « aide », permettant à l'utilisateur de demander au système d'utiliser un modèle d'interface d'aide à la place du modèle d'interface courant.

Préférentiellement, les modèles d'interface utilisateur appartiennent au groupe comprenant : des modèles d'interface utilisateur 2D ; des modèles d'interface utilisateur 3D.

De façon préférentielle, ledit ensemble de modèles d'interface comprend en outre au moins un sous-ensemble appartenant au groupe comprenant :
- un second sous-ensemble comprenant au moins un modèle d'interface dont le modèle de scène virtuelle 3D associé permet de visualiser une partie du résultat de la recherche ;
- un troisième sous-ensemble comprenant au moins un modèle d'interface dont le modèle de scène virtuelle 3D associé permet de visualiser un document particulier du résultat de la recherche ;
- un quatrième sous-ensemble comprenant au moins un modèle d'interface dont le modèle de scène virtuelle 3D associé permet de visualiser au moins une image d'un document particulier du résultat de la recherche ;
- un cinquième sous-ensemble comprenant au moins un modèle d'interface dont le modèle de scène virtuelle 3D associé permet de visualiser au moins une séquence vidéo d'un document particulier du résultat de la recherche ;
- un sixième sous-ensemble comprenant au moins un modèle d'interface dont le modèle de scène virtuelle 3D associé permet d'indiquer que le résultat de la recherche comprend un nombre de documents supérieur à un seuil prédéterminé ;
- un septième sous-ensemble comprenant au moins un modèle d'interface dont le modèle de scène virtuelle 3D associé permet d'indiquer que le résultat de la recherche ne comprend aucun document ;
- un huitième sous-ensemble comprenant au moins un modèle d'interface dont le modèle de scène virtuelle 3D associé permet de comparer les résultats d'au moins deux recherches.

Dans un premier mode de réalisation avantageux de l'invention, le système est du type comprenant des moyens de gestion des échanges avec ledit au moins un moteur de recherche à base d'indexation, permettant de transmettre une requête de recherche et recevoir le résultat de la recherche. Selon l'invention, à chaque sélection d'un modèle d'interface suivant, les moyens de gestion des échanges transmettent au moins une requête de recherche spécifique audit modèle d'interface suivant, de façon que la scène virtuelle 3D restituée soit fonction du résultat de ladite au moins une requête de recherche spécifique au modèle d'interface suivant.

Dans un second mode de réalisation avantageux de l'invention, le système est du type comprenant des moyens de gestion des échanges avec ledit au moins un moteur de recherche à base d'indexation, permettant de transmettre une requête de recherche et recevoir le résultat de la recherche. Selon l'invention, le système comprend des moyens de stockage d'au moins certains des résultats de recherches déjà effectuées. A chaque sélection d'un modèle d'interface suivant, les moyens de gestion des échanges : recherchent dans les moyens de stockage le résultat d'au moins une requête de recherche spécifique audit modèle d'interface suivant ; transmettent ladite au moins une requête de recherche spécifique audit modèle d'interface suivant, seulement si le résultat correspondant n'a pas été trouvé dans les moyens de stockage, de façon que la scène virtuelle 3D restituée soit fonction du résultat de ladite au moins une requête de recherche spécifique au modèle d'interface suivant.

Avantageusement, les moyens de stockage d'au moins certains des résultats de recherches déjà effectuées comprennent des moyens de mise en oeuvre d'un mécanisme de cache de requêtes de recherche et résultats de recherches déjà effectuées.

Selon une variante préférentielle, les moyens de stockage d'au moins certains des résultats de recherches déjà effectuées comprennent une base de données intermédiaire.

De façon avantageuse, au moins un des modèles d'interface utilisateur permet à l'utilisateur de modifier le mappage des attributs du résultat d'une recherche aux paramètres du modèle de scène virtuelle 3D lié audit modèle d'interface d'utilisateur.

On rappelle qu'on entend par « attribut du résultat » un « facteur de pertinence » des réponses trouvées.

Dans un mode de réalisation particulier de l'invention, les éléments constitutifs du système sont tous localisés du côté utilisateur.

Selon une variante avantageuse, les éléments constitutifs du système sont localisés du côté de l'utilisateur, à l'exception de certains moyens, dits moyens externalisés, qui sont localisés du côté du moteur de recherche ou dans un équipement intermédiaire entre l'utilisateur et le moteur de recherche. Les moyens externalisés appartiennent au groupe comprenant :
- les moyens de gestion des échanges avec le au moins un moteur de recherche à base d'indexation ;
- les moyens de stockage d'au moins certains des résultats de recherches déjà effectuées ;
- les moyens de gestion d'un ensemble de modèles d'interface ;
- les moyens de sélection d'un modèle d'interface ;
- les moyens de gestion d'une pluralité de méta modèles ;
- les moyens de génération, non inclus les moyens de restitution, d'une interface utilisateur ;
- les moyens de génération, non inclus les moyens de restitution, d'une scène virtuelle 3D ;
- des moyens de gestion des interactions de l'utilisateur avec le système, permettant d'interpréter les interactions et d'activer les moyens appropriés compris dans le système.

Ainsi, de nombreuses architectures peuvent être envisagées (voir description détaillée par la suite, en relation avec les figures), selon le contenu de l'ensemble de moyens externalisés, et selon la répartition de ces moyens externalisés, entre d'une part le côté du moteur de recherche et d'autre part l'équipement intermédiaire.

Avantageusement, les interactions de l'utilisateur avec le système appartiennent au groupe comprenant : des interactions via l'interface utilisateur ; des interactions via des objets de la scène virtuelle 3D.

Préférentiellement, les moyens de génération et restitution d'une scène virtuelle 3D comprennent des moyens permettant de faire varier l'état courant de la scène 3D restituée, en fonction d'au moins une interaction de l'utilisateur avec le système.

Préférentiellement, les modèles d'interface sont écrits au moins en partie dans un langage X-VRML complété, comprenant des balises standard du langage X-VRML et des balises complémentaires. En outre, le système comprend au moins un interpréteur du langage X-VRML complété.

Dans un mode de réalisation particulier de l'invention, les modèles de scène virtuelle 3D et les modèles d'interface sont écrits au moins en partie dans le langage X-VRML complété.

Selon une variante avantageuse, les modèles de scène virtuelle 3D sont écrits au moins en partie dans le langage X-VRML complété, et les modèles d'interface sont écrits au moins en partie dans un langage de type "markup" autre que le langage X-VRML complété (préférentiellement le langage HTML). En outre, chaque modèle d'interface définit un mécanisme de gestion des échanges, par au moins une passerelle inter langage, entre le modèle de scène virtuelle 3D et le modèle d'interface associés audit modèle d'interface.

De façon préférentielle, les méta-modèles sont écrits au moins en partie dans le langage X-VRML complété.

L'invention concerne également un procédé de traitement et de visualisation des résultats de recherches effectuées par au moins un moteur de recherche à base d'indexation. Selon l'invention, ce procédé comprend les étapes suivantes :
- une étape de gestion d'un ensemble de modèles d'interface, chaque interface de modèle étant associé à un modèle d'interface utilisateur et un modèle de scène virtuelle 3D qui sont liés, chaque modèle de scène virtuelle 3D définissant un mappage particulier entre des paramètres dudit modèle de scène virtuelle 3D et des attributs du résultat d'au moins une recherche, l'ensemble de modèles d'interface comprenant un premier sous-ensemble comprenant au moins deux modèles d'interface dont les modèles de scène virtuelle 3D associés sont distincts et permettent chacun de visualiser la totalité du résultat de la au moins une recherche ;
- une étape de sélection d'un modèle d'interface, comprenant une étape de sélection initiale d'un modèle d'interface au sein dudit premier sous-ensemble de modèles d'interface, la sélection initiale étant fonction d'au moins un attribut du résultat de la au moins une recherche et/ou d'au moins une interaction de l'utilisateur avec le système ;
- une étape de génération et restitution d'une interface utilisateur, selon le modèle d'interface utilisateur sélectionné au cours de l'étape de sélection ;
- une étape de génération et restitution d'une scène virtuelle 3D, en fonction du résultat de la au moins une recherche et selon le modèle de scène virtuelle 3D sélectionné au cours de l'étape de sélection, la scène virtuelle 3D restituée permettant à l'utilisateur de visualiser la totalité du résultat de la au moins une recherche.

L'invention concerne aussi un modèle d'interface, écrit au moins en partie dans un langage X-VRML complété, comprenant des balises standard du langage X-VRML et des balises complémentaires propres au système précité, de traitement et de visualisation des résultats de recherches effectuées par au moins un moteur de recherche à base d'indexation.

L'invention concerne encore un méta-modèle, écrit au moins en partie dans un langage X-VRML complété, comprenant des balises standard du langage X-VRML et des balises complémentaires propres au système précité, de traitement et de visualisation des résultats de recherches effectuées par au moins un moteur de recherche à base d' indexation.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique du système selon l'invention ;
- la figure 2 présente un schéma bloc fonctionnel d'un mode de réalisation particulier du système de la figure 1 ;
- la figure 3 présente les éléments d'un modèle d'interface, dans un mode de réalisation particulier de l'invention ;
- la figure 4 présente un schéma simplifié de la structure d'un premier exemple de méta-modèle selon l'invention ;
- les figures 5 à 9 présentent chacune une vue d'écran résultant de l'utilisation d'un modèle d'interface distinct, parmi la pluralité de modèles d'interface sélectionnables par le premier exemple de méta-modèle de la figure 4 ;
- la figure 10 présente un schéma simplifié de la structure d'un second exemple de méta-modèle selon l'invention ;
- les figures 11 et 12 présentent chacune une vue d'écran résultant de l'utilisation d'un modèle d'interface distinct, parmi la pluralité de modèles d'interface sélectionnables par le second exemple de méta-modèle de la figure 10 ;
- la figure 13 présente un schéma simplifié de la structure d'un troisième exemple de méta-modèle selon l'invention ;
- les figures 14 et 15 présentent chacune une vue d'écran résultant de l'utilisation d'un modèle d'interface distinct, parmi la pluralité de modèles d'interface sélectionnables par le troisième exemple de méta-modèle de la figure 13 ;
- les figures 16 à 18 présentent chacune une vue d'écran résultant de l'utilisation d'un modèle d'interface distinct, encore différent de ceux précités ;
- les figures 19 et 20 illustrent un mécanisme particulier de génération d'une scène virtuelle 3D, dans une variante de réalisation de l'invention.

L'invention concerne donc un système et un procédé de visualisation des résultats de recherches effectuées par (au moins) un moteur de recherche à base d'indexation.

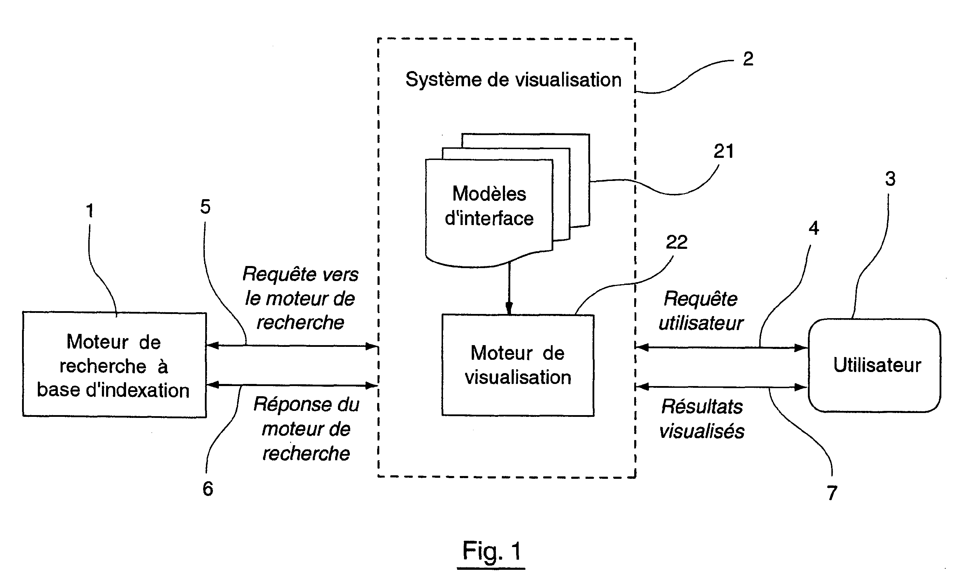

On présente maintenant, en relation avec le synoptique de la **figure 1**, un système de visualisation 2 selon l'invention. Il s'agit d'un système intermédiaire entre un utilisateur 3 cherchant des documents, par exemple sur le réseau Internet (Web), et (au moins) un moteur de recherche à base d'indexation 1 hébergé par un serveur distant, connecté au réseau Internet.

Le système de visualisation 2 comprend un moteur de visualisation 22 et un jeu de modèles d'interface 21. Son but est d'améliorer l'efficacité de la restitution à l'utilisateur 3 des résultats des recherches effectuées par le moteur de recherche à base d'indexation 1. A cet effet, il fournit des outils de visualisation graphique tridimensionnelle des résultats des recherches, ainsi que des outils de manipulation interactive de la visualisation des résultats des recherches, y inclus la possibilité d'affiner les requêtes.

On présente désormais son fonctionnement global. Un utilisateur 3 envoie des « requêtes utilisateur » 4 au système de visualisation 2. Ces dernières sont exprimées par l'utilisateur à l'aide de données textuelles (par exemple des mots-clés) et/ou par des interactions avec des objets graphiques 3D composant une scène virtuelle 3D représentant le résultat d'une recherche. Les « requêtes utilisateur » 4 sont transformées par le système en des requêtes 5 compatibles avec le langage d'interrogation du moteur de recherche à base d'indexation 1 vers lequel elles sont envoyées. En réponse, le moteur de recherche 1 renvoie au système de visualisation 2 des réponses 6 contenant les résultats des recherches. Le système de visualisation 2 utilise des modèles d'interface pour générer automatiquement, d'une part, des scènes virtuelles tridimensionnelles 7, constituant une visualisation des résultats de recherches et, d'autre part, des interfaces utilisateur nécessaires.

Le système de visualisation 2 de l'invention offre de nombreuses fonctionnalités et présente de multiples avantages, notamment :
- il permet d'obtenir une vue globale de l'ensemble du résultat classifié, au lieu de quelques documents prétendument les plus pertinents. Un utilisateur peut visualiser le même résultat de recherche de plusieurs façons, de façon à comprendre la nature des informations obtenues. Puis, de façon interactive, l'utilisateur peut affiner sa requête et demander une visualisation la mieux adaptée (par l'application d'un modèle d'interface approprié), en vue de trouver les documents demandés ;
- il est construit au-dessus d'un moteur de recherche à base d'indexation qui, contrairement au cas des répertoires, permet de gérer des résultats de recherches comprenant un nombre très élevé de réponses (adresses URL de documents).
   Ainsi, les capacités de recherche sont beaucoup plus élevées ;
- il permet une visualisation de la pertinence des réponses dans plusieurs dimensions. Chaque document trouvé (réponse) peut en effet être rangé, dans une scène virtuelle 3D, en utilisant plusieurs critères. Plus précisément, dans une scène virtuelle 3D, chaque réponse peut être représentée par un jeu de paramètres du modèle de scène virtuelle 3D, où chaque paramètre de scène est mappé (c'est-à-dire associé) à un des attributs (aussi appelé « facteur de pertinence ») du résultat de la recherche ;
- il permet de visualiser les résultats de recherches comparatives. En utilisant des modèles d'interface particuliers, un utilisateur peut comparer des résultats de recherches correspondant à deux (ou plus) requêtes différentes ;
- il offre à l'utilisateur la possibilité de modifier librement le mappage des attributs du résultat d'une recherche avec les paramètres du modèle de scène virtuelle 3D. Ainsi, l'utilisateur peut aisément influencer la visualisation afin que les attributs de résultat qui lui paraissent essentielles soient présentés de façon proéminente ;
- il permet de présenter les résultats de recherches avec plusieurs niveaux d'abstraction (c'est-à-dire plusieurs niveaux de détail). Par exemple, dans une première étape, les résultats de recherche sont présentés groupés par langues, puis, dans une seconde étape, ils sont présentés par sites et, finalement, dans une troisième étape, l'utilisateur peut voir des documents (adresses URL) seuls ;
- il permet à l'utilisateur, en fonction du modèle d'interface choisi, de sélectionner un groupe d'adresses URL, de sites, etc. qui l'intéresse, pour travailler ensuite avec ;
- il permet à l'utilisateur de percevoir immédiatement certaines tendances dans les résultats de recherche. Par exemple, il peut se rendre compte que tous les documents trouvés soient dans le même domaine, ou détecter tous les documents qui ont une taille supérieure à une taille déterminée, etc. ;
- il permet à l'utilisateur de passer d'un modèle d'interface à un autre, de façon à visualiser différents aspects d'un même résultat de recherche.

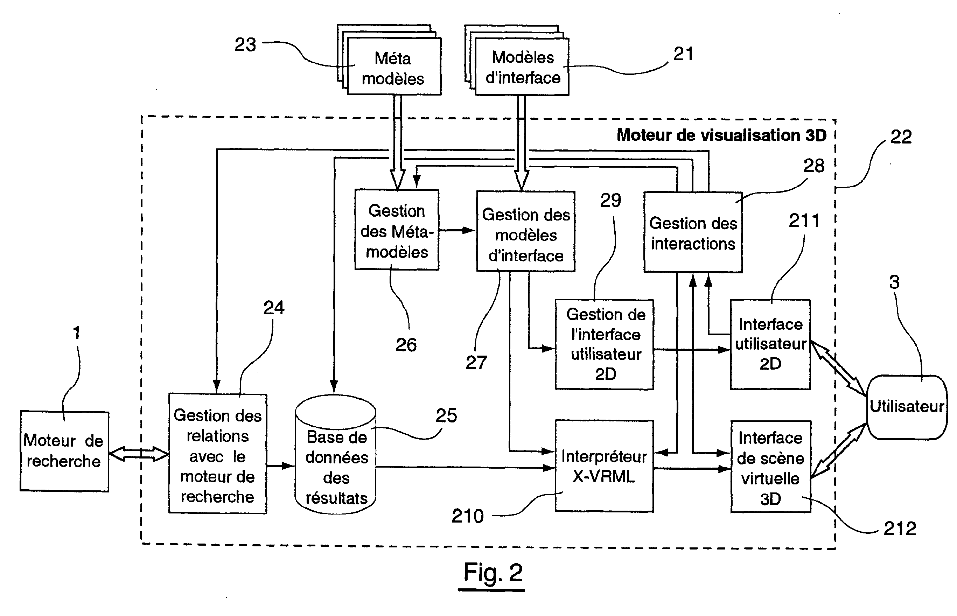

On présente maintenant, avec le schéma bloc fonctionnel de la **figure 2**, un mode de réalisation particulier du système de visualisation de la figure 1. Dans ce mode de réalisation, le système de visualisation comprend :
- un module 28 de gestion des interactions de l'utilisateur 3 avec le système ;
- un module 211 de restitution de l'interface utilisateur 2D ;
- un module 29 de gestion de l'interface utilisateur 2D ;
- un module 212 de restitution de l'interface de scène virtuelle 3D ;
- un interpréteur X-VRML 210 ;
- un jeu de méta-modèles 23 ;
- un module 26 de gestion des méta-modèles ;
- un jeu de modèles d'interface 21 ;
- un module 27 de gestion des modèles d'interface ;
- une base de données intermédiaire 25 de stockage des résultats de recherche ;
- un module 24 de gestion des relations avec le moteur de recherche 1.

Le module 28 de gestion des interactions a pour rôle d'interpréter les interactions de l'utilisateur et d'activer les modules (ou autres éléments) appropriés du système.

L'utilisateur dispose de deux interfaces d'entrée : l'interface utilisateur 2D et l'interface 3D (cette dernière faisant partie de l'interface de scène virtuelle 3D).

L'interface utilisateur 2D permet à l'utilisateur de formuler des requêtes, affiner des requêtes, modifier le mappage des attributs de résultat de recherche avec les paramètres des modèles de scène virtuelle 3D, et sélectionner des modèles d'interface.

L' interface de scène virtuelle 3D visualise un résultat de recherche sous la forme d'une scène virtuelle 3D (générée selon un modèle de scène virtuelle 3D sélectionné), et permet à l'utilisateur de naviguer au sein du résultat de la recherche.

Les scènes 3D sont générées par l'interpréteur X-VRML, qui reçoit en entrée un résultat de recherche stocké dans la base de données intermédiaire 25 et un modèle d'interface 21 fourni par le module 27 de gestion des modèles d'interface.

L'interpréteur X-VRML 210 permet d'interpréter un langage X-VRML complété, selon l'invention, par des balises (tags) complémentaires discutées en détail par la suite. On rappelle que le langage X-VRML est défini dans la demande de brevet EP 1 004 987, publiée le 31 mai 2000 et dont le texte est inséré ici par référence. Le langage X-VRML est lui-même une extension du langage standard VRML (« Virtual Reality Modelling Language »), ce dernier permettant de construire des mondes virtuels.

Les interfaces utilisateur 2D et les scènes virtuelles 3D ne sont pas figées, mais générées de façon dynamique par le module 29 de gestion de l'interface utilisateur 2D, sur la base des modèles d'interface sélectionnés. Quand l'utilisateur demande un changement de modèle d'interface, le module 28 de gestion des interactions demande au module 26 de gestion des méta-modèles de traiter le méta-modèle concerné. Après qu'un modèle d'interface approprié a été sélectionné, le module 26 de gestion des méta-modèles demande au module 27 de gestion des modèles d'interface de fournir :
- le modèle d'interface utilisateur 2D sélectionné au module 29 de gestion de l'interface utilisateur 2D, afin qu'une nouvelle interface utilisateur 2D soit générée par ce module 29 puis restituée par le module 211 de restitution de l'interface utilisateur 2D ;
- le modèle de scène virtuelle 3D sélectionné à l'interpréteur X-VRML 210, afin qu'une nouvelle scène virtuelle 3D soit générée par cet interpréteur 210 puis restituée par le module 212 de restitution de l'interface de scène virtuelle 3D.

Une requête utilisateur (référencée 4 sur la figure 1), soumise via l'interface utilisateur 2D, est transmise par le module 28 de gestion des interactions au module 24 de gestion des relations avec le moteur de recherche 1. Ce dernier 24 transforme la requête utilisateur 4 en une ou plusieurs nouvelles requêtes (référencées 5 sur la figure 1) qu'il transmet au moteur de recherche. Ces nouvelles requêtes 5 sont exprimées dans le langage, par exemple SQL, utilisé par le moteur de recherche 1. Puis, le module 24 de gestion des relations avec le moteur de recherche 1 reçoit et stocke le résultat de la recherche dans la base de données intermédiaire 25. Le module 24 de gestion possède par exemple un accès direct à la base de données du moteur de recherche 1 (à ne pas confondre avec la base de données intermédiaire 25 du système selon l'invention), par utilisation d'interfaces de base de données standard (JDBC, ODBC, ...).

Le module 24 de gestion des relations avec le moteur de recherche 1 peut être équipé de plusieurs interfaces, de façon à pouvoir coopérer avec différents moteurs de recherche. Ainsi, il est possible de mettre en oeuvre un moteur de méta-recherche.

La base de données intermédiaire 25 permet de stocker le résultat de recherche d'une requête. Elle peut être mise en oeuvre sous la forme d'une base de données persistante habituelle ou d'une mémoire tampon volatile en mémoire principale. Les opérations telles que l'affinage de requête ou la modification du modèle d'interface peuvent ne nécessiter un accès qu'à la base de données intermédiaire 25 (sous réserve que les nouvelles informations demandées s'y trouvent), et non pas au moteur de recherche 1. De cette façon, le nombre d'accès au moteur de recherche 1 est réduit de façon significative, ce qui se traduit par une réduction des temps de réponse du système de visualisation.

Dans une variante de l'invention, la base de données intermédiaire 25 est remplacée ou combinée avec un mécanisme de cache de requêtes déjà effectuées et des résultats de recherche correspondants.

Les méta-modèles sont des programmes utilisés par le système de visualisation pour décider quel modèle d'interface suivant doit être chargé, après que le système a reçu une demande de changement de modèle d'interface. Une telle demande contient un identifiant de l'un des méta-modèles. L'exécution de ce méta-modèle permet de fixer la valeur d'une variable prédéterminée (par exemple « next_model »), cette valeur étant une adresse URL du modèle d'interface suivant à charger par le système de visualisation.

Les méta-modèles sont par exemple écrits dans le langage X-VRML complété (voir discussion ci-dessus). Ils permettent de coder une logique définissant des changements de modèle d'interface au sein d'un groupe prédéterminé de modèles d'interface. Cette logique utilise des mécanismes de routes, statiques ou dynamiques, entre les modèles d'interface.

Dans le cas du mécanisme de routes statiques (voir **annexe 1**, premier exemple), le modèle d'interface suivant dépend généralement d'une valeur de variable passée à partir du modèle d'interface précédent (c'est-à-dire passée avec la demande d'exécution du méta-modèle). Les routes statiques sont donc figées dans le méta-modèle.

Dans le cas du mécanisme de routes dynamiques (voir **annexe 1,** second exemple), le méta-modèle utilise des calculs algorithmiques, des accès à des bases de données et des variables d'entrée pour décider quel modèle d'interface suivant doit être chargé. Cette approche permet de sélectionner le modèle d'interface reflétant le mieux les propriétés d'un résultat de recherche. Dans le processus décisionnel, les attributs du résultat de la recherche, tels que le nombre de réponses trouvées, le niveau de détail, le nombre de catégories, etc., sont analysés.

Les paramètres d'entrée pour un méta-modèle peuvent être fournis de plusieurs façons :
- comme un attribut de l'action de changement de modèle d'interface (« changeModel action ») (voir description ci-après) ;
- comme une valeur d'une variable stockée par l'une des balises complémentaires <STORE> et <STORE_OBJECT>, permettant d'affecter une valeur donnée ou un objet donné, respectivement, à une variable de session donnée (voir description ci-après) ;
- comme une valeur de bouton de l'interface utilisateur 2D.

Un méta-modèle peut passer des variables au modèle d'interface suivant à charger, en utilisant les balises complémentaires <STORE> et <STORE_OBJECT>. En particulier, un méta-modèle qui retrouve des données dans une base de données en utilisant la balise complémentaire d'interrogation <SM_QUERY> (voir description ci-après), peut délivrer un résultat de recherche au modèle d'interface en utilisant la balise complémentaire <STORE_OBJECT>, avec l'attribut VARNAME de la balise pointant sur la variable contenant le résultat de la recherche. Ce résultat de recherche est ensuite réutilisé par l'utilisation de la balise complémentaire d'itération <SM_ITERATE> (voir description ci-après).

On présente maintenant successivement plusieurs architectures possibles du système de visualisation selon l'invention, à deux niveaux (moteur de recherche et équipement utilisateur) ou trois niveaux (moteur de recherche, équipement intermédiaire et équipement utilisateur). Il est clair cependant qu'il ne s'agit pas d'une liste exhaustive et d'autres architectures non discutées ci-après peuvent bien sûr être mise en oeuvre sans sortir du cadre de la présente invention.

Dans une première architecture à deux niveaux, tous les éléments du système de visualisation 2 sont localisés du côté client. Dans ce cas, le module 24 de gestion des relations avec le moteur de recherche 1 utilise par exemple le protocole HTTP, JDBC ou ODBC. L'équipement (ordinateur) dont dispose l'utilisateur intègre l'ensemble du système de visualisation selon l'invention. La base de données intermédiaire 25 peut être implémentée directement dans la mémoire principale de l'ordinateur de l'utilisateur. Seul le moteur de recherche à base d'indexation 1 se trouve du côté du serveur distant.

Les avantages principaux de cette première architecture à deux niveaux sont : la possibilité de passer aisément d'un moteur de recherche à un autre, si le système de visualisation est équipé de plusieurs interfaces avec des moteurs de recherche différents ; l'amélioration de l'efficacité des traitements (découlant d'interactions de l'utilisateur) qui ne nécessitent pas un accès au moteur de recherche.

Ses principaux inconvénients sont : la lenteur des échanges de données entre le système de visualisation et le moteur de recherche ; la capacité limitée de la base de données intermédiaire 25 implémentée dans la mémoire principale de l'ordinateur de l'utilisateur.

Une seconde architecture à deux niveaux se distingue de la première discutée ci-dessus en ce que le module 24 de gestion des relations avec le moteur de recherche 1, ainsi que la base de données intermédiaire 25 sont localisés du côté du serveur hébergeant le moteur de recherche 1. Ainsi, le moteur de recherche 1 est étroitement lié au module 24 qui assure la gestion des relations avec lui. En outre, ce module 24, le moteur de recherche 1 et la base de données intermédiaire 25 peuvent être implémentés dans un même système de gestion de base de données. Dans ce cas, ce module 24 peut être implémenté sous la forme de procédures stockées, écrites dans un langage utilisé par le système de gestion de base de données (par exemple PL/SQL ou Java). Une telle solution améliore les temps d'exécution.

Les avantages principaux de cette seconde architecture à deux niveaux sont : vitesse et efficacité de traitement des requêtes ; plus gros résultats de recherche stockés et restitués par la base de données intermédiaire 25 ; logiciel client plus léger.

Ses principaux inconvénients sont : complexité plus grande du module 24 de gestion des relations avec le moteur de recherche 1, et de la base de données du moteur de recherche 1 ; nécessité d'obtenir l'accord du propriétaire du moteur de recherche pour installer les éléments du serveur de visualisation déportés sur son serveur.

Par rapport aux architectures à deux niveaux discutés ci-dessus, les architectures distribuées à trois niveaux offrent une plus grande flexibilité du système et permettent un meilleur équilibrage de charge entre les niveaux.

Dans une première architecture à trois niveaux :
- le moteur de recherche 1 est localisé sur un serveur distant ;
- le module 24 de gestion des relations avec le moteur de recherche 1, ainsi que la base de données intermédiaire 25 sont localisés sur un équipement intermédiaire ;
- tous les autres éléments du système de visualisation 2 sont localisés sur l'équipement client.

Le fait que le moteur de recherche, qui est localisé sur le serveur distant, soit séparé du système de visualisation, qui lui est réparti entre l'équipement intermédiaire et l'équipement client, fournit une flexibilité élevée de communication avec un ou plusieurs moteurs de recherche gérés par des opérateurs indépendants. La localisation sur l'équipement intermédiaire de certains éléments 24, 25 permet de réduire le poids du logiciel client, donne la possibilité de travailler avec des résultats de recherche plus grands, et fournit une opportunité de gestion de l'équipement intermédiaire par une société distincte de celle gérant le moteur de recherche.

Une seconde architecture à trois niveaux se distingue de la première discutée ci-dessus en ce que les éléments suivants du système de visualisation 2 sont également localisés sur l'équipement intermédiaire :
- le jeu de méta-modèles 23 ;
- le module 26 de gestion des méta-modèles ;
- le jeu de modèles d'interface 21 ;
- le module 27 de gestion des modèles d'interface.

Une troisième architecture à trois niveaux se distingue de la seconde discutée ci-dessus en ce que les éléments suivants du système de visualisation 2 sont également localisés sur l'équipement intermédiaire :
- le module 29 de gestion de l'interface utilisateur 2D ;
- l'interpréteur X-VRML 210.

Une quatrième architecture à trois niveaux se distingue de la troisième discutée ci-dessus en ce que le module 28 de gestion des interactions de l'utilisateur est également localisé sur l'équipement intermédiaire. Dans ce cas, le logiciel client est très léger.

Les inconvénients des seconde, troisième et quatrième architectures sont : moindre efficacité d'exécution des interactions de l'utilisateur et nécessité d'un rafraîchissement de page fréquent, tant pour les scènes virtuelles 3D que pour les interfaces utilisateur 2D.

Une cinquième architecture à trois niveaux se distingue de la quatrième discutée ci-dessus en ce que le module 24 de gestion des relations avec le moteur de recherche 1, ainsi que la base de données intermédiaire 25 sont localisés du côté du moteur de recherche, et non plus sur l'équipement intermédiaire.

Les avantages principaux de cette cinquième architecture à trois niveaux sont :
- possibilité d'implémenter efficacement les éléments du serveur distant dans un système de gestion de base de données ;
- possibilité de gestion de l'équipement intermédiaire par une société distincte de celle gérant le moteur de recherche ;
- légèreté du logiciel client.

Le principal inconvénient est la nécessité d'obtenir l'accord du propriétaire du moteur de recherche pour installer les éléments du serveur de visualisation déportés sur son serveur.

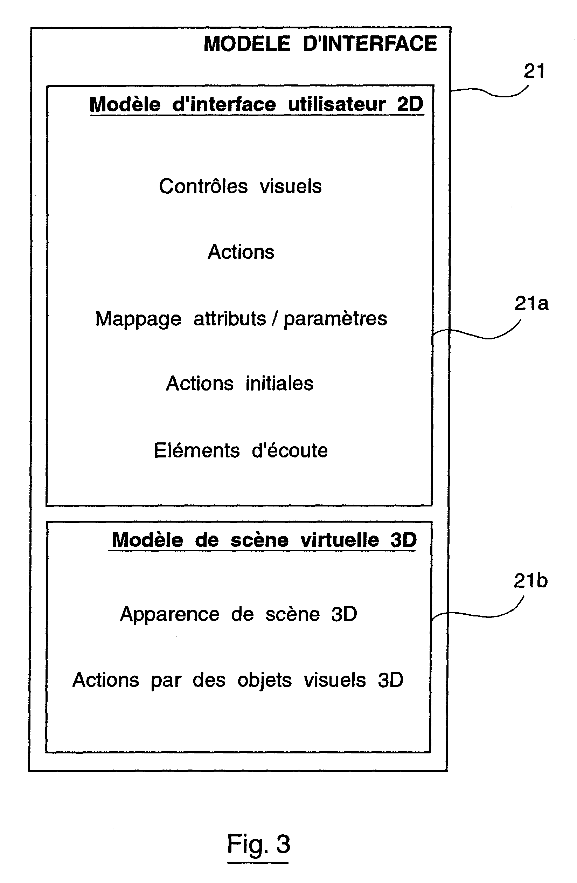

On présente désormais, en relation avec la **figure 3,** les éléments d'un modèle d'interface 21, dans un mode de réalisation particulier de l'invention.

Dans ce mode de réalisation particulier, le modèle d'interface 21 comprend deux parties qui sont liées, à savoir :
- un modèle d'interface utilisateur 2D, référencé 21a, qui est une abstraction d'interfaces utilisateur 2D. Il définit les éléments suivants : des contrôles visuels, des actions, un mappage attributs de résultat de recherche / paramètres de scène 3D, des actions initiales et des éléments d'écoute (« listeners ») ;
- un modèle de scène virtuelle 3D, référencé 21b, qui est une abstraction de scènes virtuelle 3D. Il définit les éléments suivants : l'apparence de scènes virtuelles 3D et des actions par des objets virtuels 3D.

La définition DTD du modèle d'interface 21 est par exemple la suivante :

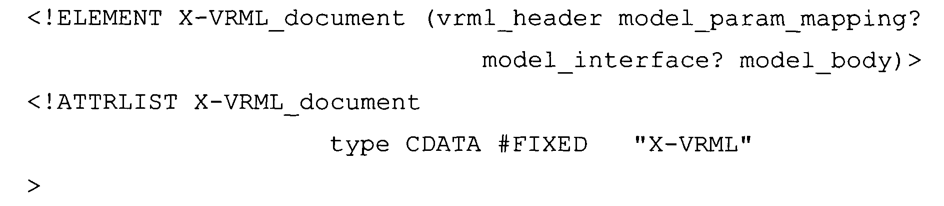

Dans cet exemple, le modèle d'interface comprend :
- une balise complémentaire <model_param_mapping>, contenant une déclaration de mappage entre des attributs de résultat de recherche et des paramètres de scène 3D ;
- une balise complémentaire <model_interface>, définissant un modèle d'interface utilisateur 2D ;
- une balise complémentaire <model_body>, définissant un modèle de scène virtuelle 3D.

On trouvera en **annexe 2** une description détaillée des balises complémentaires (nouveaux tags) permettant de définir, au sein des balises complémentaires <model_interface> et <model_param_mapping>, différents modèles d'interface utilisateur 2D, y inclus le mappage entre les attributs du résultat d'une recherche et les paramètres d'une scène virtuelle 3D.

Il convient de noter que la balise complémentaire <listeners>, décrite en annexe 2, peut également être utilisée pour définir des modèles de scène virtuelle 3D, même si (dans un seul souci de simplification) elle n'est pas décrite à nouveau en annexe 3.

La section « modèle de scène virtuelle 3D » du modèle d'interface est définie dans la balise complémentaire <model_body>. Le contenu de cette balise complémentaire est un programme écrit dans le langage X-VRML complété (voir discussion ci-dessus). En d'autres termes, hormis pour les balises complémentaires (propres à la présente invention), la définition DTD de cette balise complémentaire <model_body> est définie par la définition DTD du langage X-VRML.

Le modèle de scène virtuelle 3D, fourni avec un jeu de variables initiales, est analysé (« parsé ») par l'interpréteur X-VRML pendant l'action de traitement du modèle d'interface courant (action « processCurrentModel3D » discutée ci-après). Les sources des variables initiales sont les suivantes : les commandes d'interface utilisateur 2D, les variables stockées et les paramètres d'action.

On trouvera en **annexe 3** une description détaillée des balises complémentaires (nouveaux tags propres à l'invention) pouvant être utilisées, seules et/ou avec des balises standard du langage X-VRML, pour définir différents modèles de scène virtuelle 3D.

Il convient de noter que la balise complémentaire <listener_action>, décrite en annexe 3, peut également être utilisée pour définir des modèles d'interface utilisateur, même si (dans un seul souci de simplification) elle n'est pas décrite aussi en annexe 2.

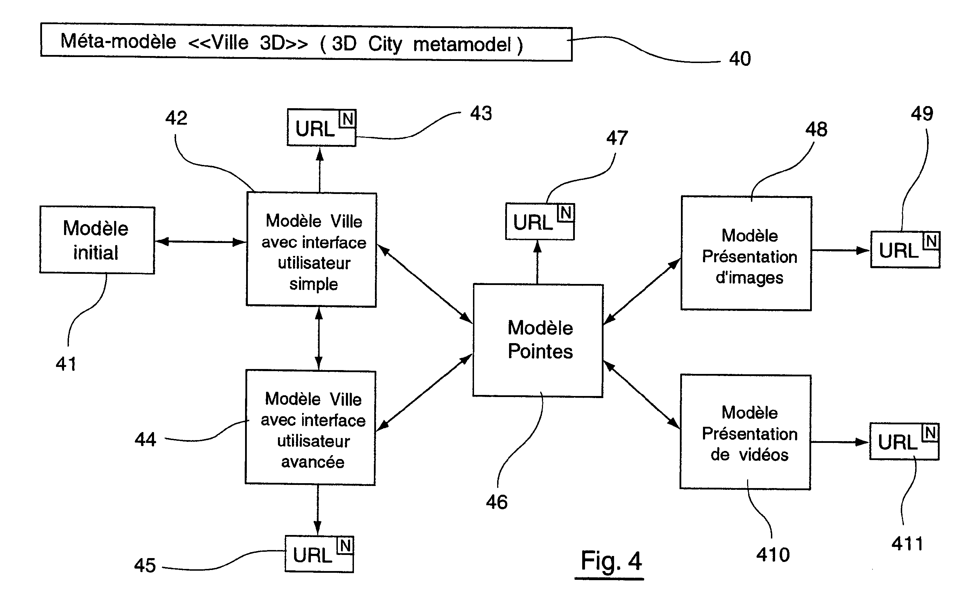

On présente maintenant, en relation avec les figures 4 à 9, un premier exemple de méta-modèle selon l'invention. Le code « X-VRML complété » de ce méta-modèle se trouve en **annexe 5.**

Comme illustré sur la **figure 4**, ce premier exemple de méta-modèle 40 permet de changer de modèle d'interface, au sein d'une pluralité de modèles d'interface comprenant :
- un modèle initial 41 ;
- un modèle d'interface 42 associé à un modèle de scène virtuelle 3D permettant de restituer une scène de type « Ville », et à un modèle d'interface utilisateur 2D permettant de restituer une interface utilisateur de type « simple ». Ce modèle est appelé ci-après « modèle Ville avec interface utilisateur simple » ;
- un modèle d'interface 43 associé à un modèle de scène virtuelle 3D permettant de restituer une scène de type « Ville », et à un modèle d'interface utilisateur 2D permettant de restituer une interface utilisateur de type « avancée ». Ce modèle est appelé ci-après « modèle Ville avec interface utilisateur avancée » ;
- un modèle d'interface 46 associé à un modèle de scène virtuelle 3D permettant de restituer une scène de type « Pointes ». Ce modèle est appelé ci-après « modèle Pointes » ;
- un modèle d'interface 48 associé à un modèle de scène virtuelle 3D permettant de présenter une ou plusieurs images. Ce modèle est appelé ci-après « modèle présentation d'images » ;
- un modèle d'interface 410 associé à un modèle de scène virtuelle 3D permettant de présenter une ou plusieurs vidéos. Ce modèle est appelé ci-après « modèle présentation de vidéos ».

Le modèle initial 41 est utilisé par le système de visualisation comme un point de départ de la recherche. Il est chargé à l'initialisation du système. Grâce à ce modèle initial, l'utilisateur peut formuler une requête et effectuer une sélection initiale d'un modèle d'interface, en fonction du type de scène virtuelle 3D qu'il souhaite que le système de visualisation applique pour représenter la totalité du résultat de la recherche.

Dans une variante de réalisation de l'invention, c'est le système de visualisation qui, de façon automatique, effectuer cette sélection initiale d'un modèle d'interface. On peut même prévoir un autre mode de réalisation, dans lequel l'utilisateur et le système de visualisation interviennent tous les deux dans cette sélection initiale.

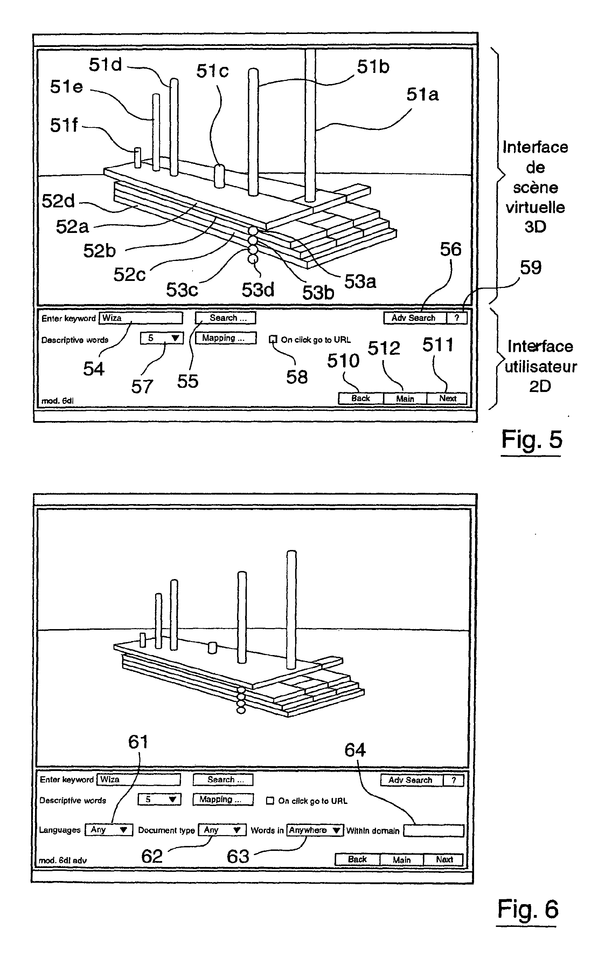

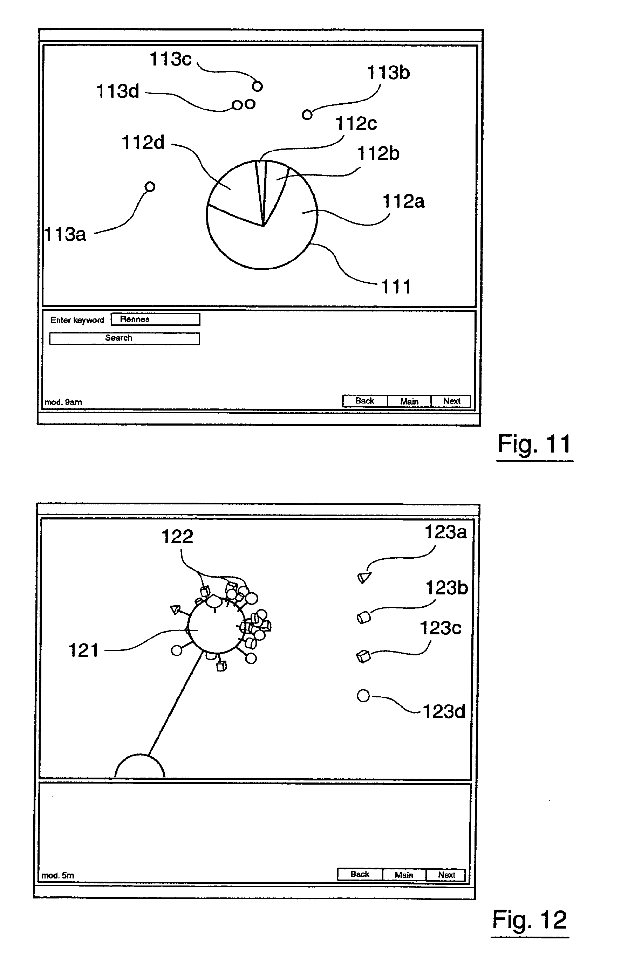

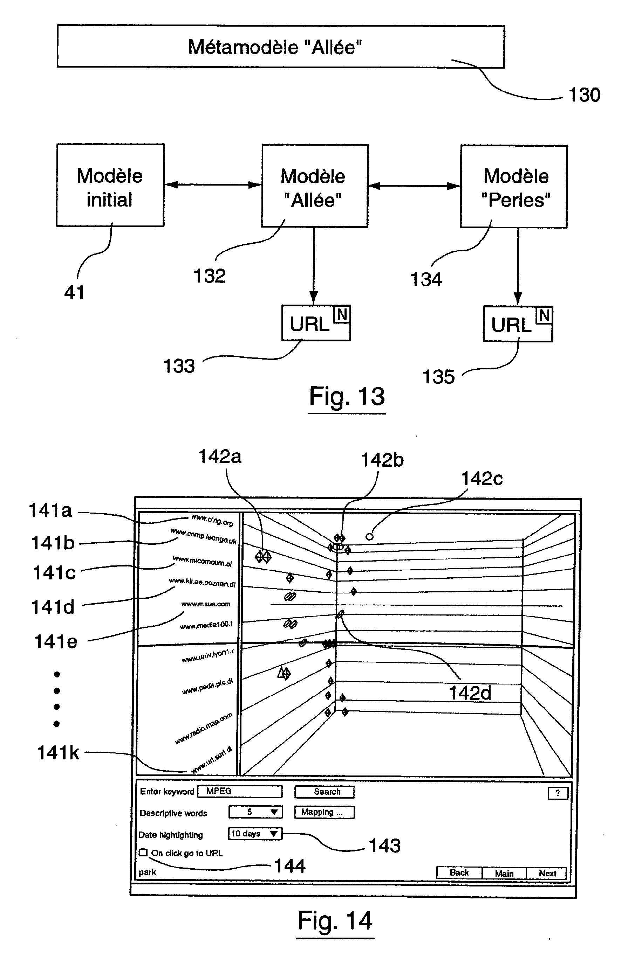

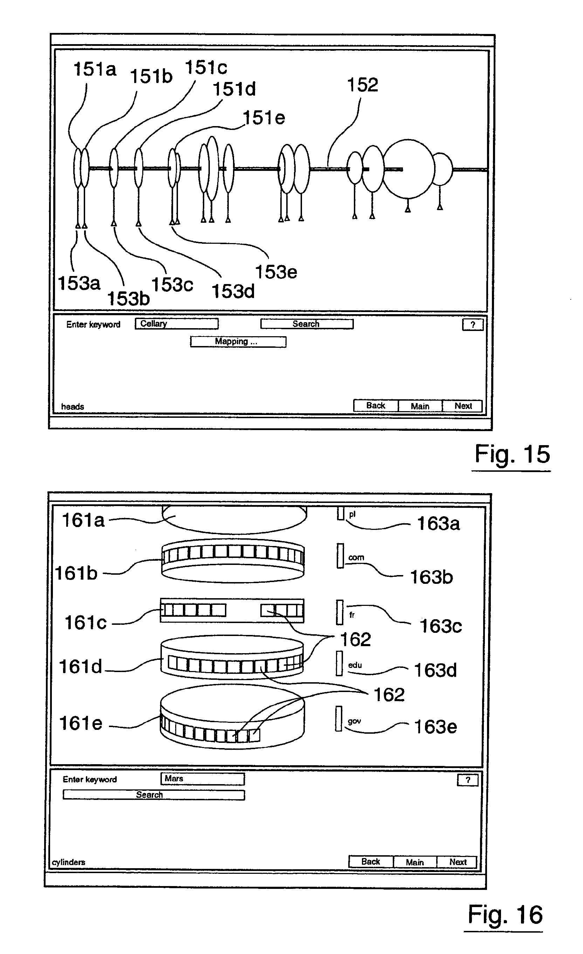

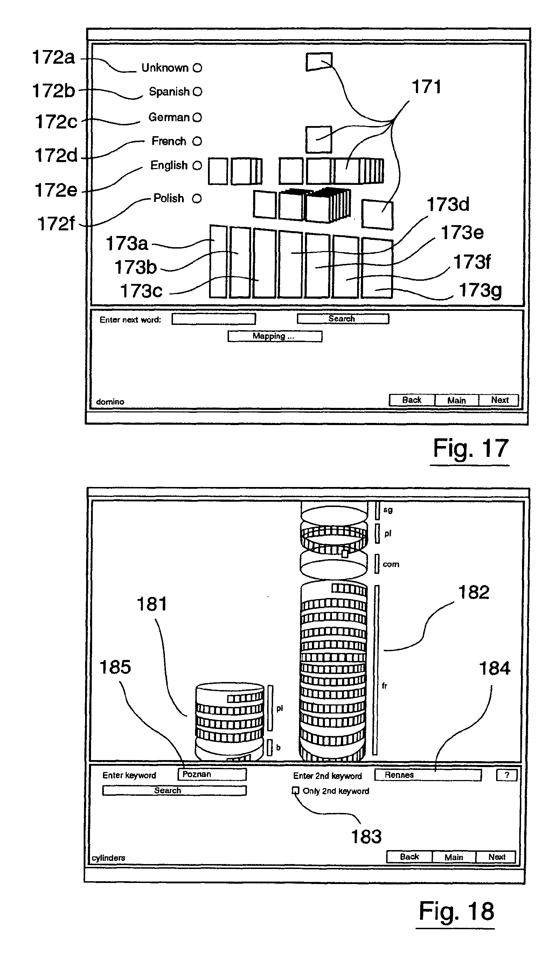

Qu'elle soit effectuée par l'utilisateur et/ou automatiquement par le système de visualisation, la sélection initiale se fait exemple parmi les modèles d'interface suivants (dont les modèles de scène 3D associés permettent chacun de visualiser, de façon globale, l'ensemble du résultat de la recherche) :
- le « modèle Ville avec interface utilisateur simple » (cf. figure 5) ;
- le « modèle Sphères » (cf. figure 11) ;
- le « modèle Allée » (cf. figure 14) ;
- le « modèle Cylindre » (cf. figure 16) ;
- le « modèle Dominos » (cf. figure 17) ;
- le « modèle Comparaison » (cf. figure 18).

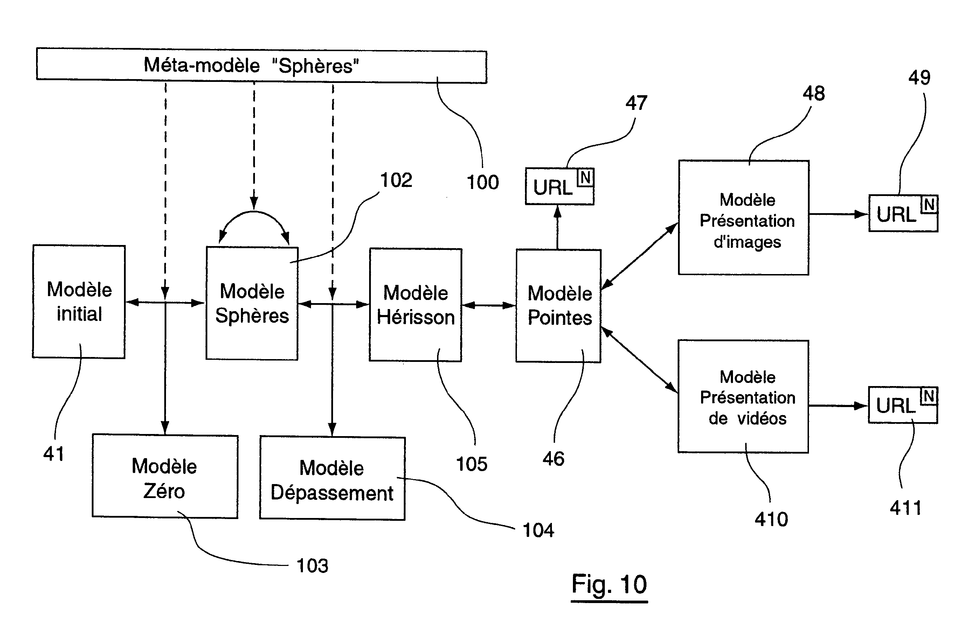

On notera que le modèle initial 41, en tant que point de départ de la recherche, est, dans le mode de réalisation particulier décrit, commun à la pluralité de méta-modèles (voir notamment les figures 10 et 13 discutées ci-après).

On revient maintenant à la description du premier exemple de méta-modèle 40 illustré sur la figure 4. Toutes les routes entre les modèles d'interface sont de type statique. On suppose ici qu'à partir du modèle d'interface initial 41, l'utilisateur passe au « modèle Ville avec interface utilisateur simple » 42. A partir de ce modèle 42, l'utilisateur peut passer au « modèle Ville (City) avec interface utilisateur avancée » 45, au « modèle Pointes (Spikes) » 46, ou encore ouvrir le navigateur Web sur une adresse URL sélectionnée 43. A partir du « modèle Pointes (Spikes) » 46, l'utilisateur peut passer au « modèle présentation d'images » 48, au « modèle présentation de vidéos » 410, ou encore ouvrir le navigateur Web sur une adresse URL sélectionnée 47.

La **figure 5** présente une vue d'écran résultant de l'utilisation du « modèle Ville avec interface utilisateur simple » 42. La partie haute de cet écran représente l'interface de scène virtuelle 3D (aussi appelée simplement « scène virtuelle 3D ») restituée par le système de visualisation. La partie basse de l'écran représente l'interface utilisateur 2D également restituée par le système de visualisation. Ce découpage (partie haute, partie basse) est valable pour toutes les vues d'écrans décrites ci-après, en relation avec les figures 6 à 9, 11, 12, et 14 à 18.

Le modèle de scène virtuelle 3D associé au « modèle Ville avec interface utilisateur simple » 42 permet de visualiser de façon globale le résultat d'une recherche. Il est adapté à la visualisation d'un résultat de recherche comprenant de 1 à 100 sites Web, avec 10 à 20 pages en adéquation avec la requête sur chaque site. Il permet la représentation des attributs du résultat de la recherche suivants : adresse, site, domaine, taille de document, langue, occurrence de mot, mots fréquents, séquence de mot, etc.

Le résultat de la recherche est représenté sous la forme d'un paysage urbain, dans lequel chaque bâtiment 51a à 51f représente une adresse URL d'une page en adéquation avec une requête utilisateur. Les bâtiments sont situés dans des quartiers (« districts »). Les quartiers parallèles à l'axe Z représentent les sites, tandis que ceux parallèles à l'axe X représentent des mots descriptifs : mots fréquents ou séquences de mots. Chaque quartier peut être mis en évidence pour une navigation plus aisée. La hauteur d'un bâtiment symbolise la taille du document qu'il représente. La couleur de la façade d'un bâtiment peut représenter la langue du document qu'il représente, ou un emplacement où les termes de la recherche ont été trouvés : titre du document, ses mots-clés, mots fréquents, description ou corps du document. La signification de l'axe Z et de la couleur d'un bâtiment dépendent du mappage attributs de résultat de recherche / paramètre de scène 3D. Un utilisateur peut modifier ce mappage en appuyant sur un « bouton de mappage » pour ouvrir une fenêtre de mappage. Par défaut le mappage est le suivant : l'axe Z représente les mots fréquents et la couleur d'un bâtiment représente une occurrence de mot.

Sous le paysage urbain, des niveaux de domaine 52a à 52d sont visualisés : les domaines racines à la base, et des sous-domaines consécutifs aux niveaux supérieurs successifs. Chaque niveau de domaine peut être rendu apparent ou non en utilisant une sphère 53a à 53d située à proximité et prenant la couleur verte ou rouge selon le choix de l'utilisateur. Ceci est particulièrement utile quand l'utilisateur utilise une vue d'avion, puisqu'il peut ainsi savoir quels documents appartiennent à quel domaine particulier.

Le modèle d'interface utilisateur associé au « modèle Ville avec interface utilisateur simple » 42 comprend un champ d'entrée de requête 54 et un bouton de recherche 55 qui lance le processus de recherche. Un bouton « recherche avancée » 56 permet de passer au « modèle Ville avec interface utilisateur avancée » 44 (voir description ci-après). En utilisant le menu de mots descriptifs 57, un utilisateur peut sélectionner combien de mots ou séquences de mots doivent être visualisés : par exemple 5, 10, 15 ou 20. En fonction de l'état d'une boîte de dialogue « en cliquant passer à l'adresse URL » 58, un clic sur un bâtiment provoque le passage au document sélectionné (si la boîte de dialogue est cochée) ou le passage au « modèle Pointes » 46 (si la boîte de dialogue n'est pas cochée). Dans le premier cas, une nouvelle fenêtre du navigateur Web est ouverte. Par ailleurs, l'interface utilisateur 2D comporte des boutons spéciaux de navigation. Un bouton « d'interrogation » 59 dirige l'utilisateur vers un modèle d'interface statique, décrivant la signification des différentes parties de la scène. A tout moment, le modèle statique reflète les sélections courantes du mappage précité. Un bouton « précédent » 510 permet de revenir au modèle d'interface précédent. Un bouton « suivant » 511 permet de passer au modèle d'interface suivant. Un bouton « principal » 512 permet de revenir au menu initial. La signification des boutons de navigation est la même dans tous les modèles d'interface.

La **figure 6** présente une vue d'écran résultant de l'utilisation du « modèle Ville avec interface utilisateur avancée » 44. Ce dernier diffère du « modèle Ville avec interface utilisateur simple » 42 uniquement pour la partie interface utilisateur 2D. Le modèle d'interface utilisateur avancée permet à l'utilisateur d'utiliser des opérateurs booléens dans la requête. Une requête peut également être formulée plus précisément, avec des contraintes supplémentaires pouvant être spécifiées dans les éléments suivants de l'interface utilisateur 2D : un menu « langue » 61 permettant de spécifier la langue des documents recherchés ; un menu « type de document » 62 permettant de spécifier le type du contenu des documents recherchés (par exemple HTML ou texte) ; un menu « localisation des mots » 63 permettant de spécifier où les termes recherchés doivent être localisés dans le document (par exemple mots-clés, titre ou description) ; un champ de texte « domaine concerné » 64 permettant de spécifier un domaine où les documents recherchés doivent être localisés (par exemple « edu » ou « francetelecom.fr »).

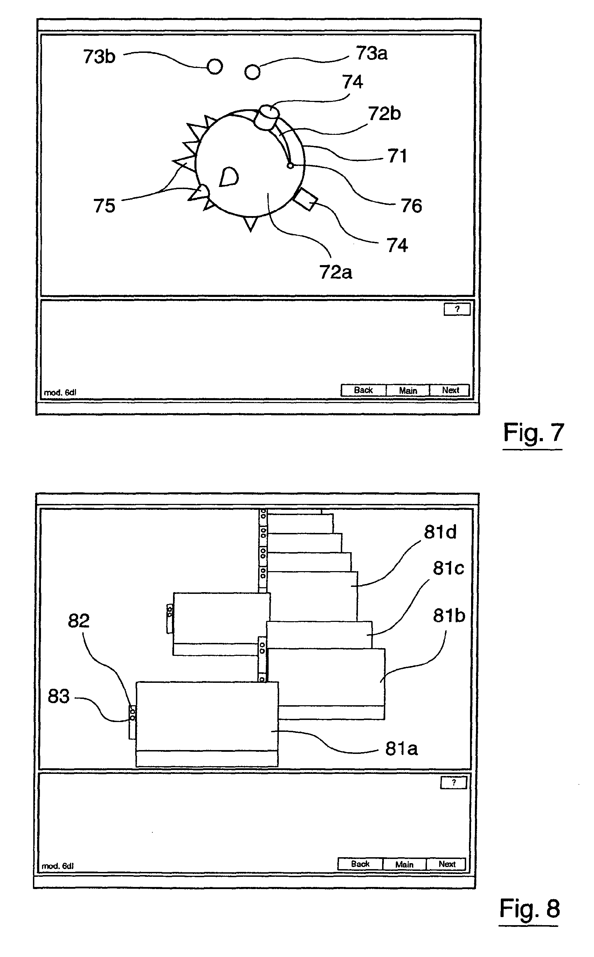

La **figure 7** présente une vue d'écran résultant de l'utilisation du « modèle Pointes » 46. Il est conçu pour visualiser une unique adresse URL de document (c'est-à-dire une réponse particulière) et est adapté pour des documents comprenant jusqu' à cent éléments connectés (liens, images, vidéos, etc.). Il permet de visualiser les attributs de résultat de recherche suivants : liens et images de sortie, types de contenu, distance par rapport au site courant, langue, taille, etc.

Une unique adresse URL est représentée par une sphère multicolore 71. Chaque section 72a, 72b de la sphère possède une couleur spécifique et représente un type de contenu particulier. Le nom du type de contenu est présenté dans un texte situé à proximité d'une petite sphère satellite 73a, 73b de la même couleur. Les éléments apparentés - images ou liens - sont représentés sous la forme de cylindres 74 (si l'élément est localisé sur le même site que le document visualisé) ou de cônes 75 (s'il est localisé sur un autre site). La position d'un élément sur la sphère reflète également la localisation de cet élément sur Internet : les éléments qui sont plus proches d'un point blanc 76, situé à un pôle de la sphère, sont plus proches du site courant que les objets proches d'un point noir, situé au pôle opposé de la sphère. La taille d'un objet représente la taille de l'élément, tandis que sa couleur représente la langue de l'élément. En utilisant la petite sphère satellite située à proximité de l'adresse URL du document visualisé, un utilisateur peut ouvrir le document dans une nouvelle fenêtre du navigateur Web. Quand la petite sphère satellite représente un type de contenu image (par exemple, image/jpeg, image/gif, image/bmp, image/tiff, image/pjpeg ou image/png) ou un type de contenu vidéo (par exemple vidéo/mpeg), un utilisateur peut passer au « modèle présentation d'images » 48 ou au « modèle présentation de vidéos » 410 en cliquant sur la sphère satellite.

La **figure 8** présente une vue d'écran résultant de l'utilisation du « modèle présentation d'images » 48. Il est conçu pour visualiser tous les éléments d'image sur une page. La scène comporte un jeu de blocs 81a, 81b, 81c, etc., chaque bloc contenant une image avec sa description : adresse URL et taille de l'image. Chaque image peut être déplacée au moyen d'un bouton rouge 82, ou ouverte à partir de sa localisation d'origine au moyen d'un bouton jaune 83.

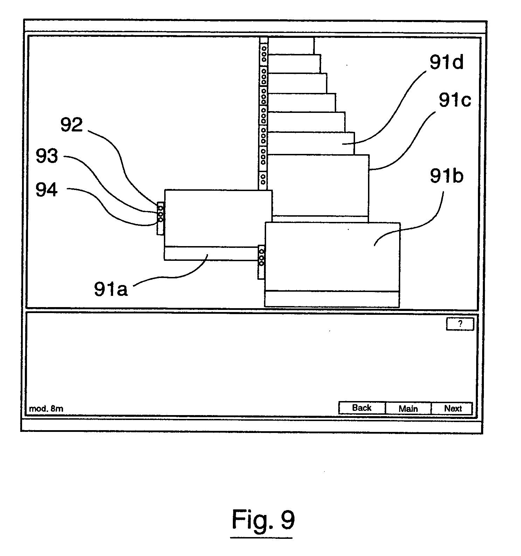

La **figure 9** présente une vue d'écran résultant de l'utilisation du « modèle présentation de vidéos » 410. Il est conçu pour visualiser tous les éléments de vidéos sur une page. La scène comporte un jeu de blocs 91a, 91b, 91c, etc., chaque bloc contenant une vidéo avec sa description : adresse URL et taille du fichier. Pendant le chargement d'une vidéo, des informations correspondantes sont affichées. Après le chargement, la première image de la vidéo est affichée. Chaque vidéo peut être déplacée au moyen d'un bouton rouge 92, ouverte à partir de sa localisation d'origine au moyen d'un bouton jaune 93, ou encore lue au moyen d'un bouton vert 94.

On présente maintenant, en relation avec les figures 10 à 12, un second exemple de méta-modèle selon l'invention. Le code « X-VRML complété » de ce méta-modèle se trouve en **annexe 5.**

Comme illustré sur la **figure 10,** ce second exemple de méta-modèle 100 permet de changer de modèle d'interface, au sein d'une pluralité de modèles d'interface comprenant :
- le modèle initial 41 (voir description ci-dessus) ;
- un modèle d'interface 102 associé à un modèle de scène virtuelle 3D permettant de restituer une scène de type « Sphères ». Ce modèle est appelé ci-après « modèle Sphères » ;
- un modèle d'interface 103 associé à un modèle de scène virtuelle 3D permettant d'indiquer que le résultat de la recherche ne comprend aucun document. Ce modèle est appelé ci-après « modèle Zéro » ;
- un modèle d'interface 104 associé à un modèle de scène virtuelle 3D permettant d'indiquer que le résultat de la recherche comprend un nombre de documents supérieur à un seuil prédéterminé (par exemple plus de 300 documents). Ce modèle est appelé ci-après « modèle Dépassement » ;
- un modèle d'interface 105 associé à un modèle de scène virtuelle 3D permettant de restituer une scène de type « Hérisson ». Ce modèle est appelé ci-après « modèle Hérisson » ;
- le « modèle Pointes » 46 (voir description ci-dessus) ;
- le « modèle présentation d'images » 48 (voir description ci-dessus) ;
- le « modèle présentation de vidéos » 410 (voir description ci-dessus).

Ce second exemple de méta-modèle 100 comprend des routes statiques et des routes dynamiques entre les modèles d'interface. Sur la figure 10, les routes statiques dynamiques sont représentées en pointillé, et les routes statiques en trait continu. On suppose ici qu'à partir du modèle d'interface initial 41, l'utilisateur demande à passer au « modèle Sphères » 102. Le méta-modèle 100 crée des routes dynamiques dans les cas suivants :
- un seul domaine des domaines de premier niveau devrait être affiché (par exemple « .fr ») ; dans ce cas, les domaines de second niveau sont affichés ;
- un seul site dans le domaine devrait être affiché ; dans ce cas, on passe directement au « modèle Hérisson » 105 ;
- aucun site est en adéquation avec la requête ; dans ce cas, on passe directement au « modèle Zéro » 103 ;
- trop de réponses pour le « modèle Hérisson » 105 ont été trouvées ; dans ce cas, on passe directement au « modèle Dépassement » 104.

La **figure 11** présente une vue d'écran résultant de l'utilisation du « modèle Sphères » 102. Ce dernier permet de visualiser de façon globale le résultat d'une recherche. Toutes les adresses trouvées sont groupées en domaines sur un niveau particulier et sont représentées sous la forme d'une sphère multicolore 111. Chaque section 112a, 112b, etc., de la sphère possède une couleur spécifique et représente un domaine particulier. La visualisation démarre à partir de domaines « racines » (par exemple, « .pl », « .fr », « .com », etc.) ou à partir de domaines de second niveau, en fonction des actions du méta-modèle. La taille de chaque section de sphère symbolise le nombre de documents trouvés dans ce domaine, en tant que fraction du nombre total de documents trouvés. Chaque nom de domaine est présenté sous la forme d'un texte accompagnant une petite sphère satellite 113a, 113b, etc., de la même couleur que la couleur de la section de sphère concernée. Les sites contenant des documents recherchés sont visualisés sous la forme de rangée de cônes (non illustrés sur la figure 11). Chaque cône possède une étiquette avec le nom du site. L'utilisateur peut explorer un sous-domaine particulier en cliquant sur une sphère satellite. Dans ce cas, la sphère représentant ce sous-domaine sera représentée ou, si un seul site contient les documents recherchés, le « modèle Hérisson » 105 sera chargé.

La **figure 12** présente une vue d'écran résultant de l'utilisation du « modèle Hérisson » 105. Ce dernier permet de visualiser des documents trouvés sur un site. Ce modèle est adapté pour des sites comprenant jusqu'à 50 pages en adéquation avec la requête. Il permet la représentation des attributs du résultat de la recherche suivants : mots fréquents sur le site, mots fréquents sur une page donnée, taille de document, langue de document, type de contenu de document, etc. Dans la scène, le site est représenté sous la forme d'une sphère 121, tandis que les documents sont des objets 122 liés à la sphère. Les objets sont distribués sur la surface de la sphère, en fonction de leurs adresses et titres. La couleur de l'objet représente la langue du document. La couleur du lien représente le type de contenu du document (par exemple HTML ou texte). La taille de l'objet représente la taille du document. Du côté droit de la sphère, un jeu de formes 123a, 123b, etc., sont visualisées. Chaque forme est une représentation d'un des mots les plus fréquents au sein de tous les documents en adéquation avec la requête. Si un document contient également un mot fréquent particulier, sa forme est la même. Un utilisateur peut passer à la représentation d'un document selon le « modèle Pointes » 46, en cliquant sur l'objet représentant ce document. Il peut également cliquer sur une petite sphère satellite (non illustrée) localisée près du nom du site, pour ouvrir une fenêtre du navigateur Web affichant la page principale du site.

On présente maintenant, en relation avec les figures 13 à 15, un troisième exemple de méta-modèle selon l'invention.

Comme illustré sur la **figure 13**, ce troisième exemple de méta-modèle 130 permet de changer de modèle d'interface, au sein d'une pluralité de modèles d'interface comprenant :
- le modèle initial 41 (voir description ci-dessus) ;
- un modèle d'interface 132 associé à un modèle de scène virtuelle 3D permettant de restituer une scène de type « Allée ». Ce modèle est appelé ci-après « modèle Allée» ;
- un modèle d'interface 134 associé à un modèle de scène virtuelle 3D permettant de restituer une scène de type « Perles ». Ce modèle est appelé ci-après « modèle Perles ».

La **figure 14** présente une vue d'écran résultant de l'utilisation du « modèle Allée » 132. Ce dernier permet de visualiser de façon globale le résultat d'une recherche. Il est adapté à la visualisation de résultats de recherche comprenant de 1 à 50 sites, avec jusqu'à 250 pages en adéquation avec la requête sur chaque site. Il permet de visualiser les attributs de résultat de recherche suivants : adresse, site, taille de document, date de modification, langue, occurrence de mot, mots fréquents, etc. Le résultat de la recherche est représenté sous la forme d'un bâtiment comprenant plusieurs niveaux 141a à 141k et d'objets 142a, 142b, etc. représentant des adresse URL de pages en adéquation avec la requête. La forme et la couleur des objets représentent différents attributs du résultat de la recherche, de même que les niveaux du bâtiment, les axes X et Z.

Des mappages possibles entre les attributs du résultat de la recherche et les paramètres du modèle de scène virtuelle 3D sont par exemple les suivants :
- niveau de bâtiment : langue, mots fréquents, site, type de contenu ;
- couleur d'objet : date de modification, langue, type de contenu, type de mot ;
- forme d'objet : type de contenu, langue, type de mot ;
- axes X et Z : date de modification, taille de document.

Quand la date de modification d'un document est représentée par la couleur de l'objet symbolisant ce document, l'objet est d'une première couleur (par exemple, rouge) si la date de modification du document est plus récente qu'une date limite, ou d'une seconde couleur (par exemple, bleu) dans le cas contraire. La date limite peut être fixée par l'utilisateur, grâce à un champ approprié « fixation de date » 143 de l'interface utilisateur 2D. En fonction de l'état d'une boîte de dialogue « en cliquant passer à l'adresse URL » 144, un clic sur un bâtiment provoque le passage au document sélectionné (si la boîte de dialogue est cochée) ou le passage au « modèle Perles » 134 (si la boîte de dialogue n'est pas cochée). Dans le premier cas, une nouvelle fenêtre du navigateur Web est ouverte.

La **figure 15** présente une vue d'écran résultant de l'utilisation du « modèle Perles » 134. Ce dernier permet de visualiser des documents trouvés sur un site. Il est adapté à la visualisation de résultats de recherche comprenant de 1 à 100 pages en adéquation avec la requête sur un site particulier. Il permet de visualiser les attributs de résultat de recherche suivants : adresse, langue, taille de document, date de modification, nombre d'objets liés, etc. Chaque adresse URL d'un document est représentée sous la forme d'une perle 151a, 151b, etc. sur un axe 152. La position sur l'axe reflète la taille ou la date de modification du document, en fonction du mappage courant. La couleur de chaque perle représente la langue du document, tandis que sa taille reflète le nombre d'objets liés à cette page (liens, images, objets incorporés, etc.). Chaque perle possède un cône associé 153a, 153b, etc., permettant, lorsque l'utilisateur clique dessus, d'ouvrir un navigateur avec l'adresse URL que représente cette perle. L'utilisateur peut déplacer les perles le long de l'axe, ce qui est utile lorsque deux perles se chevauchent.

La **figure 16** présente une vue d'écran résultant de l'utilisation du « modèle Cylindre ». Ce dernier, qui est accessible à partir du modèle d'interface initial, permet de visualiser de façon globale le résultat d'une recherche. Toutes les adresses URL trouvées (au sein du résultat de la recherche) sont groupées en domaines sur un niveau particulier, chaque domaine étant représenté sous la forme d'un cylindre 161a à 161e. La visualisation démarre au niveau de domaine « racine » (par exemple « .pl », « .com », « .fr », « .edu », « .gov », etc.). Sur chaque cylindre, des documents en adéquation avec la requête dans le domaine sont représentées sous la forme de tuiles 162 sur la surface du cylindre. Chaque couleur de tuile représente un site particulier. Un utilisateur peut se rendre à une adresse URL particulière en cliquant sur une tuile. Chaque cylindre peut être tourné indépendamment des autres cylindres, ainsi un utilisateur peut explorer le résultat d'une recherche. Un utilisateur peut également explorer un sous-domaine d'un domaine particulier en cliquant sur un petit cylindre 163a à 163e, s'il est vert, associé au cylindre représentant ce domaine particulier. Si le petit cylindre associé est rouge, cela signifie que le domaine particulier ne contient pas de sous-domaine (il contient alors seulement des sites).

La **figure 17** présente une vue d'écran résultant de l'utilisation du « modèle Domino ». Ce dernier, qui est accessible à partir du modèle d'interface initial, permet de visualiser de façon globale le résultat d'une recherche et d'affiner la recherche par étapes successives. Il est adapté à la visualisation de résultats de recherche comprenant de 1 à 50 sites, avec jusqu'à 25 pages en adéquation avec la requête sur chaque site. Il permet de visualiser les attributs de résultat de recherche suivants : adresse, langue, type de mot, mots fréquents, etc. Chaque adresse URL d'un document (au sein du résultat de la recherche) est représentée par une tuile transparente 171. Chaque tuile est localisée sur un niveau particulier 172a à 172 qui représente la langue du document, le type de mot ou un mot fréquent, en fonction du mappage courant. L'axe X représente les différents sites. Les noms de sites sont présentés sur des tablettes bleues 173a à 173g situées sous les tuiles. A chaque fois que l'utilisateur rentre un mot-clé dans le champ de formulation de requête et appuie sur le bouton de recherche, des tuiles représentant des adresses URL où le mot-clé a été trouvé, change de couleur, par exemple du bleu vert le rouge. Après plusieurs étapes d'affinage, les tuiles les plus rouges sont celle qui contiennent le plus de mots-clés recherchés.

La **figure 18** présente une vue d'écran résultant de l'utilisation du « modèle Comparaison ». Ce dernier est une modification du « modèle Cylindre » présenté ci-dessus en relation avec la figure 16. Il permet de visualiser et comparer les résultats de (au moins) deux recherches. La scène virtuelle 3D comprend deux jeux de cylindres 181, 182, permettant chacun de visualiser le résultat d'une recherche distincte. Quand une boîte de dialogue « seulement le second mot-clé » 183 est cochée, le cylindre de droite reflète le résultat d'une recherche effectuée avec le mot clé de droite, rentré dans le champ de requête correspondant (de droite) 184. Si la boîte de dialogue précitée n'est pas cochée, le cylindre de droite reflète le résultat d'une recherche effectuée d'une part avec le mot-clé de gauche, rentré dans le champ de requête correspondant (de gauche) 185, et d'autre part avec le mot-clé de droite. Dans le second cas, la recherche est plus restreinte. Comme avec le « modèle Cylindre », un utilisateur peut explorer des sous-domaines et afficher des adresses URL sélectionnées.

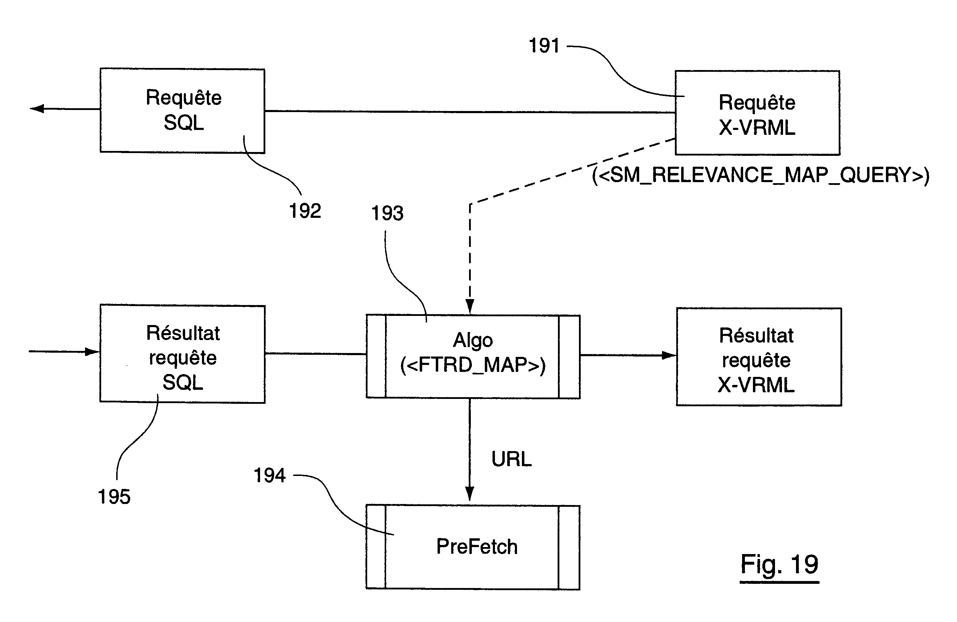

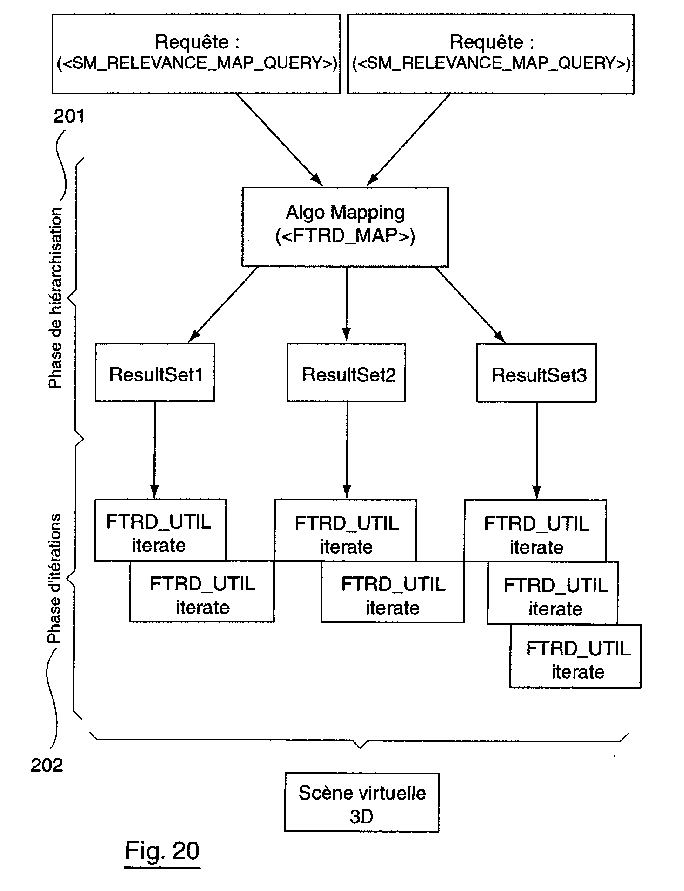

On présente maintenant, en relation avec les figures 19 et 20, un mécanisme particulier de génération d'une scène virtuelle 3D, dans une variante de réalisation de l'invention.

On trouvera en **annexe 4** une description détaillée des balises complémentaires (nouveaux tags propres à l'invention) relatives à cette variante de réalisation de l'invention.

La **figure 19** illustre le principe général de ce mécanisme particulier de génération d'une scène virtuelle 3D, tandis que la **figure 20** en illustre le fonctionnement logique détaillé à travers un exemple.

Selon un premier aspect de cette variante de réalisation, qui s'oppose à l'approche proposée par la balise complémentaire « SM_QUERY » (voir annexe 3), la définition du modèle de scène virtuelle 3D utilise un nombre limité de balises complémentaires « de formulation de requête ». Chacun de ces dernières permet d'envoyer une requête distincte comprenant un ou plusieurs attribut(s) de contrainte dont le type est prédéfini, et visant à obtenir un ou plusieurs résultats dont le type est prédéfini.

Ces balises complémentaires de formulation de requête constituent des primitives de langage permettant d'améliorer la structuration de la base de données du moteur de recherche et de rendre plus lisible le langage X-VRML. En effet, ayant un nombre limité de balises de formulation de requêtes, il est possible de travailler sur la structure de la base de données du moteur de recherche afin que les requêtes X-VRML de l'utilisateur 191 (fig.19) se traduisent par un nombre minimal de requêtes SQL 192 (fig.19) émises vers le moteur de recherche. Enfin, ceci permet d'abstraire la création des modèles de scène virtuelle 3D (métaphores) de la structuration de la base de données du moteur de recherche. Ceci présente l'avantage de protéger la structure de la base (elle n'est pas visible) et de rendre la création des métaphores bien plus simple. De plus la connaissance fine des requêtes permet la création d'index et de nouvelles tables permettant de diminuer les calculs du système de gestion de la base de données (SGBD) du moteur de recherche. Ceci permet en outre de vérifier des erreurs sur l'existence des champs du résultat de la recherche, ce qui n'est pas possible avec la balise complémentaire « SM_QUERY ».

Le nombre limité de balises complémentaires « de formulation de requête » comprend par exemple quatre balises (<SM_RELEVANCE_MAP_QUERY> (aussi appelée <QUERY_1>), <QUERY_2>, <QUERY_3> et <QUERY_4>), qui sont présentées de façon détaillée en annexe 4.

Selon un second aspect de la variante de réalisation de l'invention, la définition du modèle de scène virtuelle 3D utilise une balise complémentaire <FTRD_MAP> (voir présentation détaillée en annexe 4) permettant de générer une scène virtuelle 3D à partir de :
- au moins un résultat donné 195 (fig.19), obtenu par au moins une des balises complémentaires « de formulation de requête » ;
- un type donné de mappage hiérarchisé des attributs du résultat aux paramètres du modèle de scène virtuelle 3D ;
- un jeu de paramètres donnés, qui dépendent du type de mappage et permettent le paramétrage d'au moins une variable paramétrable de définition du type de mappage.

Cette balise complémentaire <FTRD_MAP> inclut un appel à au moins un algorithme externe 193 permettant de catégoriser, ranger les données du résultat. Cet algorithme externe est par exemple écrit dans le langage Java (ou plus généralement dans un langage autre que le langage X-VRML complété). La partie résiduelle de la balise complémentaire <FTRD_MAP>, écrite dans le langage X-VRML complété, peut ainsi être limitée à un travail de mise en page, de présentation graphique et de gestion d'interaction.

Optionnellement, on met en oeuvre un mécanisme de pré-extraction (pre-fetch), permettant de demander à l'avance les documents (pages) du résultat de la recherche. Ceci permet de rendre les accès aux documents (pages Web) plus rapides. L'intérêt est également de déterminer si parmi les documents du résultat certains ne sont pas déjà disponibles. En tout état de cause, ce mécanisme est mis en oeuvre dans un module client qui est lié à la lecture du résultat d'une requête. En particulier, il peut s'agir d'un sous-module 194 du module 193 contenant l'algorithme externe précité. En effet, c'est lors de l'étape de lecture du résultat que l'on peut identifier l'importance ou non d'un site par rapport à un autre, et identifier l'ordre dans lequel on va demander la pré-extraction.

Selon un troisième aspect de la variante de réalisation de l'invention, la définition du modèle de scène virtuelle 3D utilise une balise complémentaire <FTRD_UTIL > (voir présentation détaillée en annexe 4), permettant de réaliser une opération et comprenant :
- un attribut (OP) définissant l'opération à réaliser parmi une pluralité d'opérations possibles ;
- un attribut (PARAMS) définissant des options correspondant à l'opération à réaliser.

La pluralité d'opérations possibles comprend par exemple :
- des fonctions Java (OP="java.package.fcn") ;
- une opération d'itération (OP="iterate"), permettant d'effectuer une itération :
   * sur un résultat donné de la balise complémentaire <FTRD_MAP> de génération d'une scène virtuelle 3D ; ou
   * sur un résultat donné d'une autre balise complémentaire de réalisation d'opération (<FTRD_UTIL>) ayant également réalisé une opération d'itération, dans le cas où plusieurs boucles d'itération sont imbriquées sur plusieurs niveaux de hiérarchie d'un résultat donné de la balise complémentaire de génération d'une scène virtuelle 3D.

Dans l'exemple illustré sur la figure 20 (fonctionnement logique détaillé), le mécanisme particulier de génération d'une scène virtuelle 3D comprend :
- une phase de hiérarchisation 201, au cours de laquelle les résultats de recherche reçus en réponse à deux requêtes formulées avec la balise <SM_RELEVANCE_MAP_QUERY>, sont traités par la balise <FTRD_MAP>. Il s'agit d'un calcul de paramètres graphiques, c'est-à-dire d'un passage de données logiques (issues de la base de données du moteur de recherche) à des données graphiques hiérarchisées, contenues dans des groupes de résultats « ResultSet1 », « ResultSet2 » et « ResultSet3 » ;
- une phase d'itérations 202, au cours de laquelle on effectue, avec des boucles éventuellement imbriquées de l'opération « iterate » de la balise <FTRD_UTIL>, une itération sur chacune des hiérarchies, afin de produire la représentation de la scène virtuelle 3D.

Les exemples de modèles d'interface et de méta-modèles présentés ci-dessus, en relation avec les figures 4 à 18 sont donnés uniquement à titre illustratif. Il est clair que de nombreux autres modèles d'interface et méta-modèles de l'invention peuvent être envisagés, sans sortir du cadre de la présente invention.

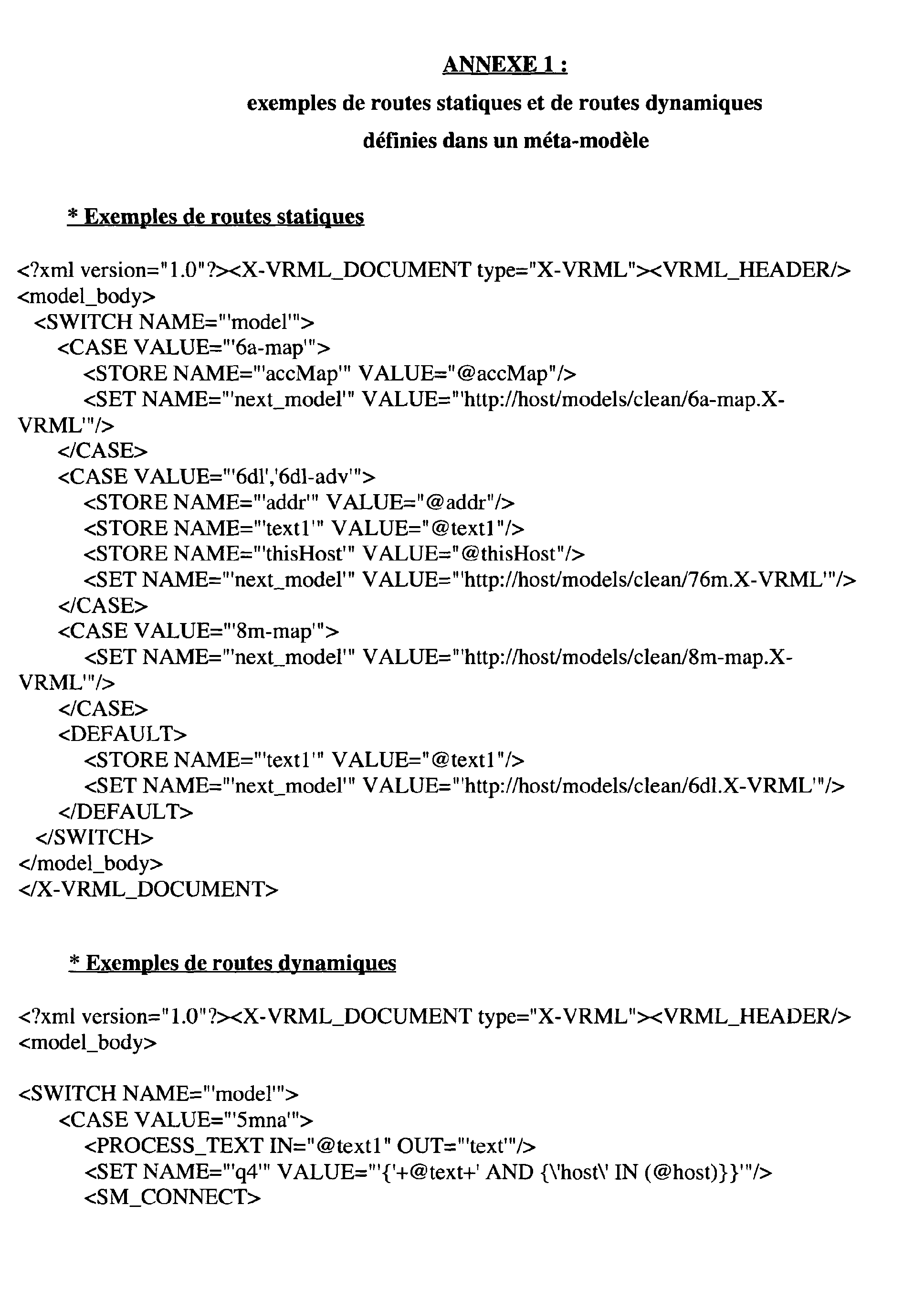

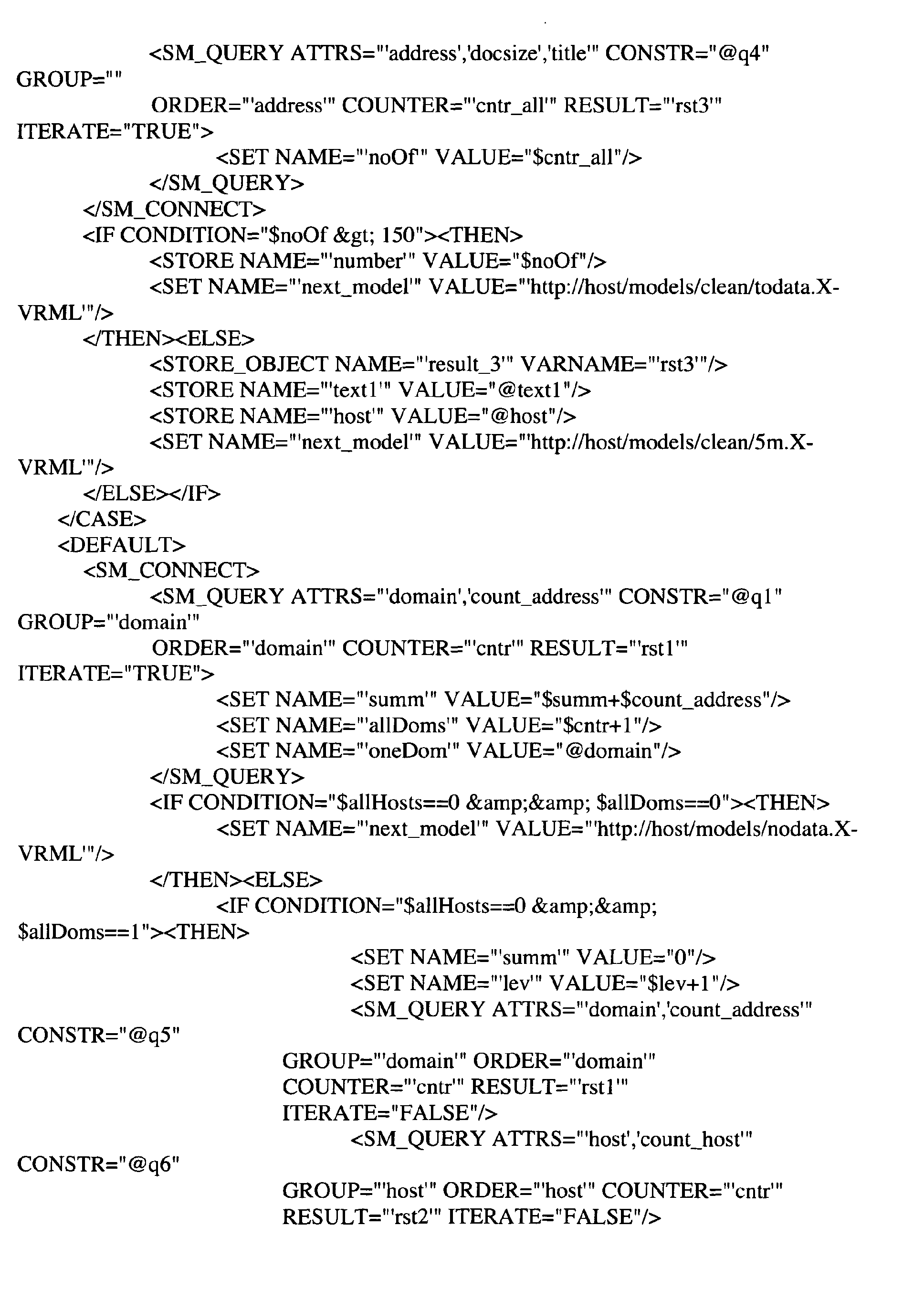

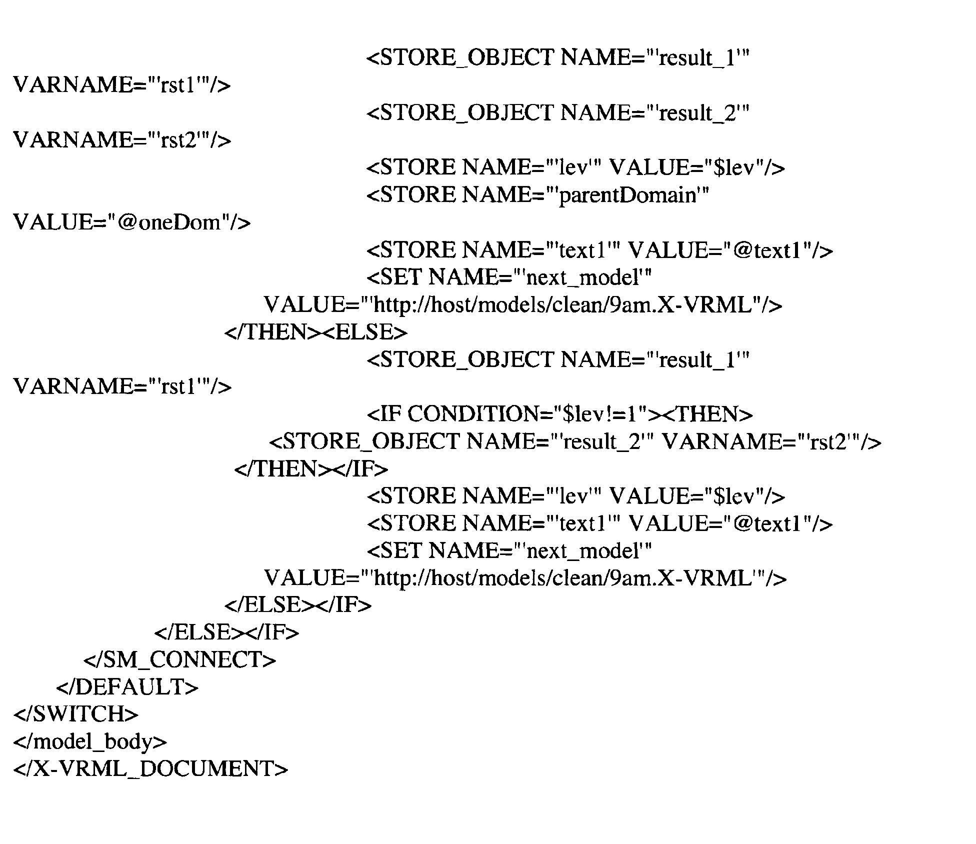

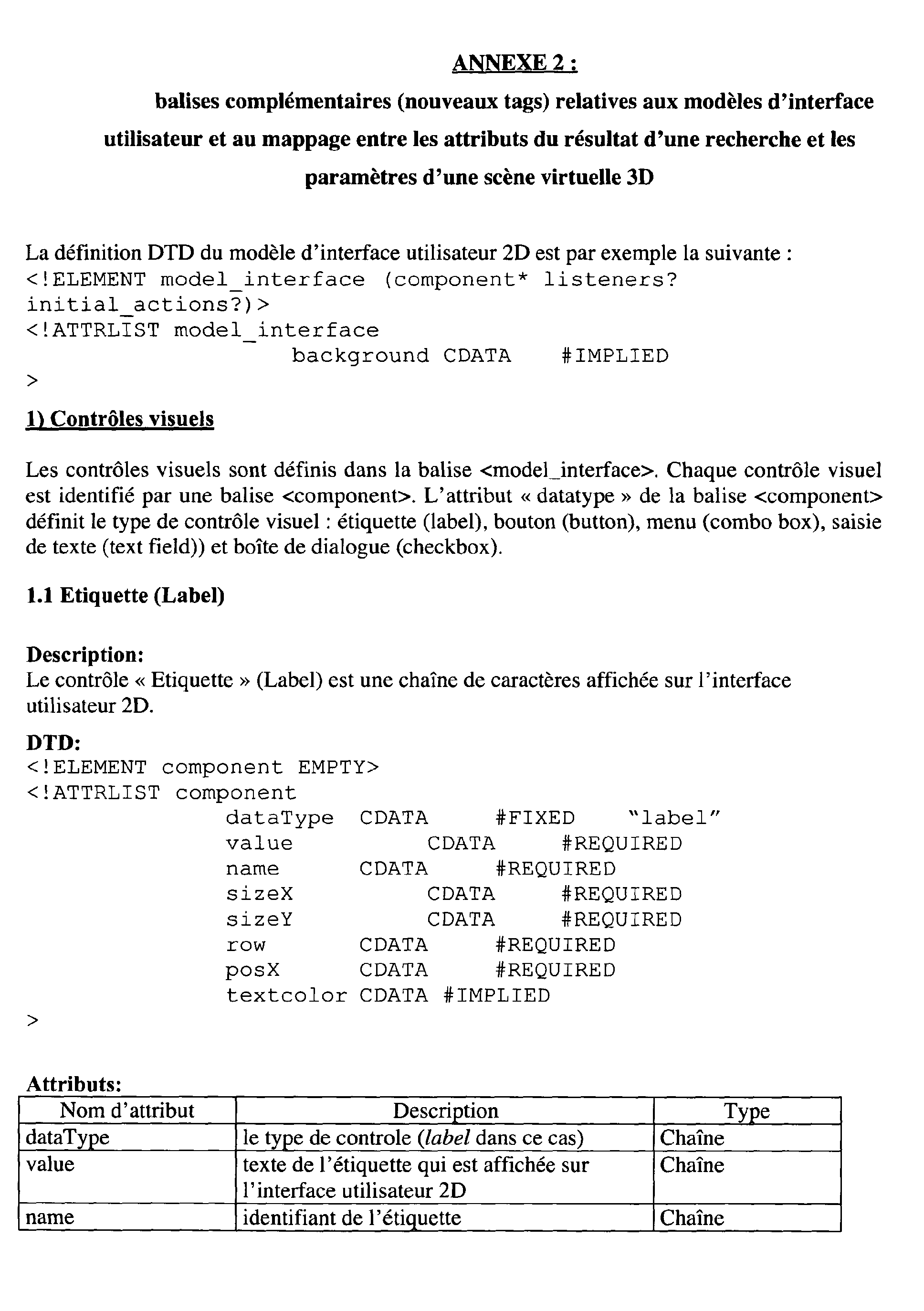

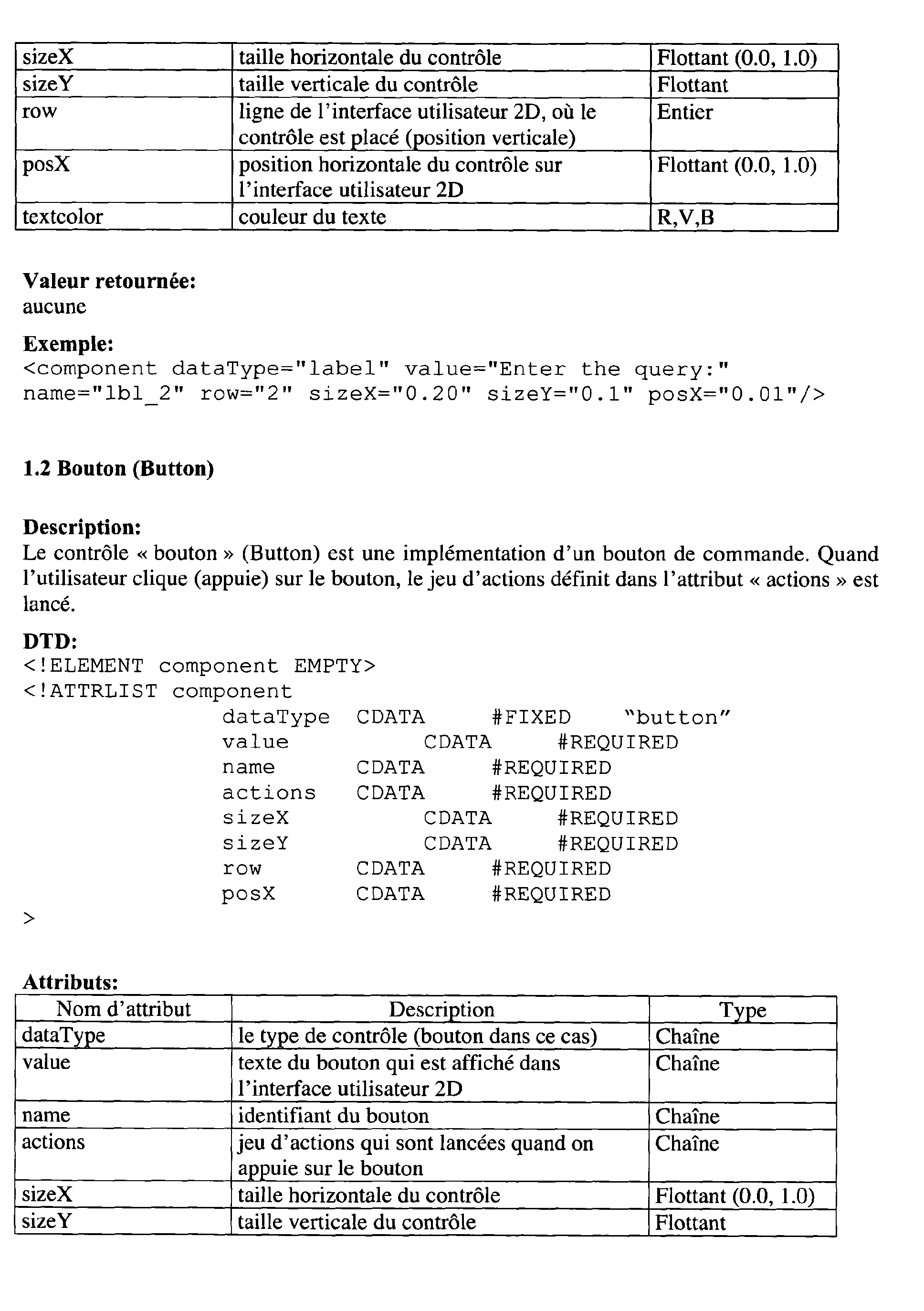

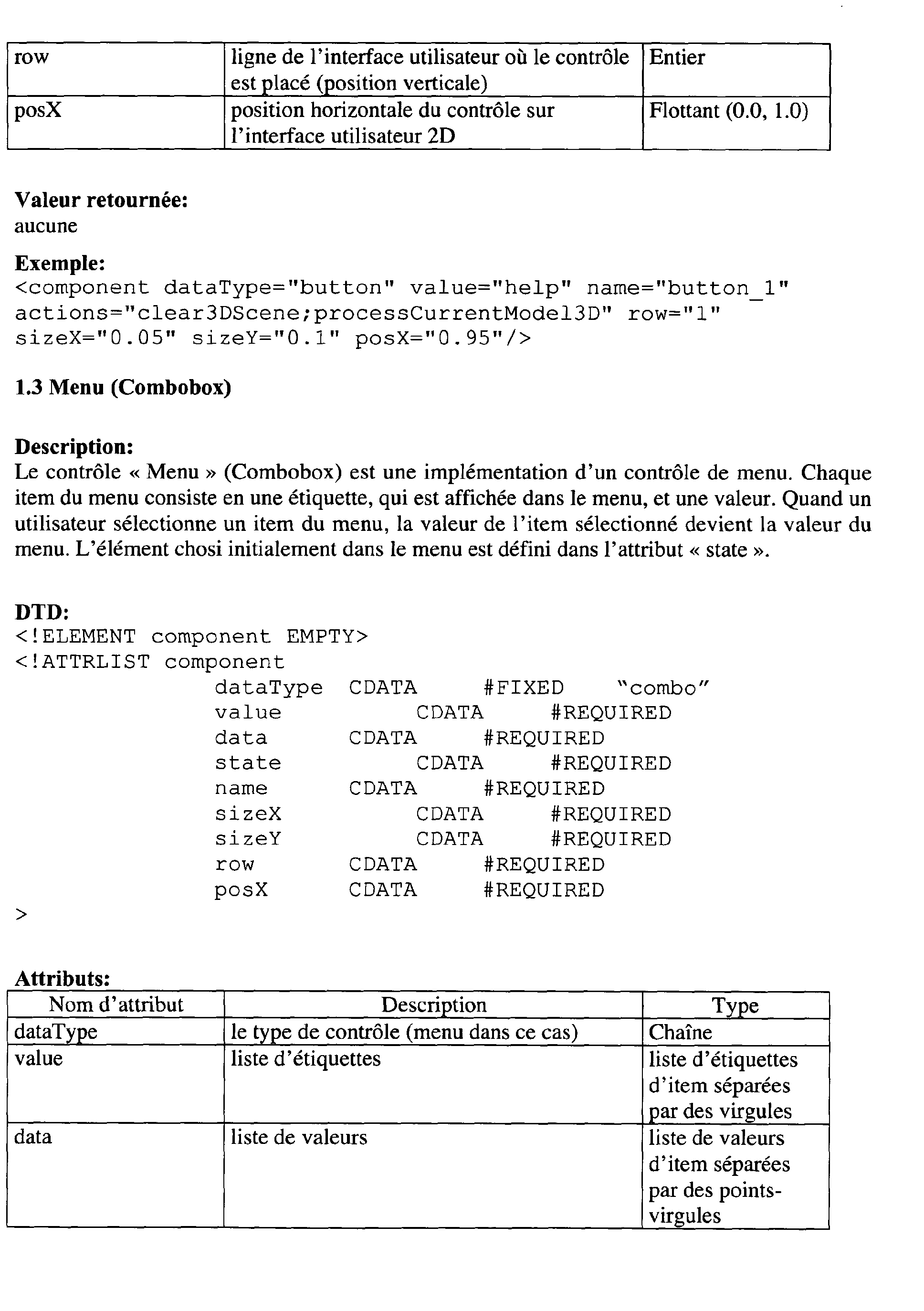

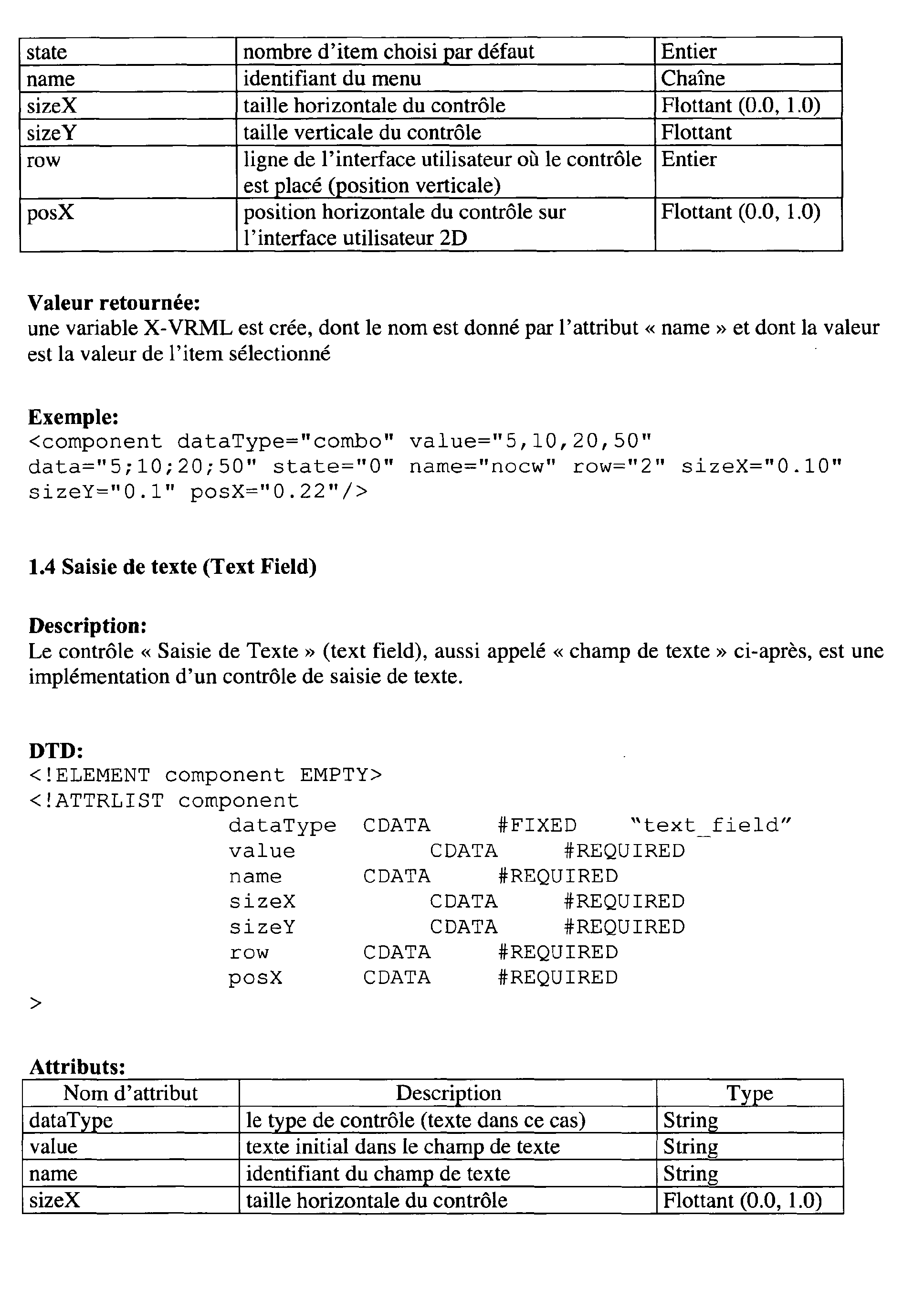

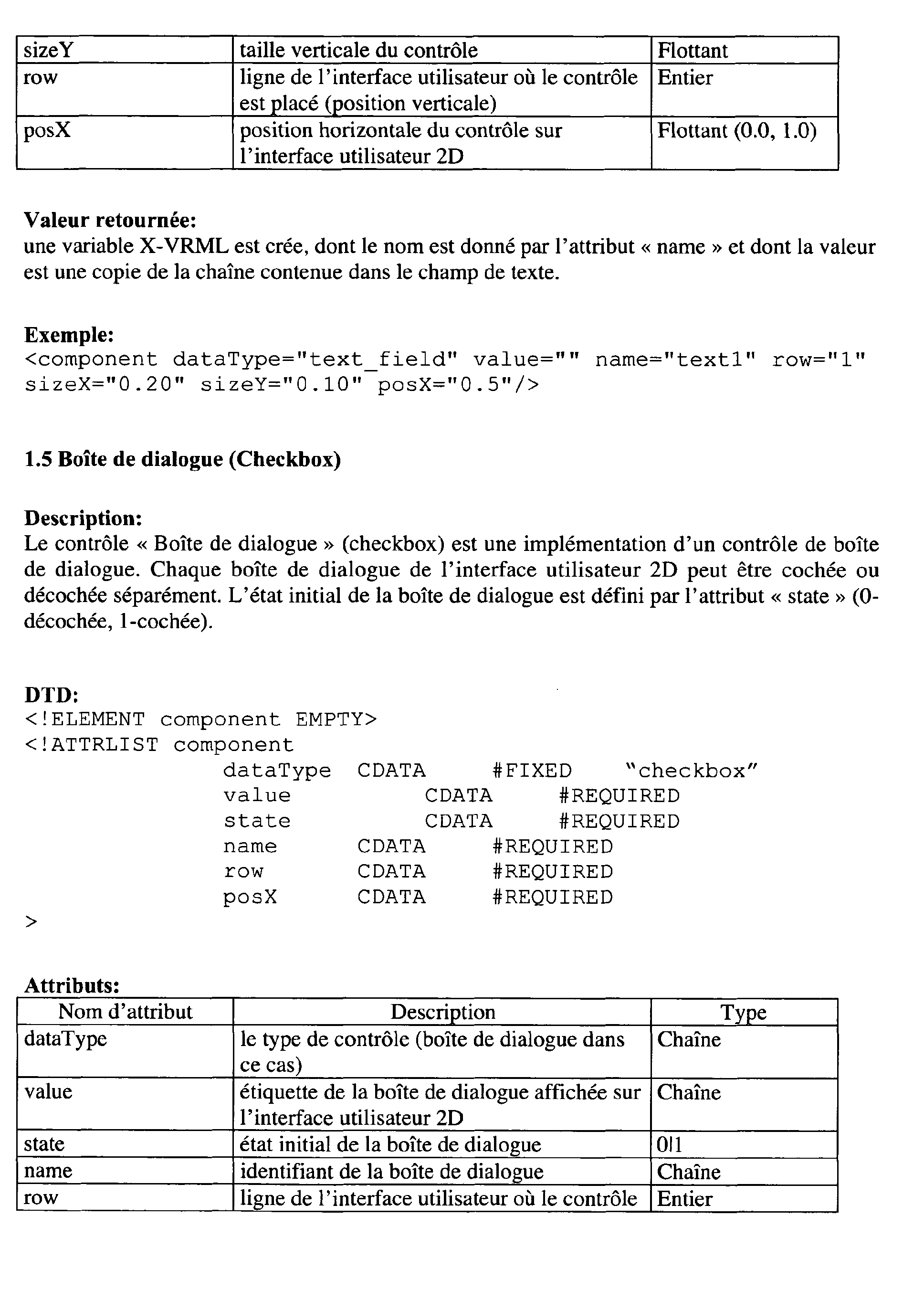

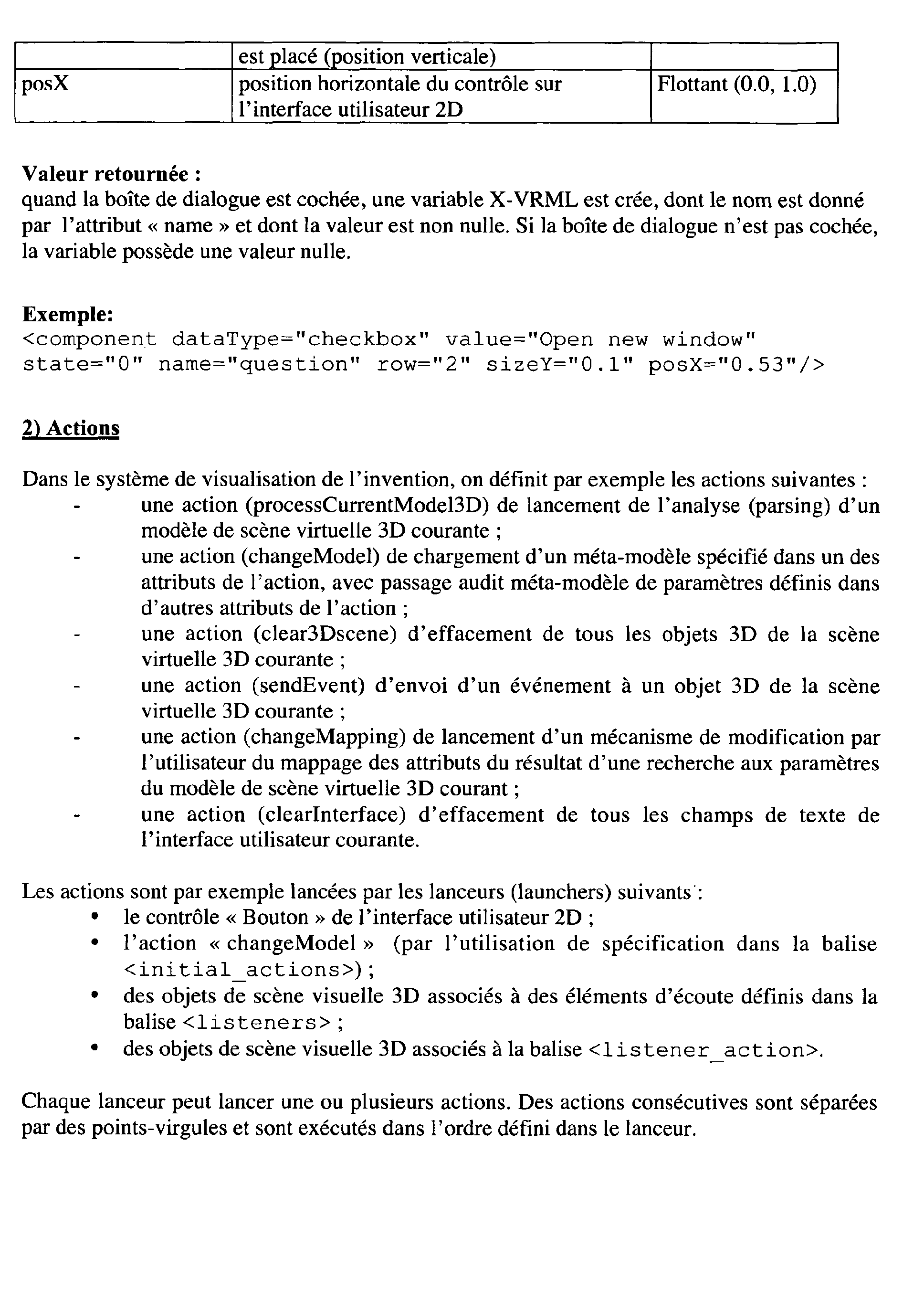

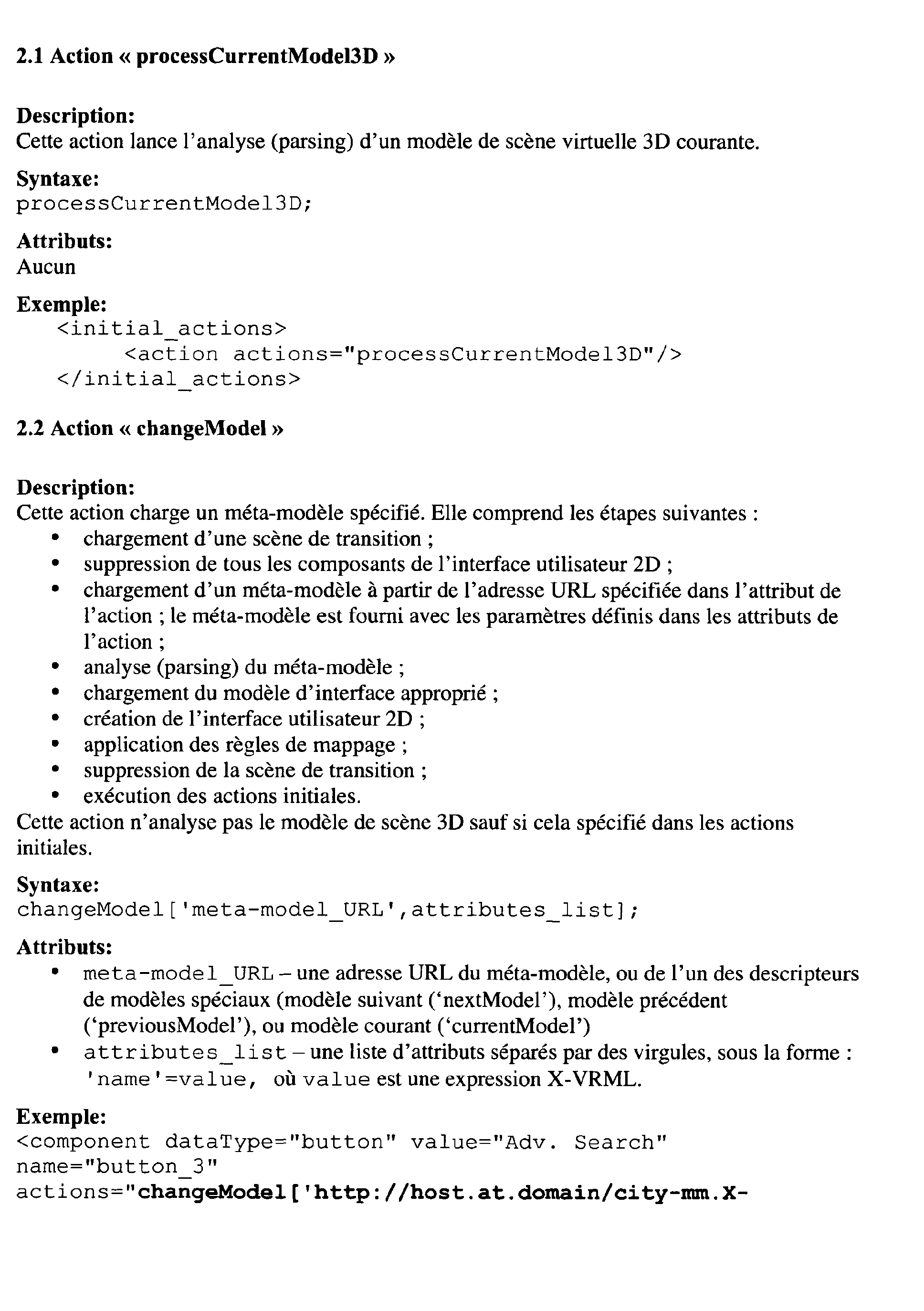

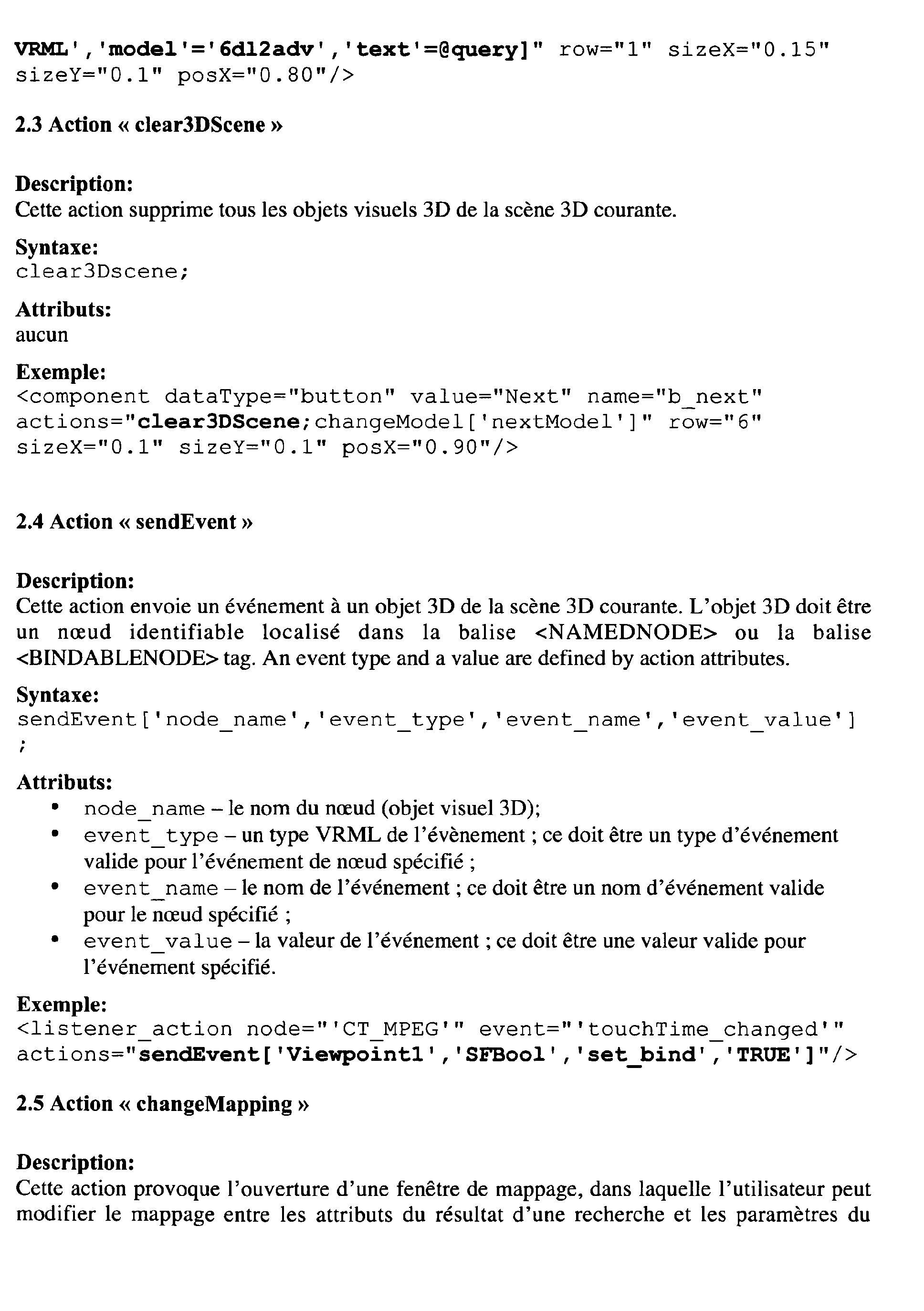

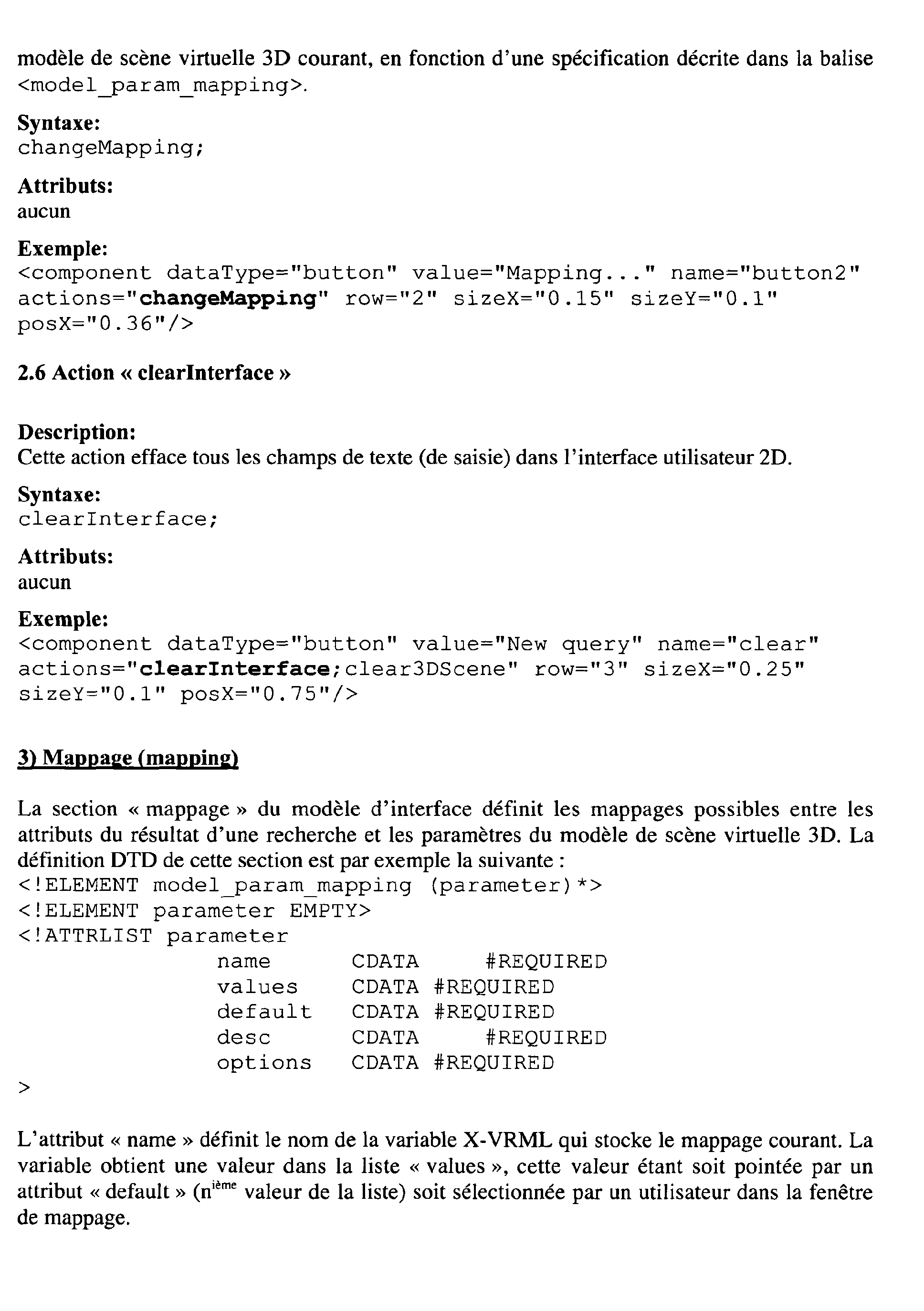

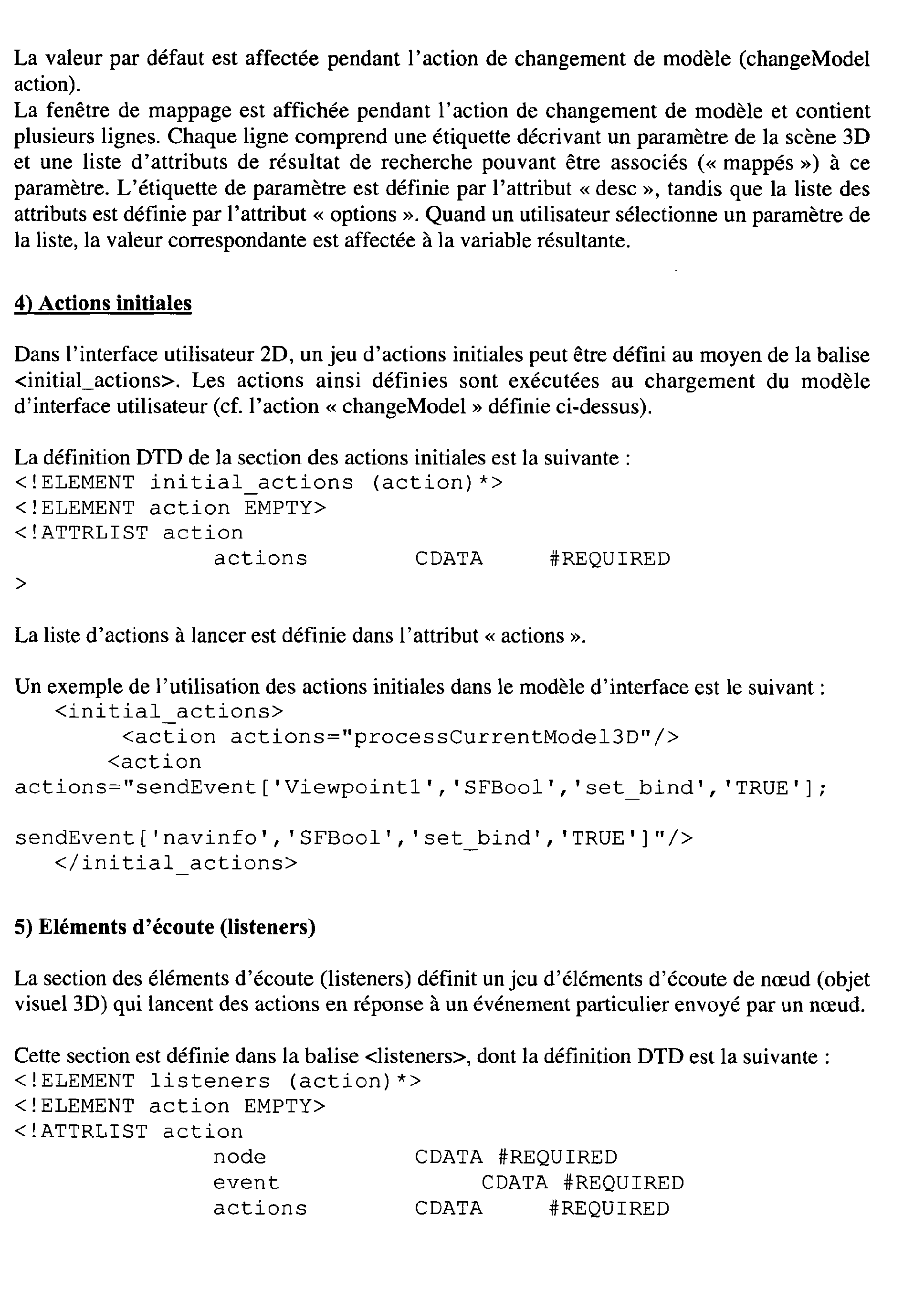

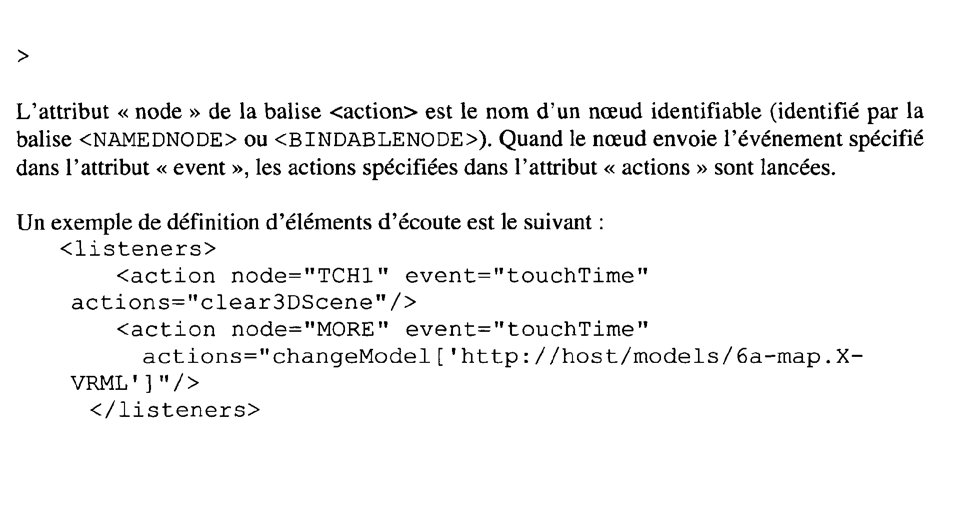

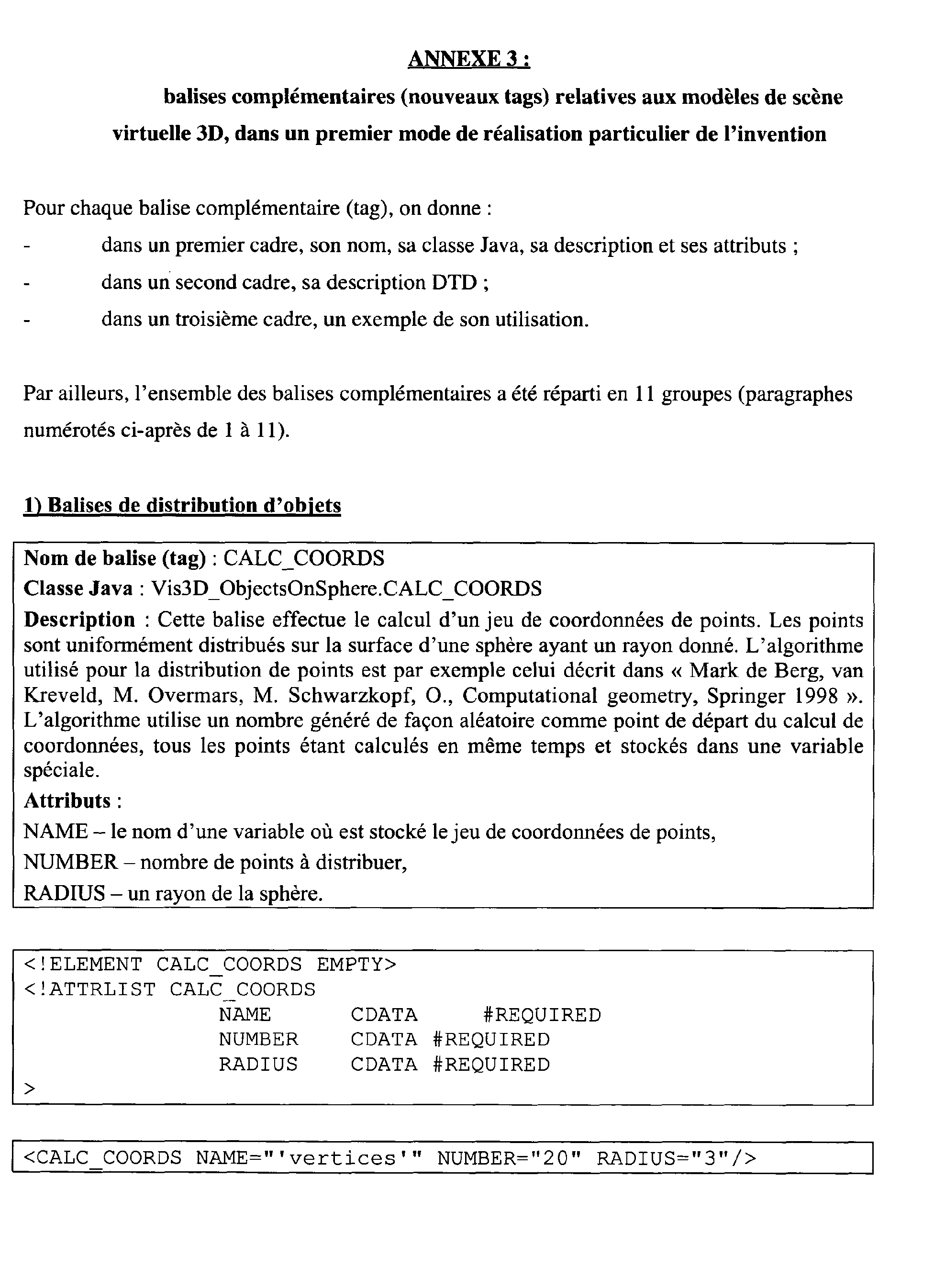

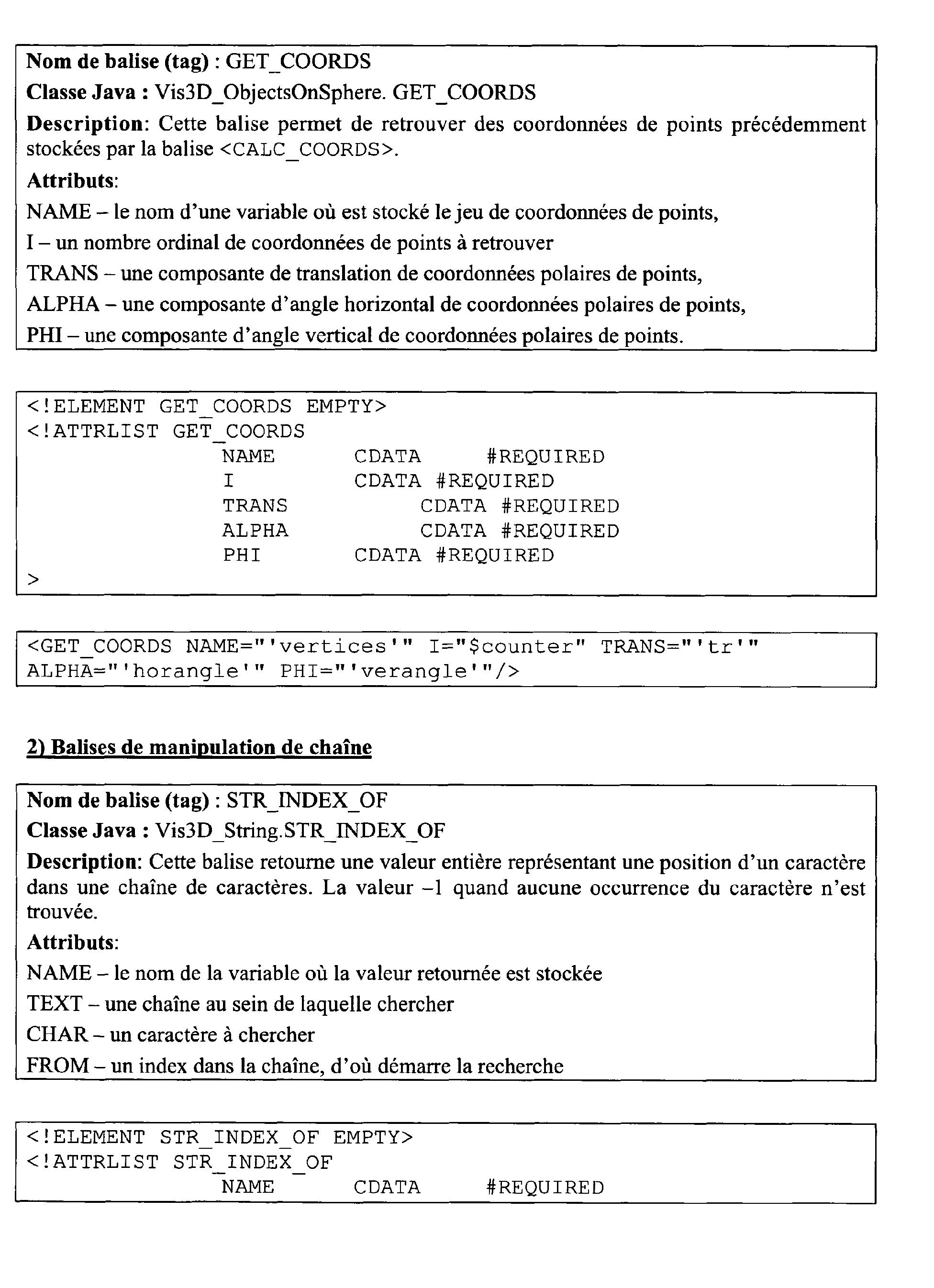

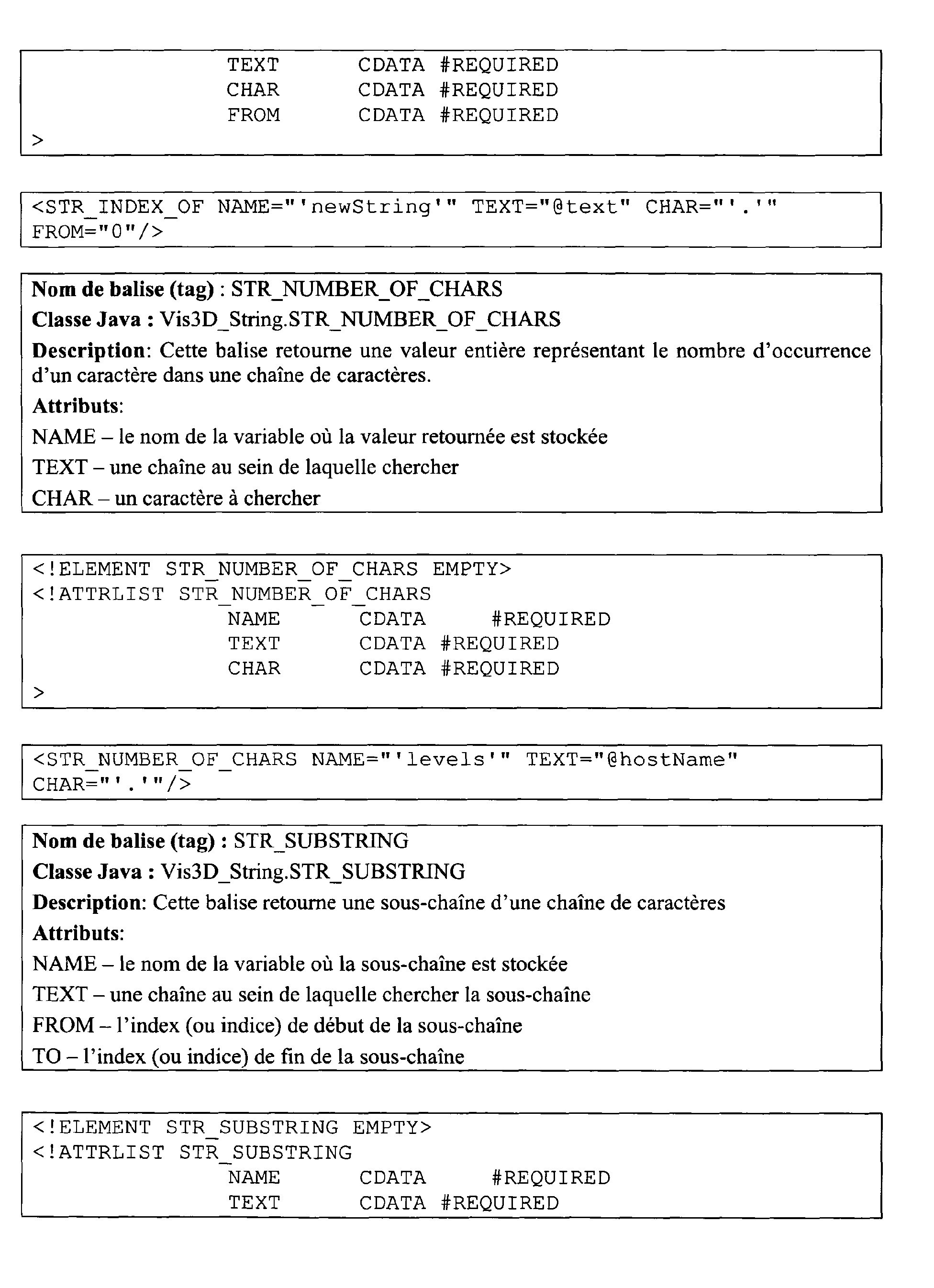

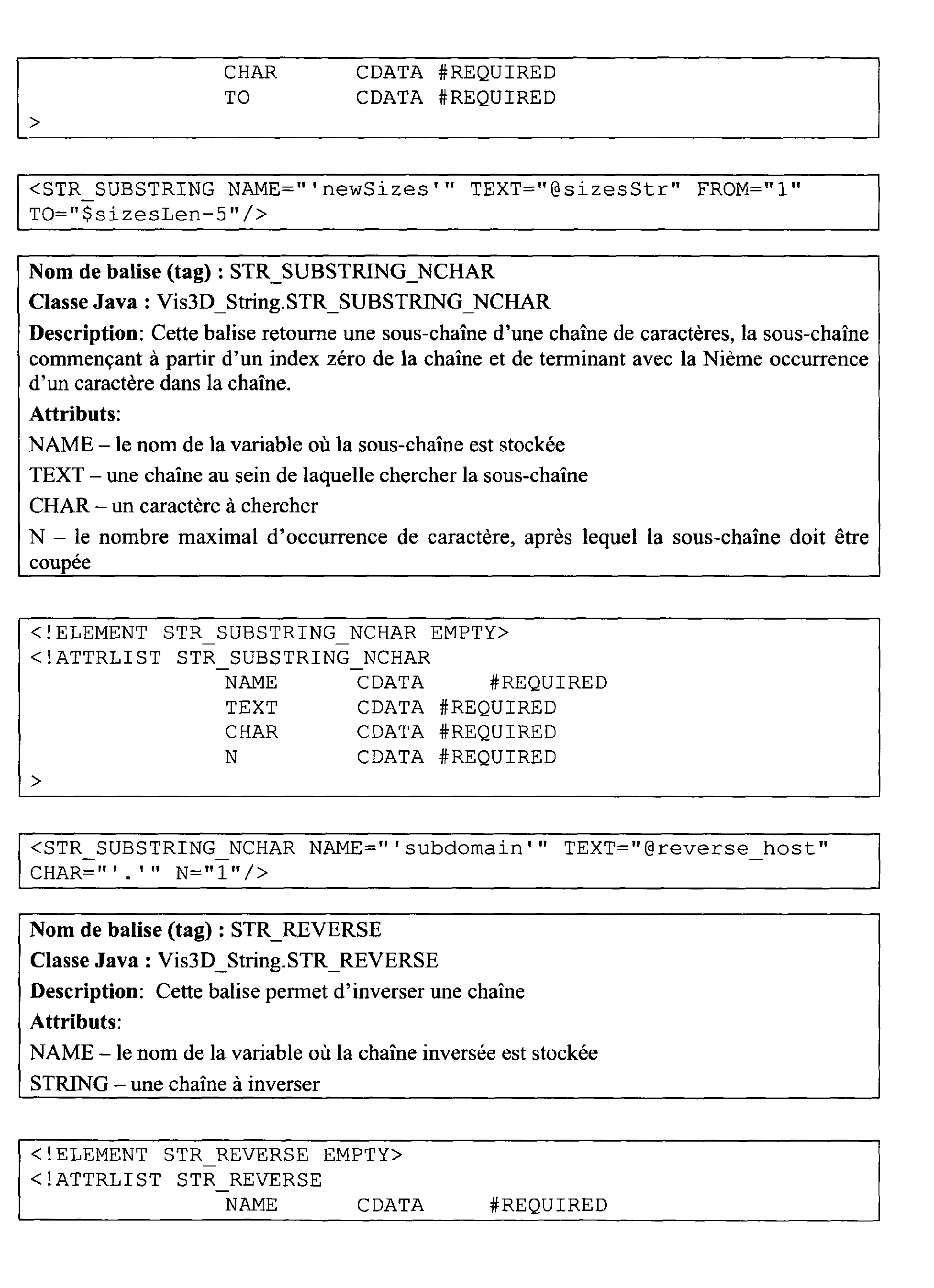

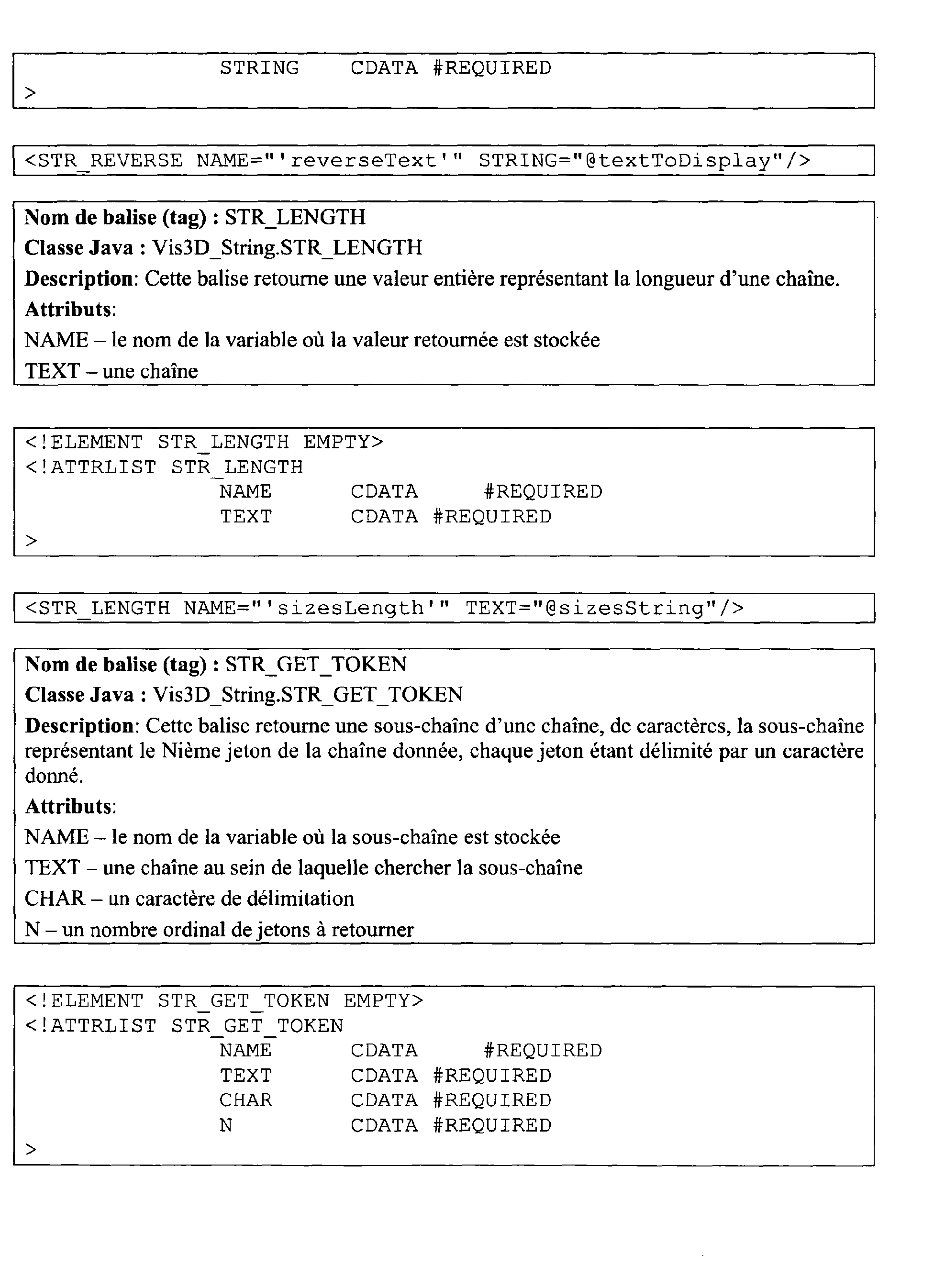

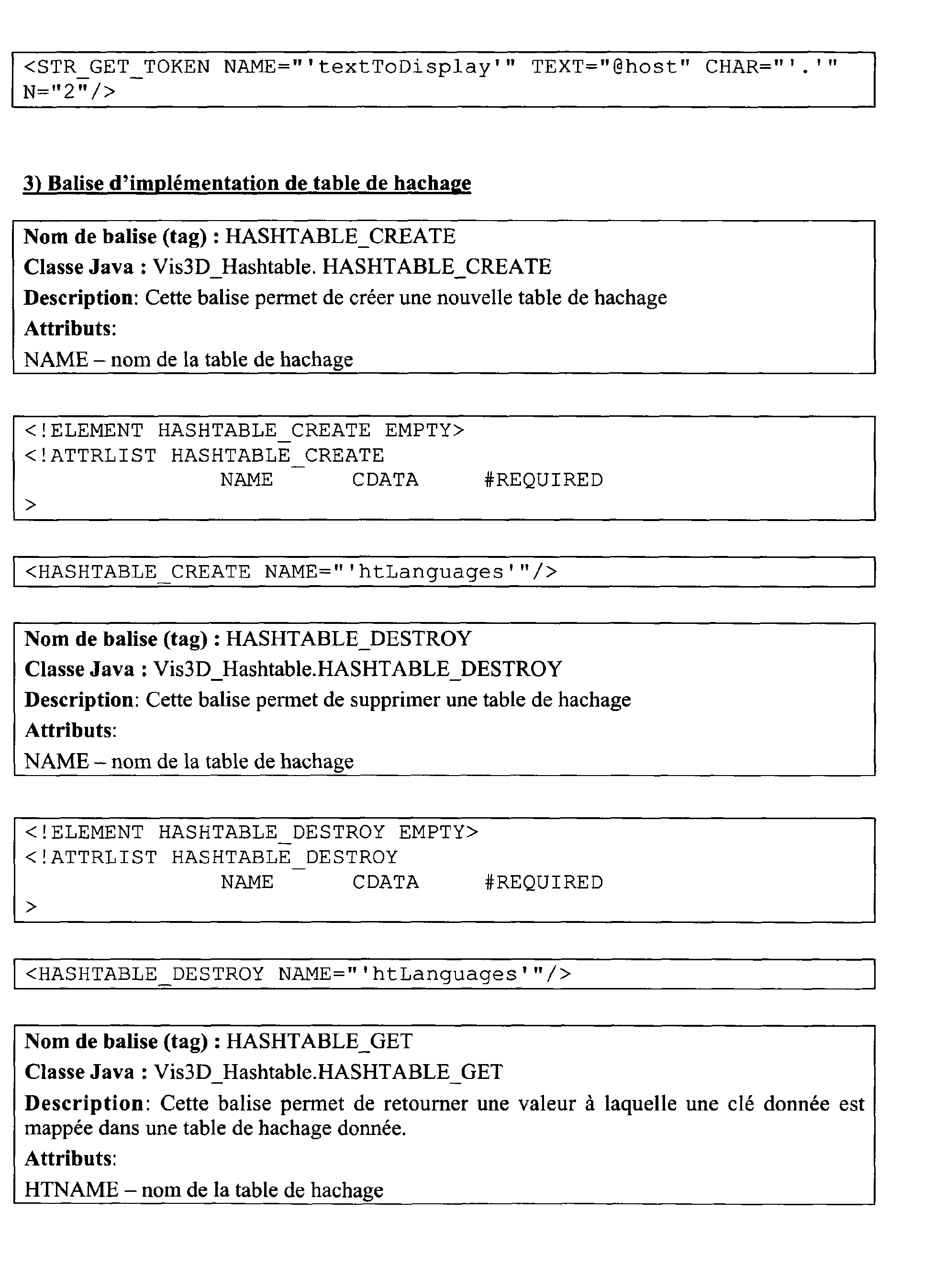

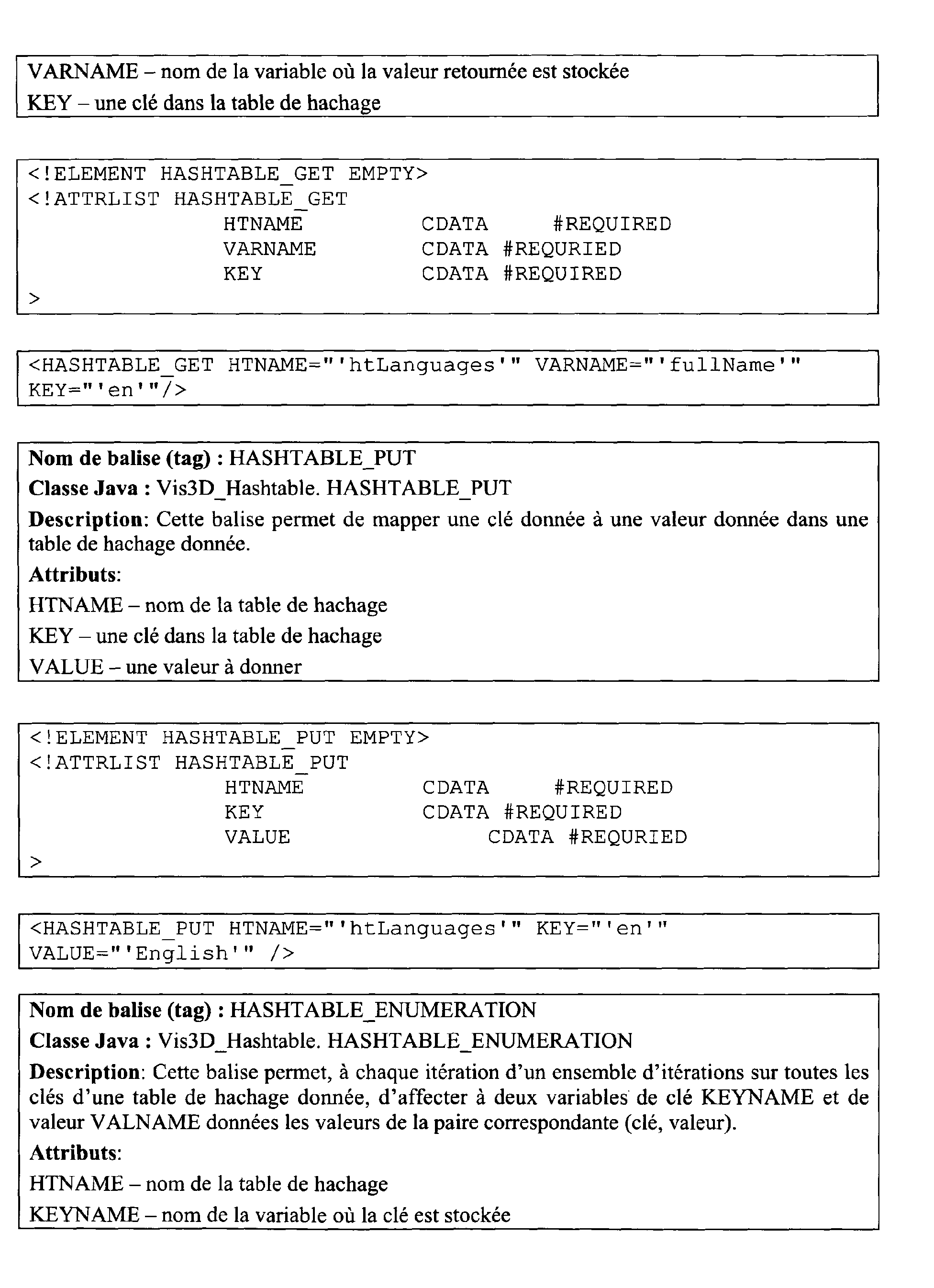

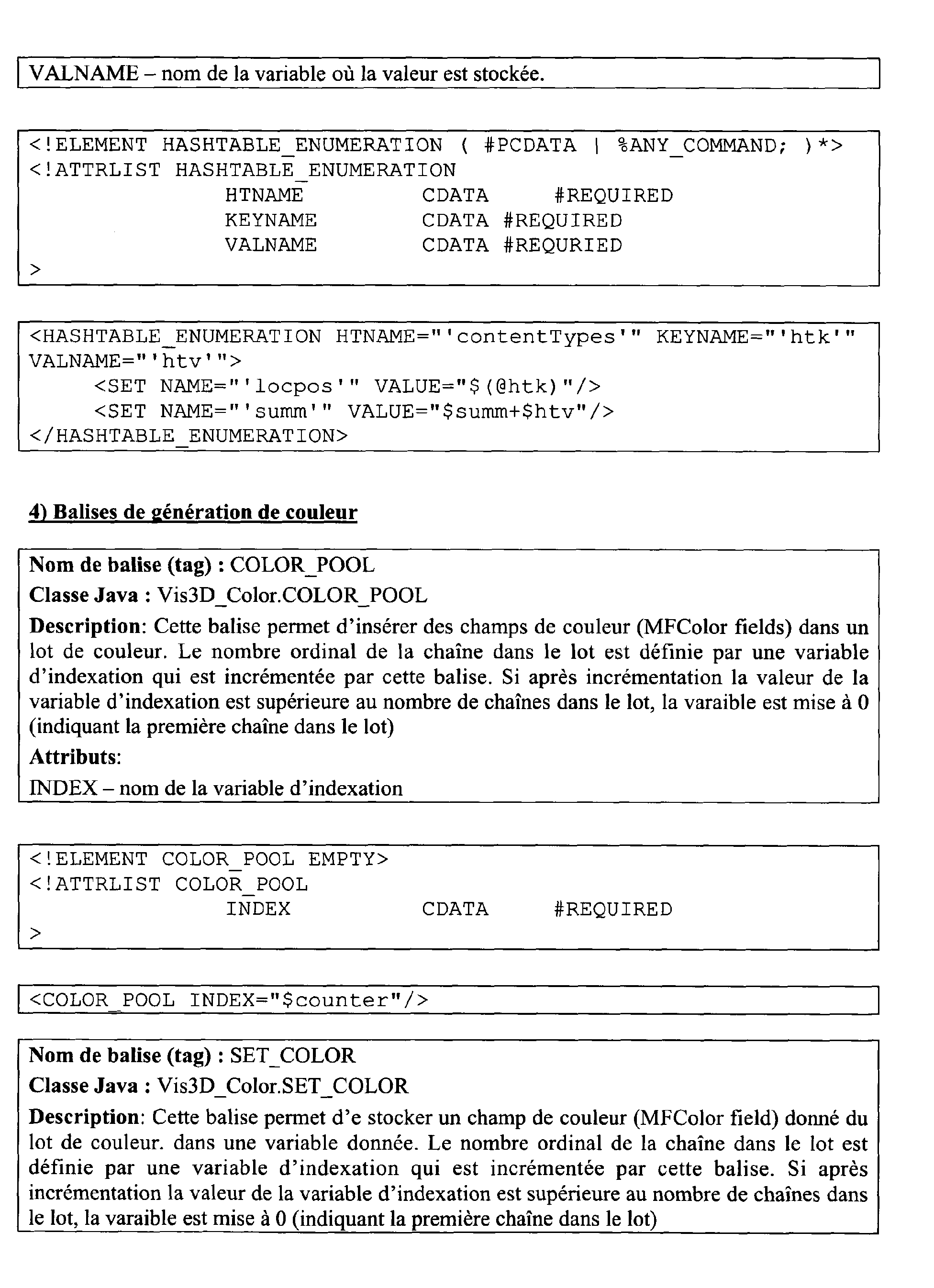

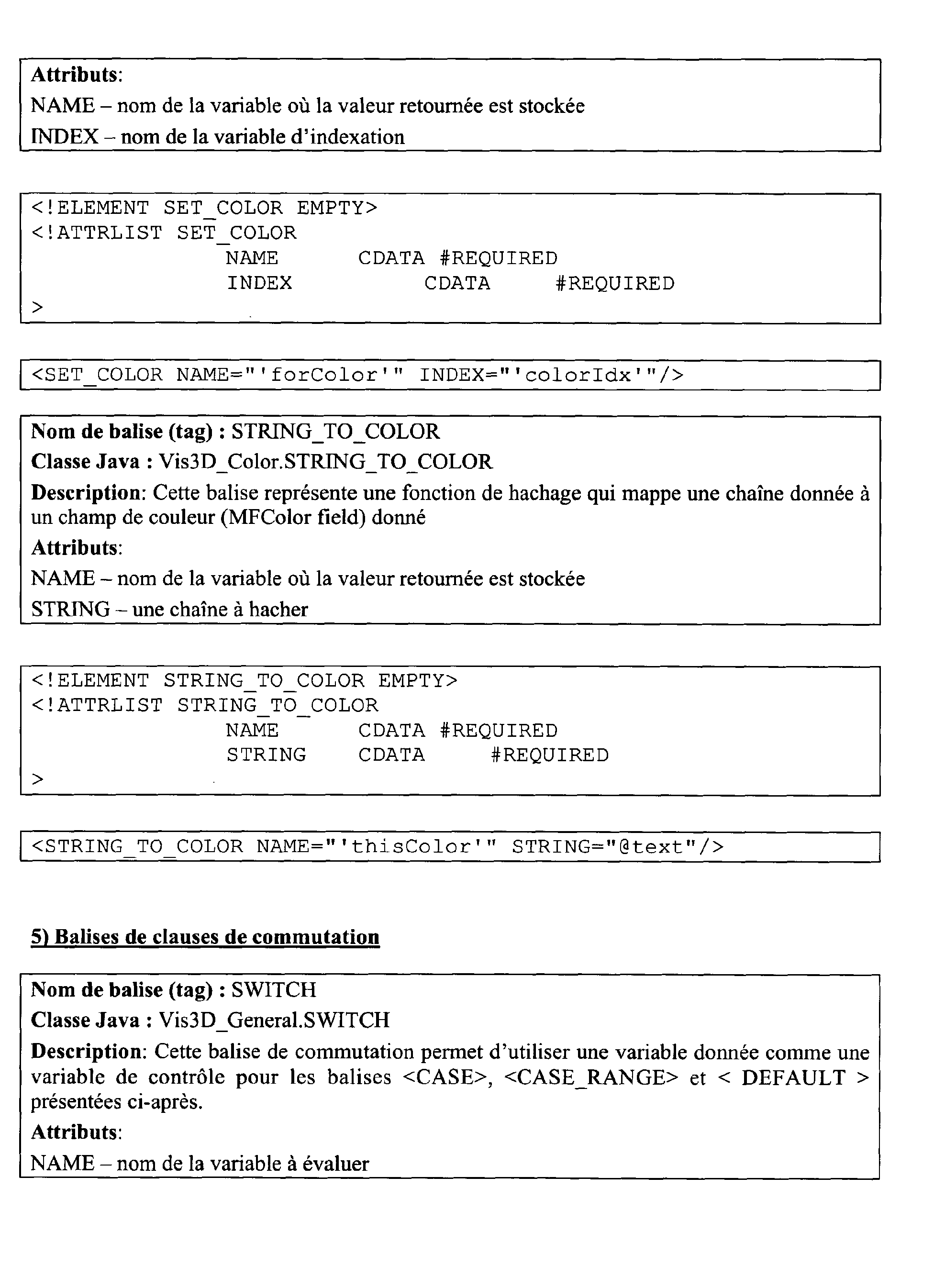

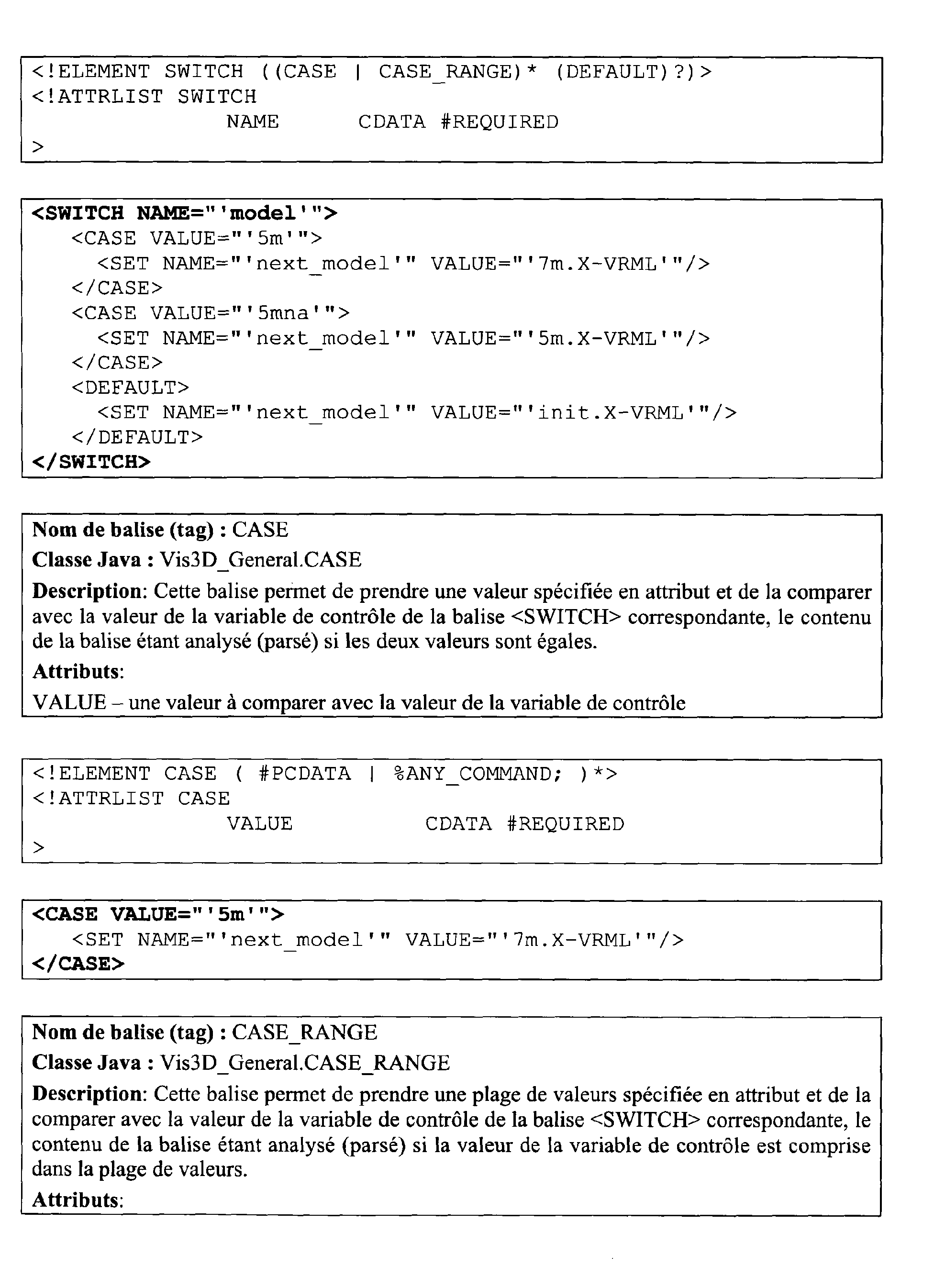

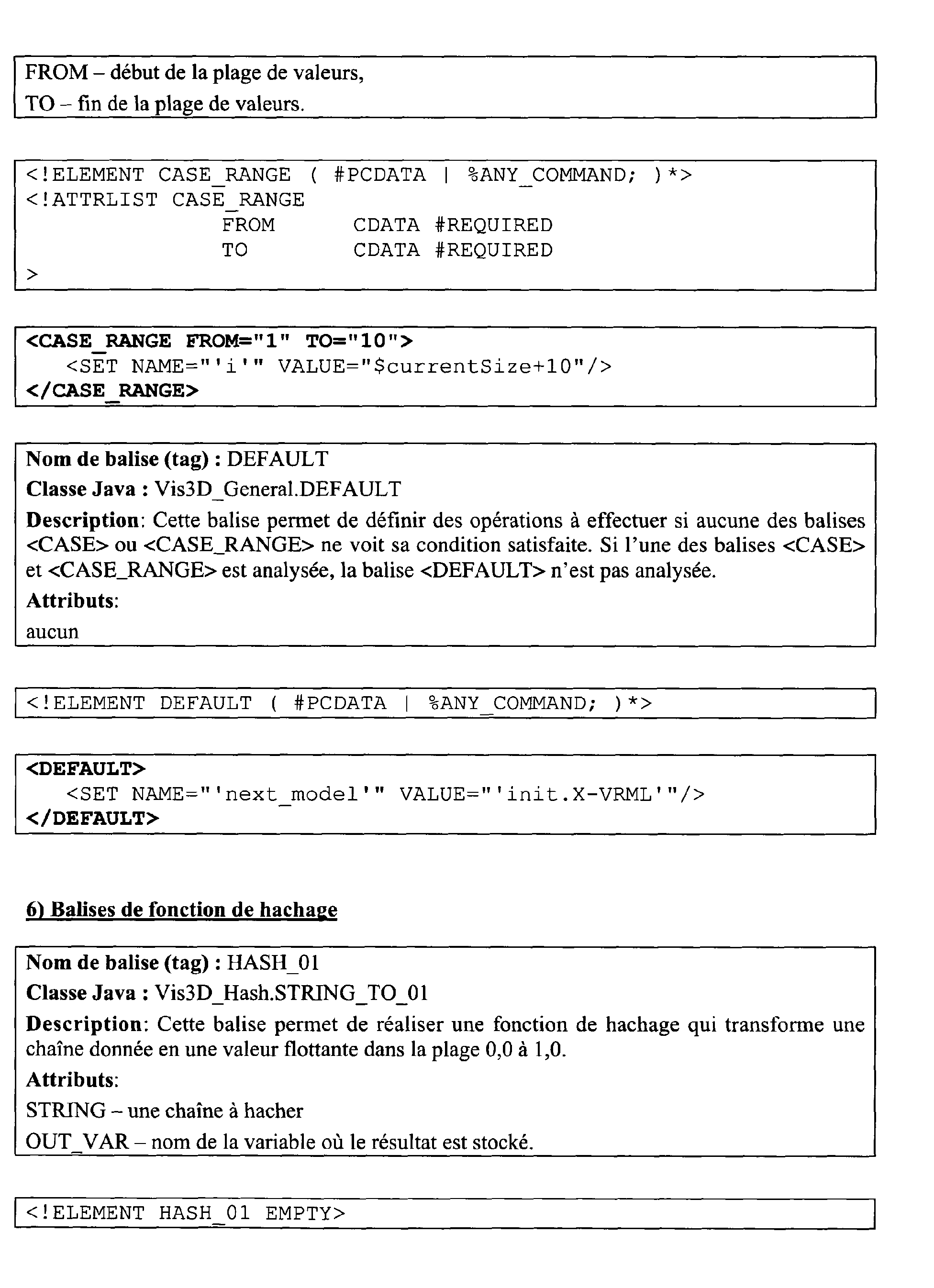

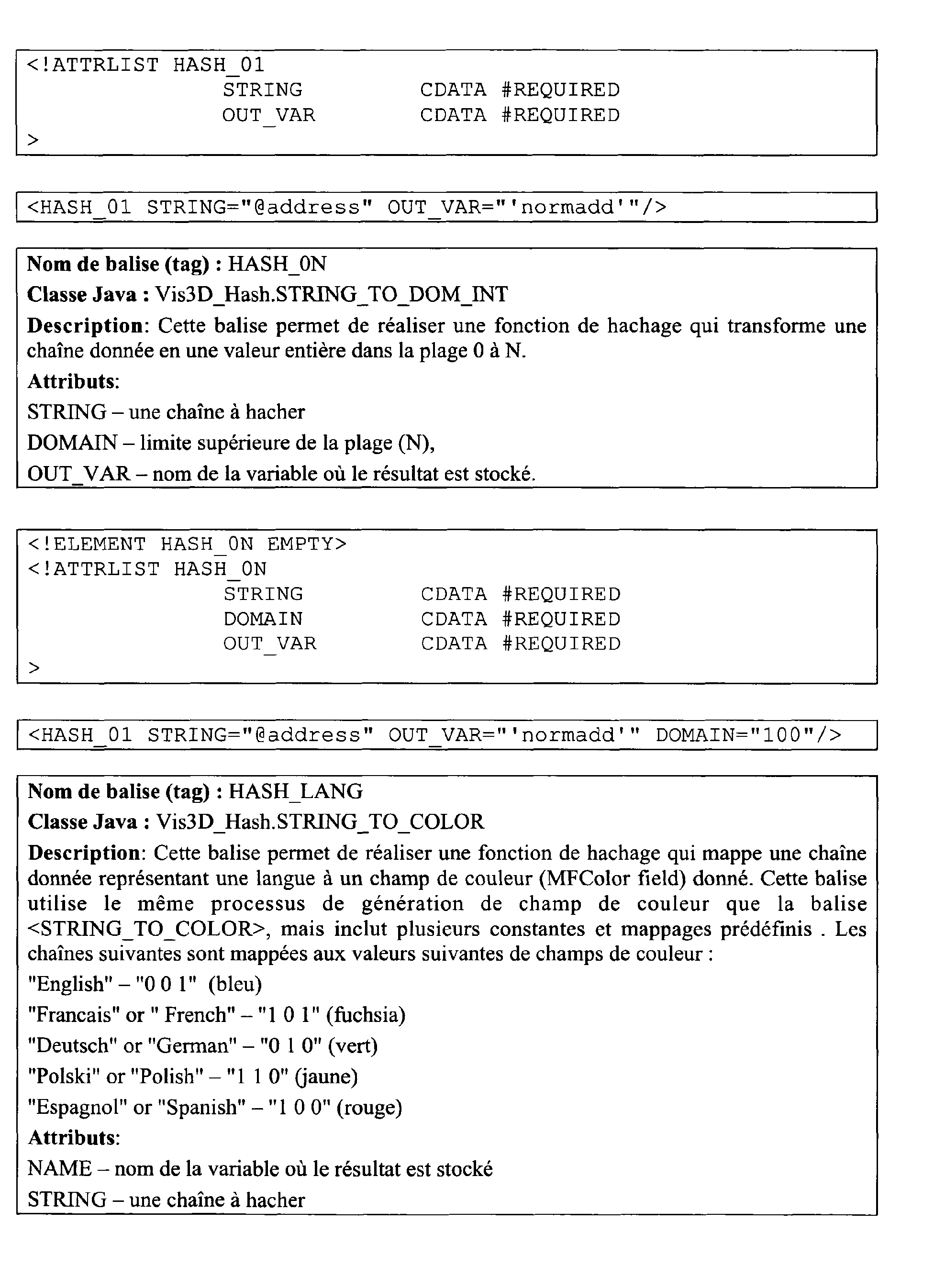

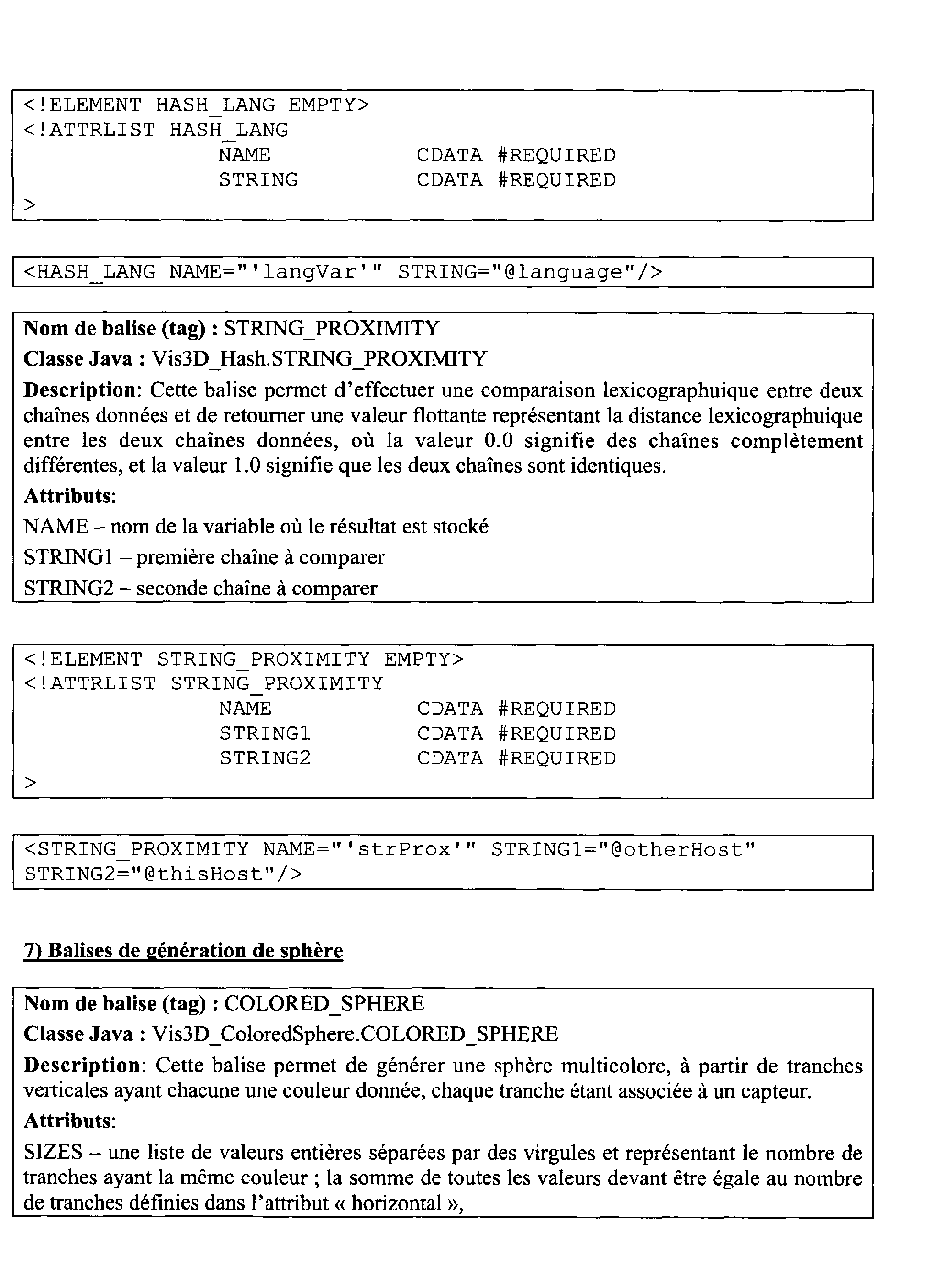

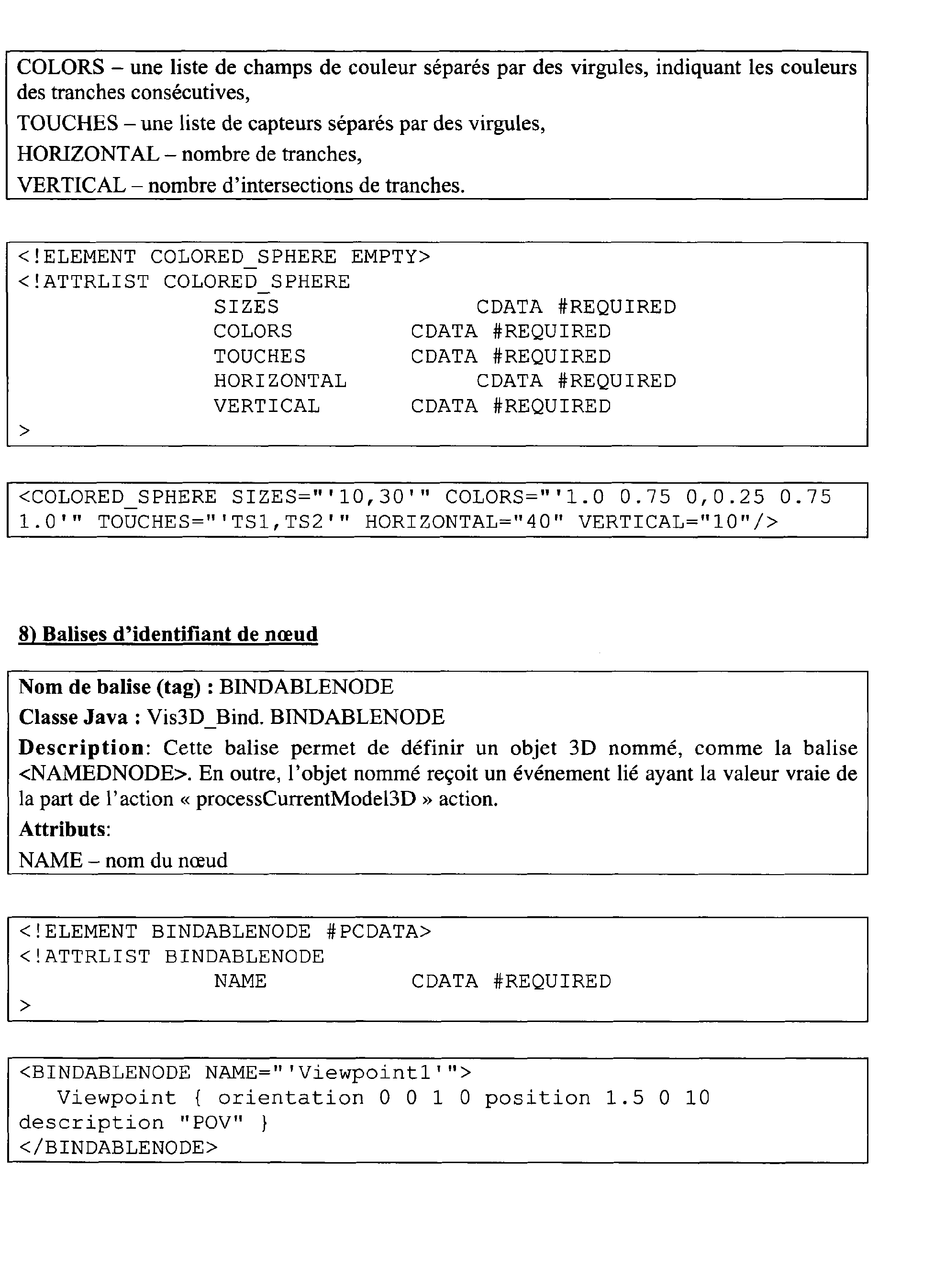

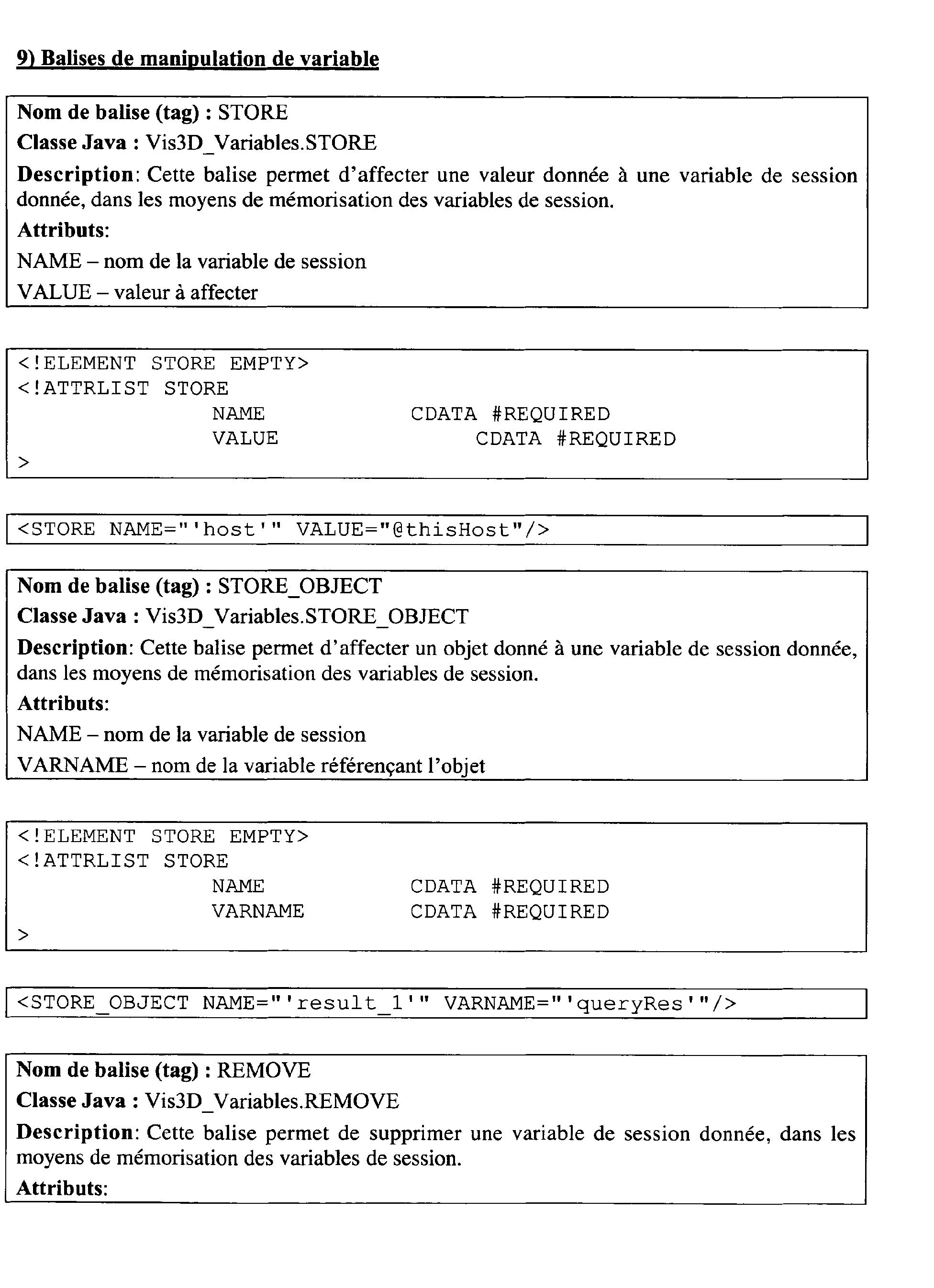

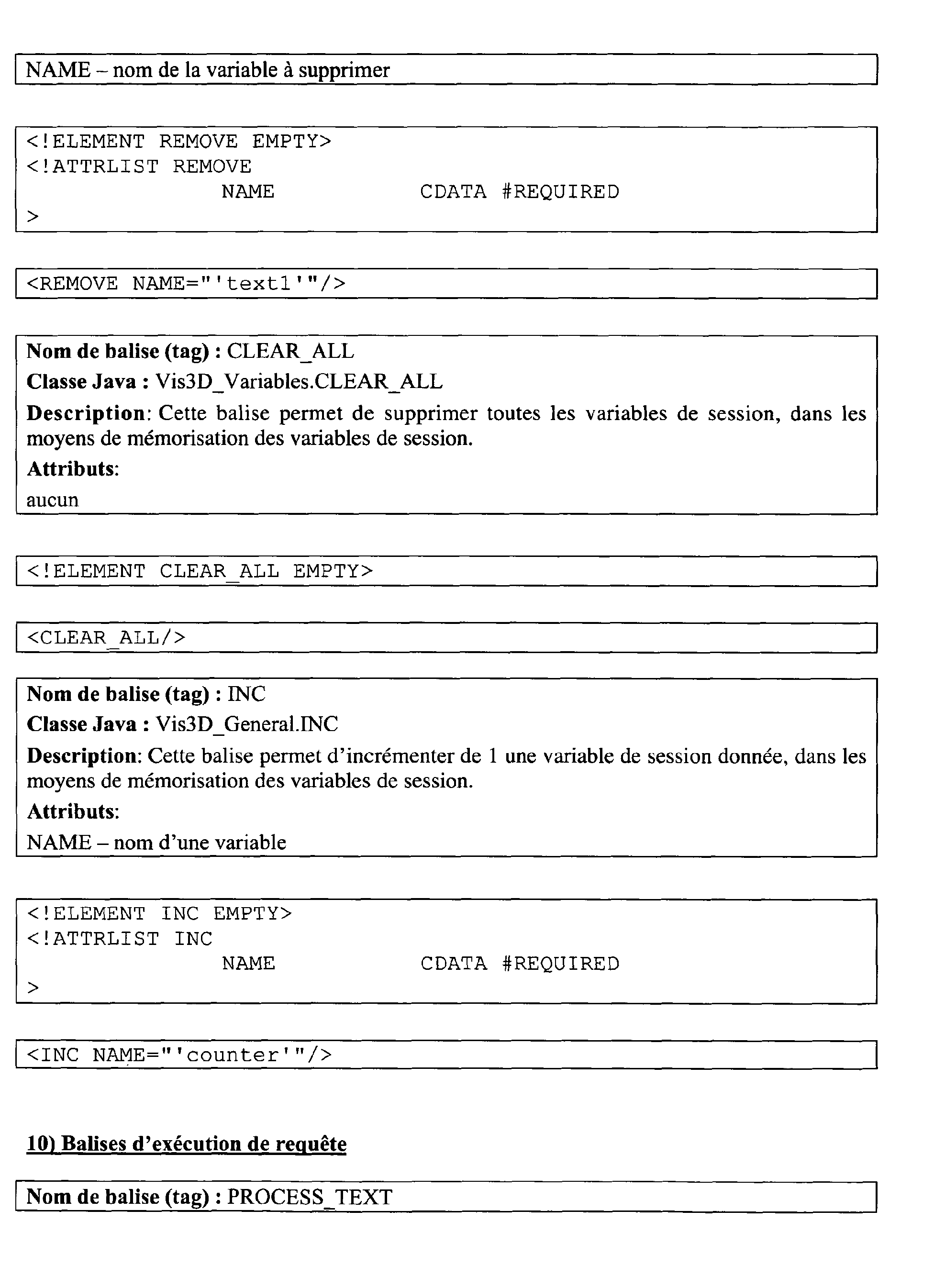

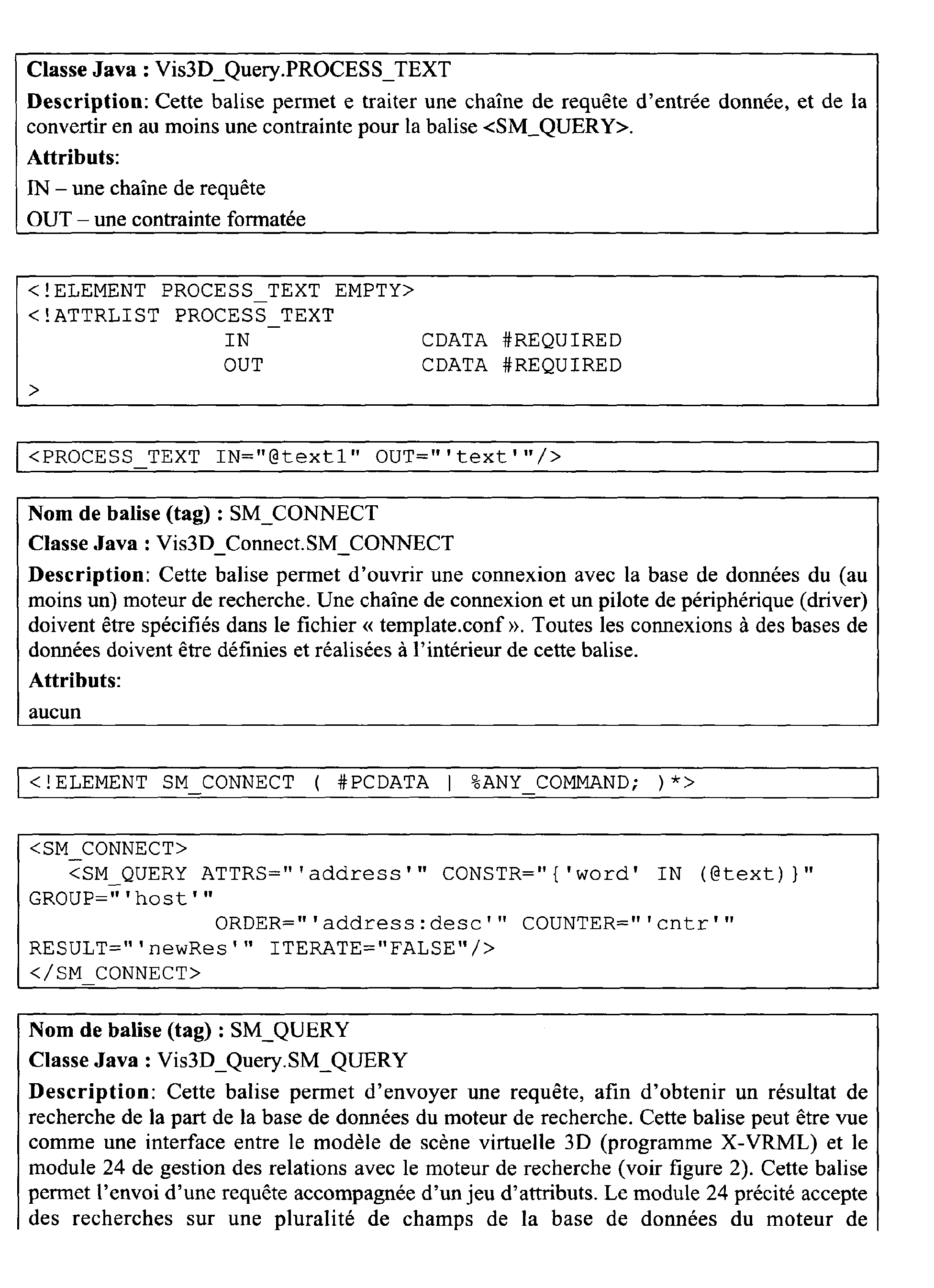

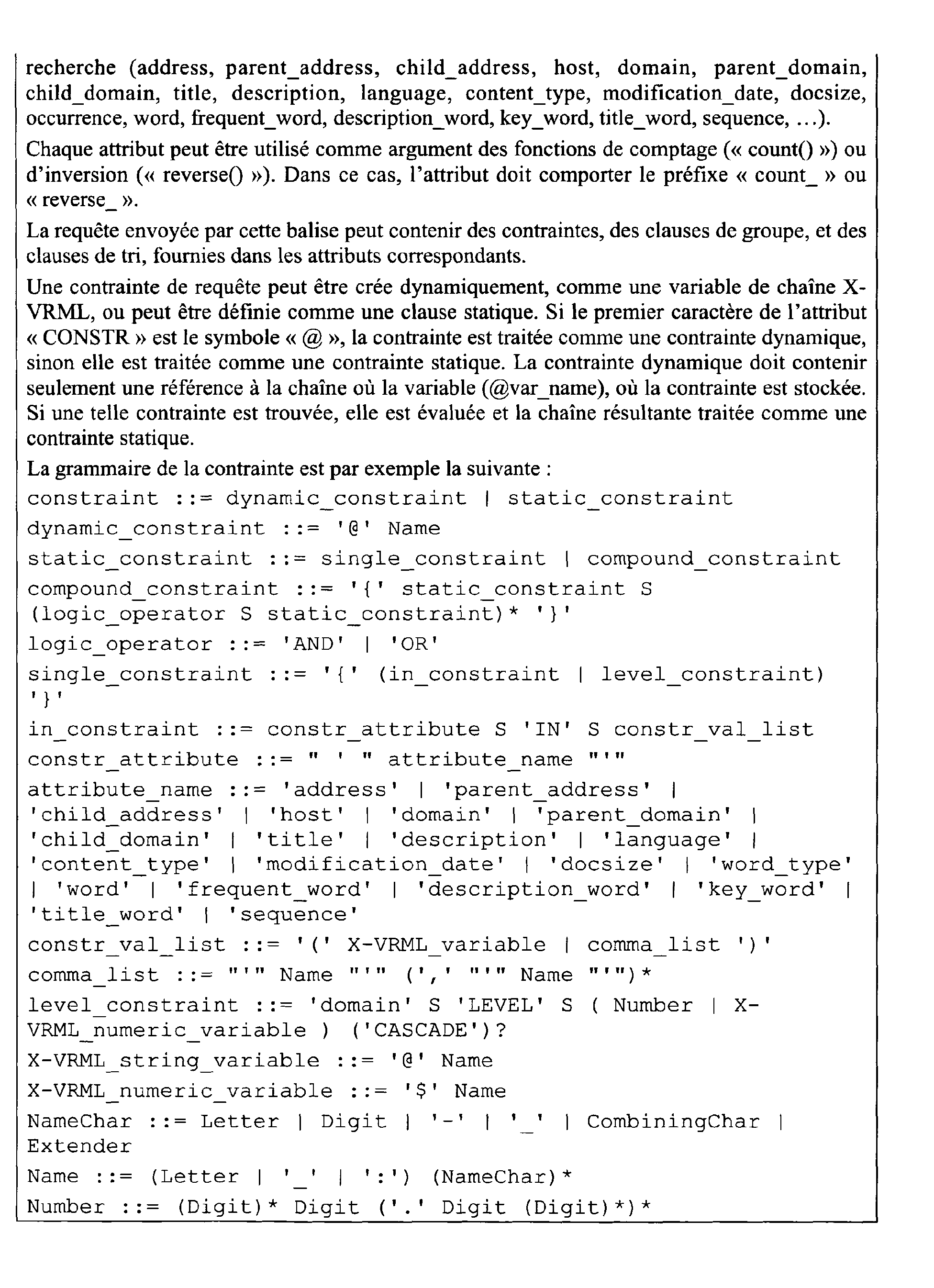

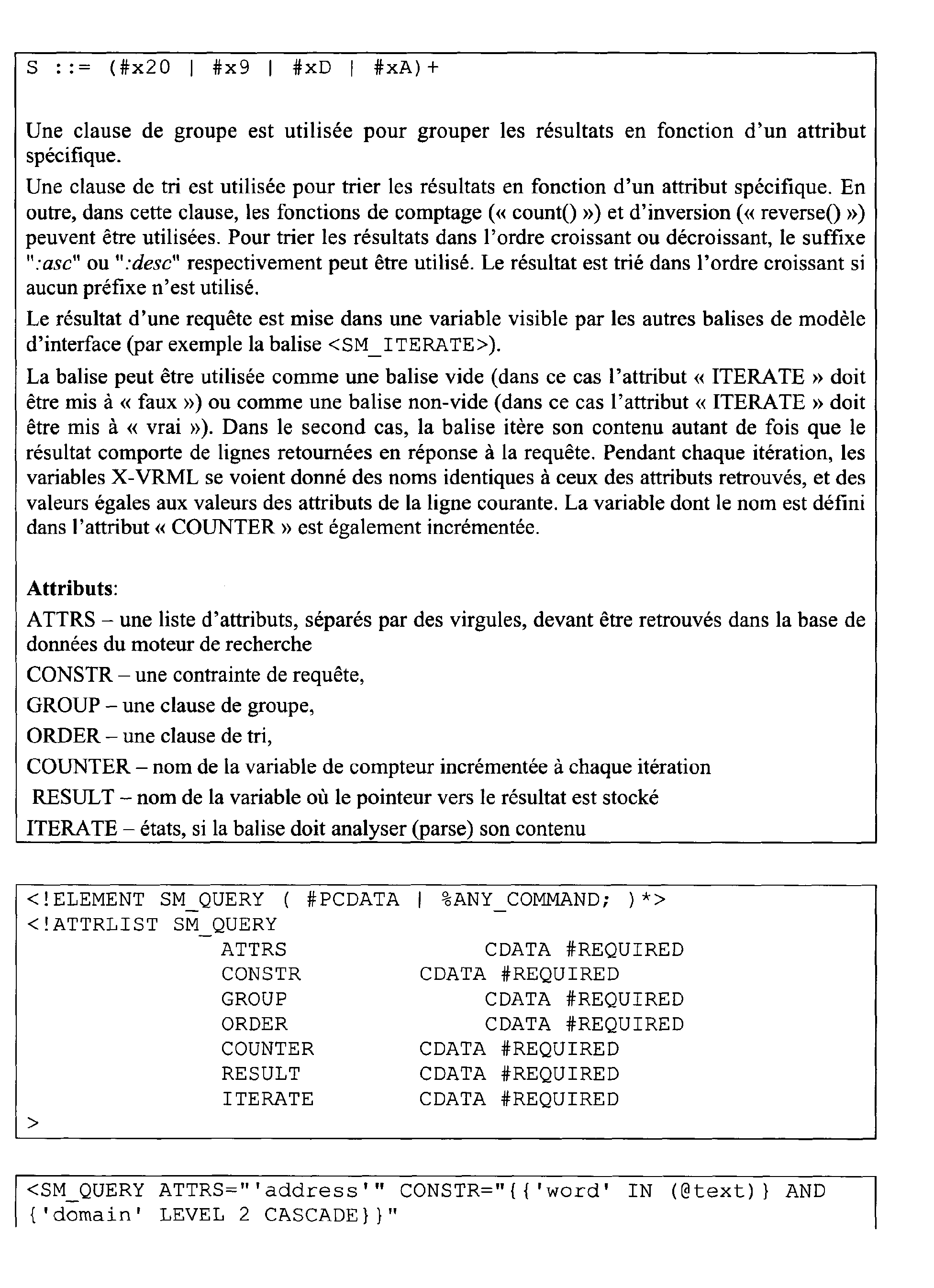

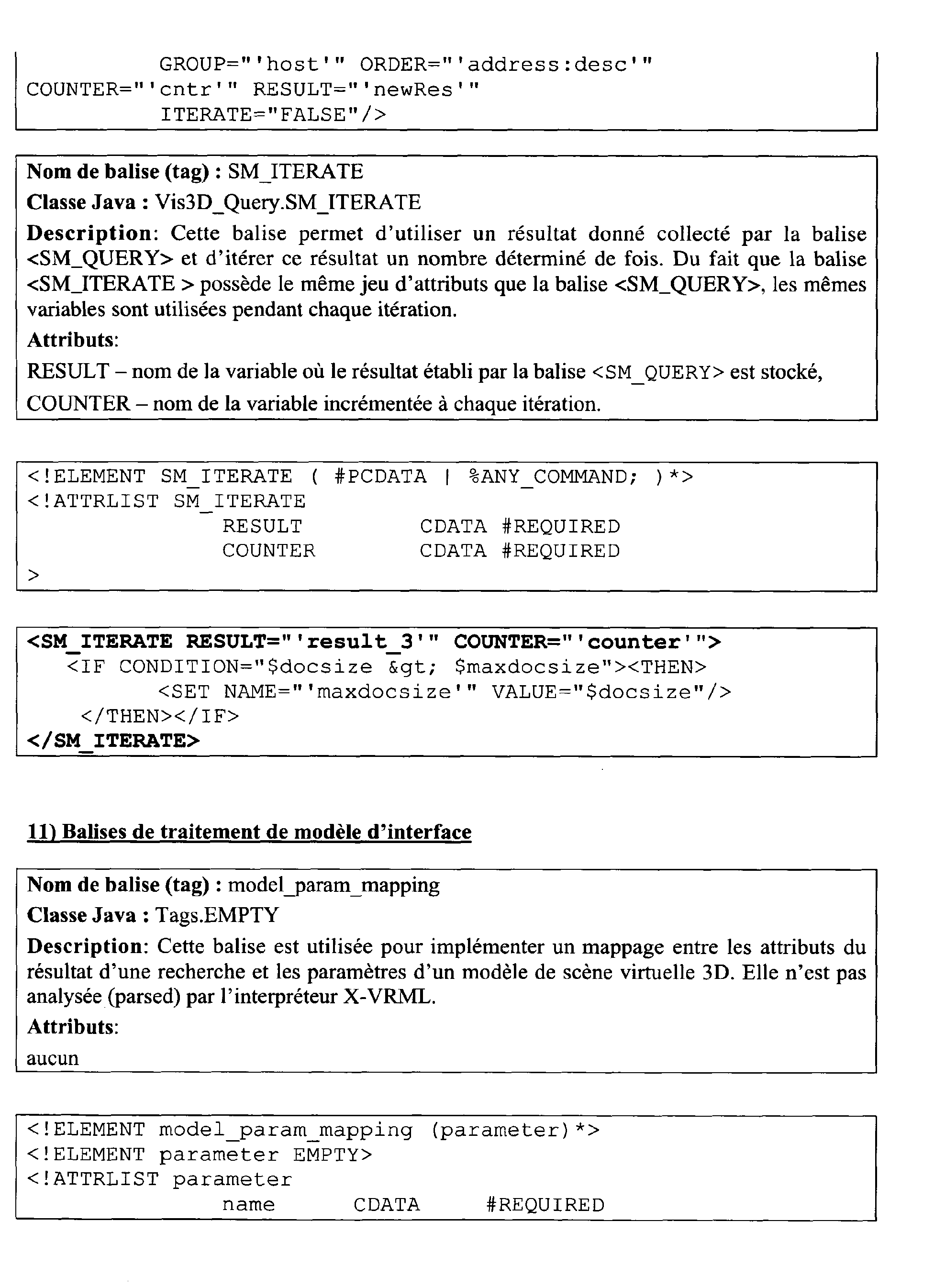

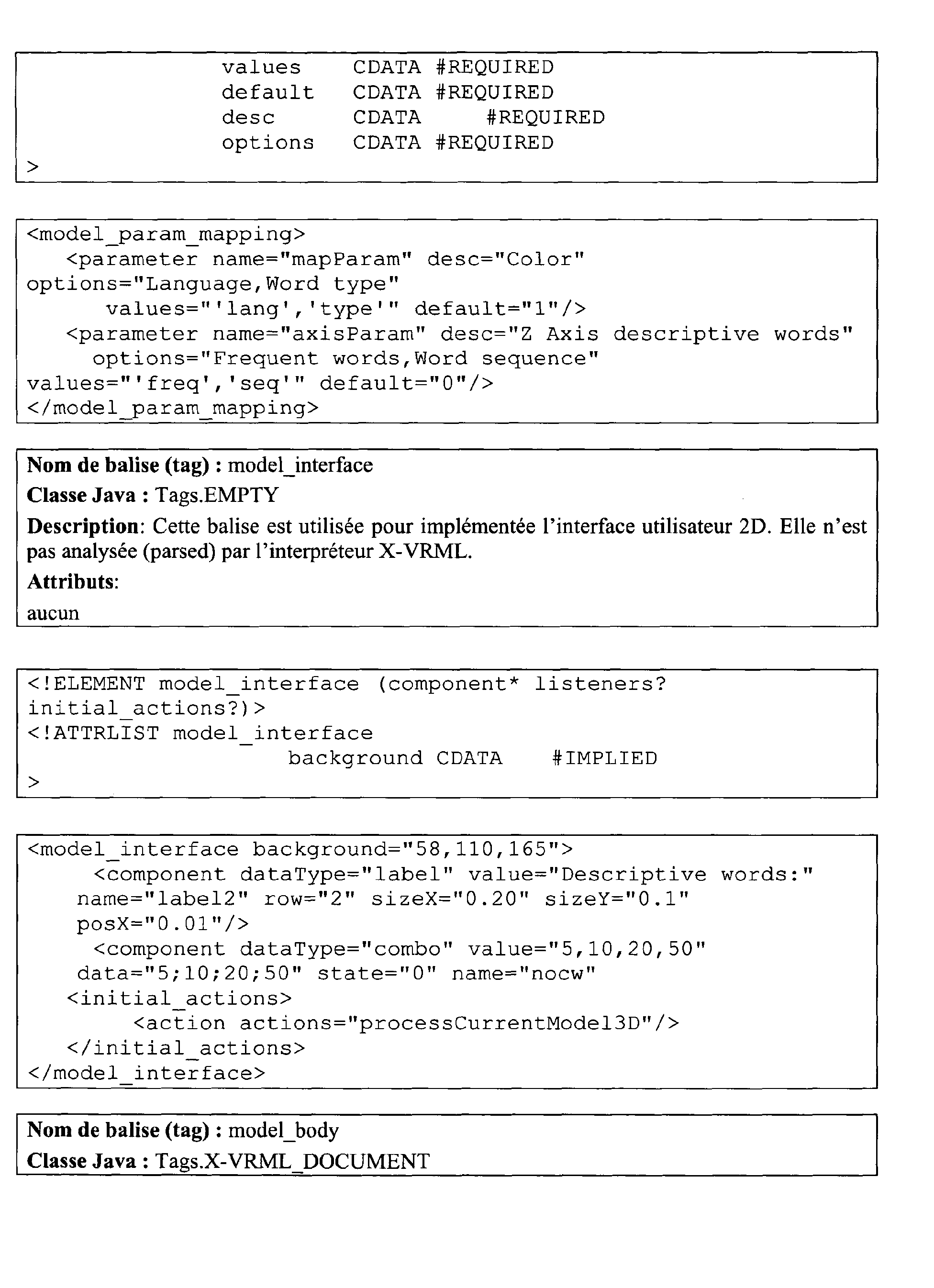

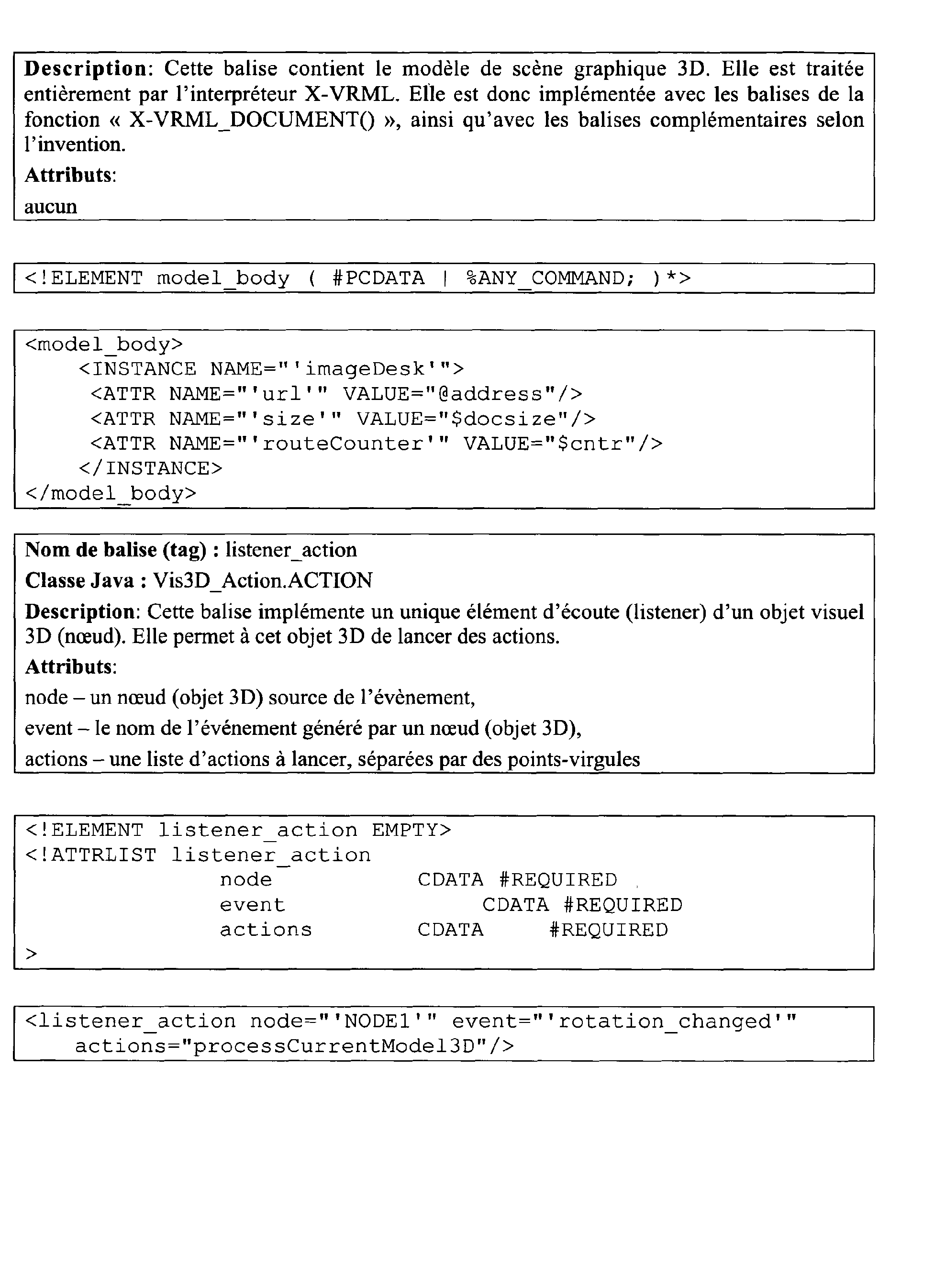

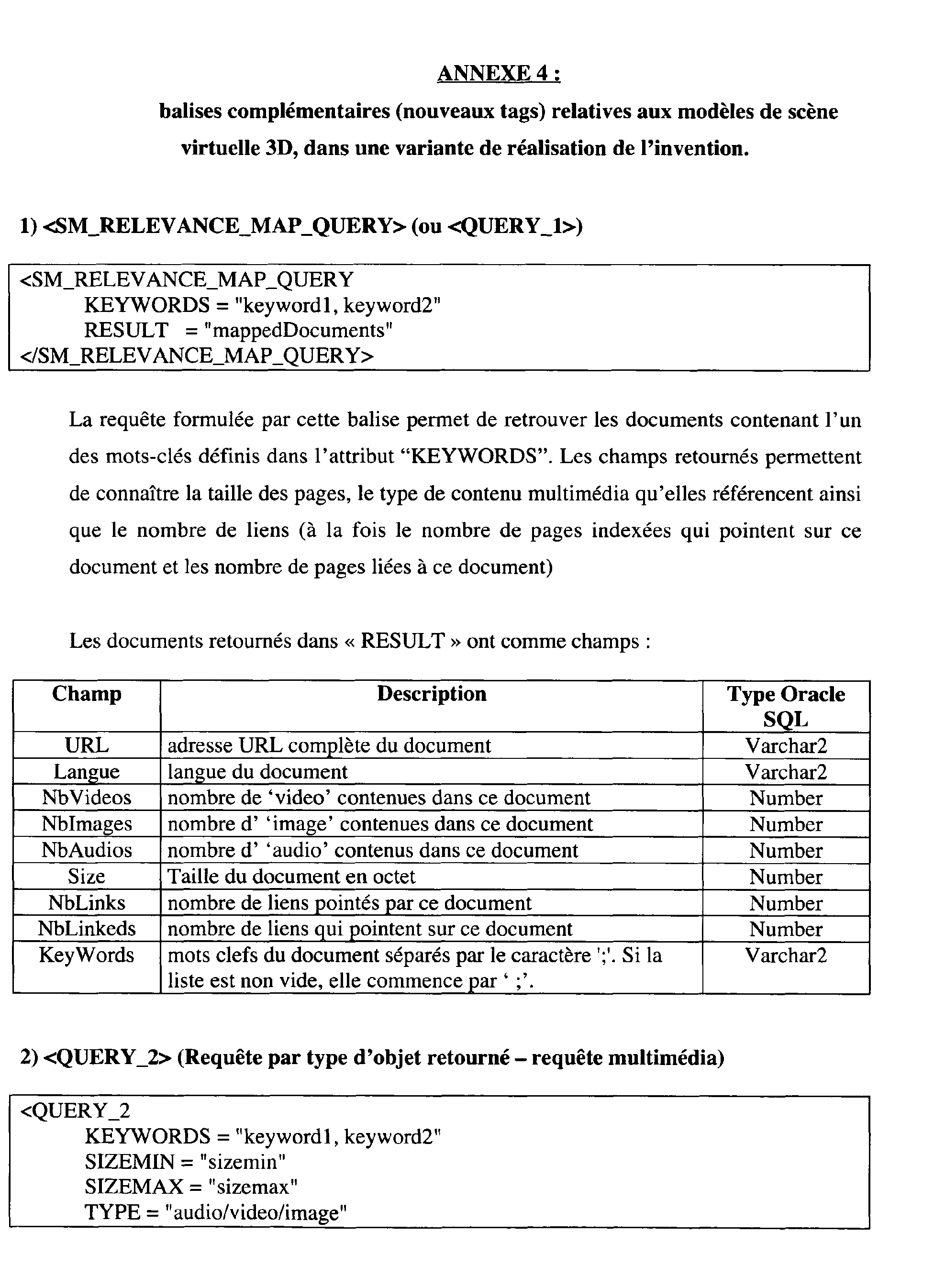

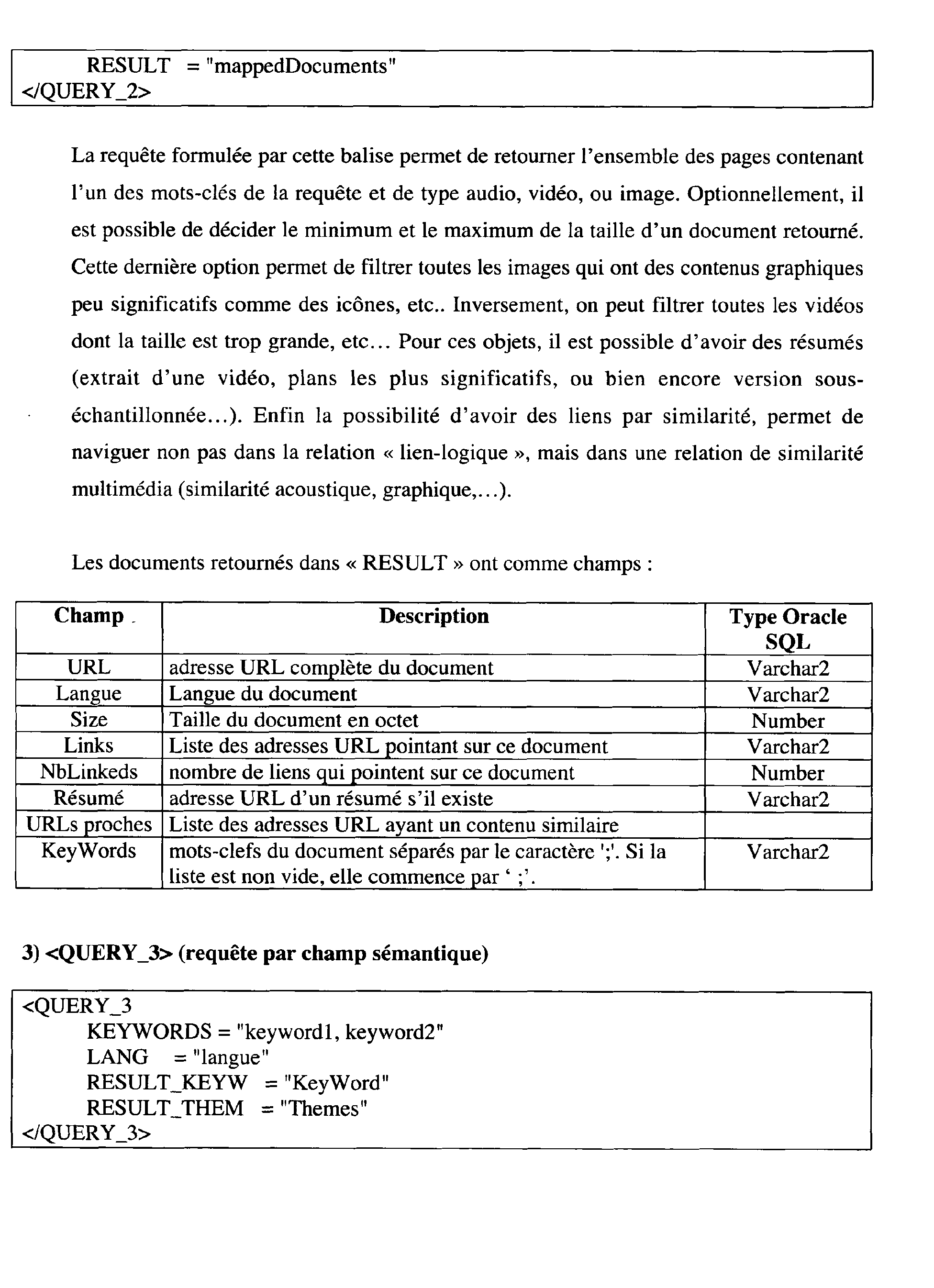

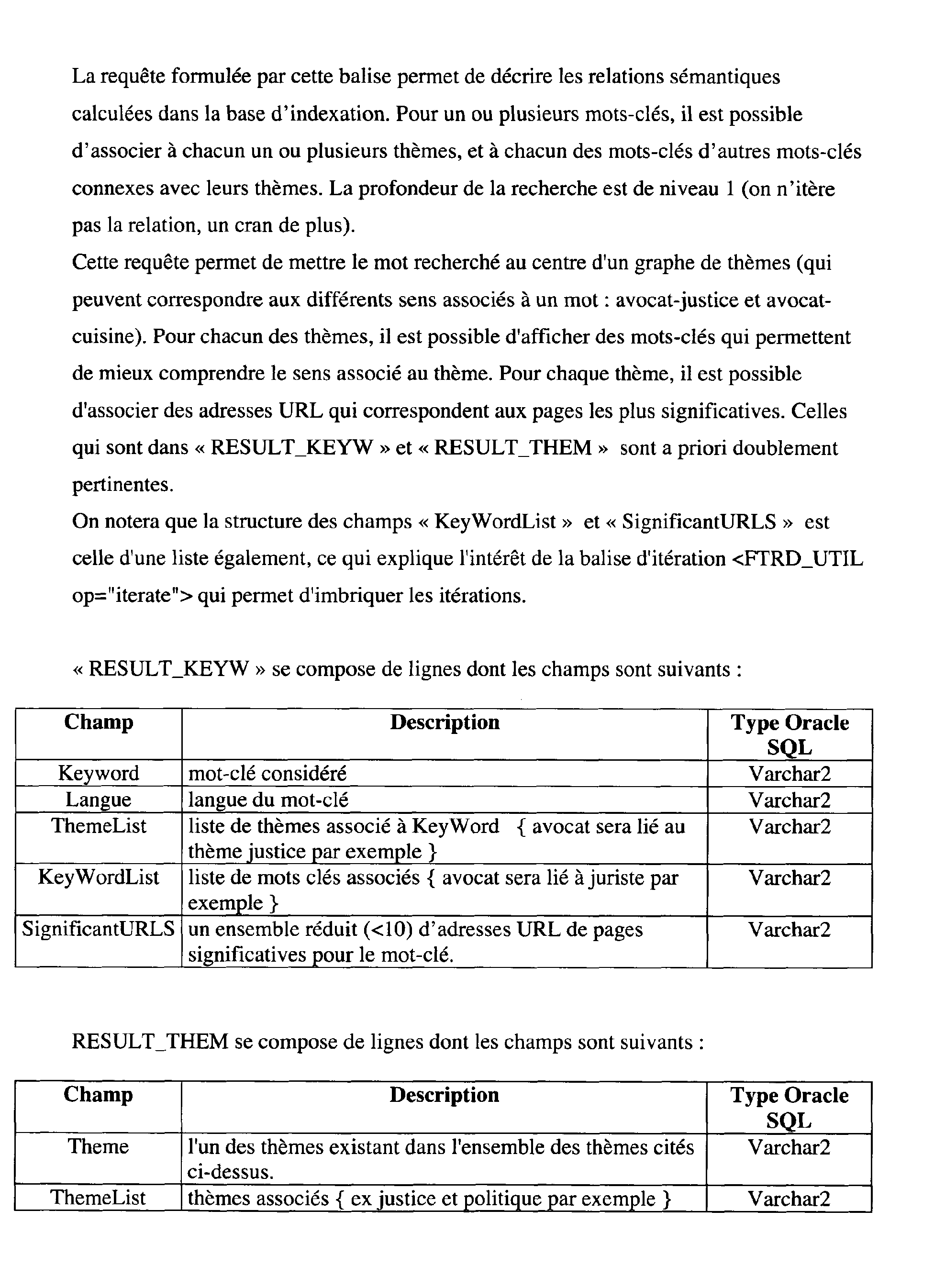

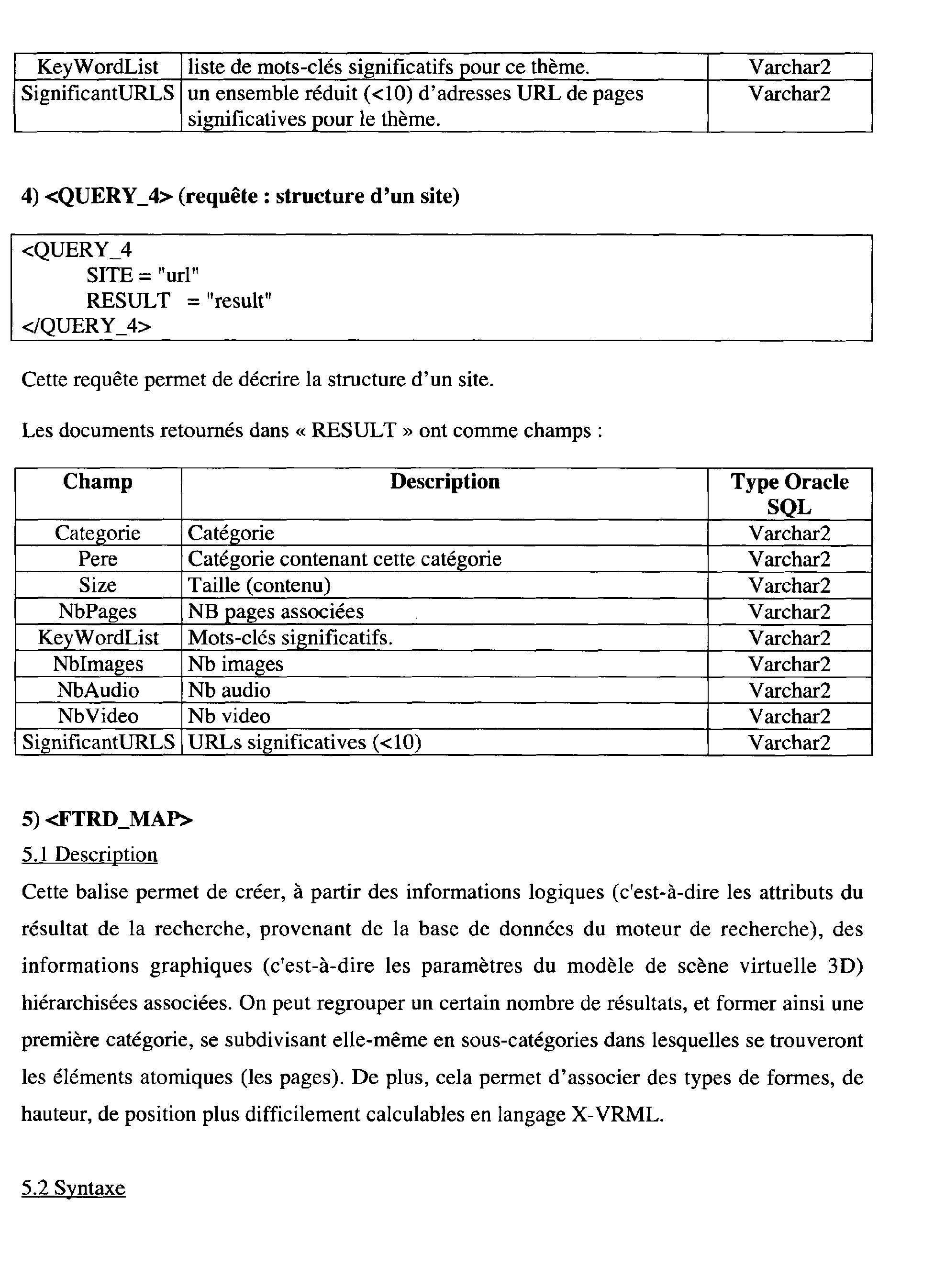

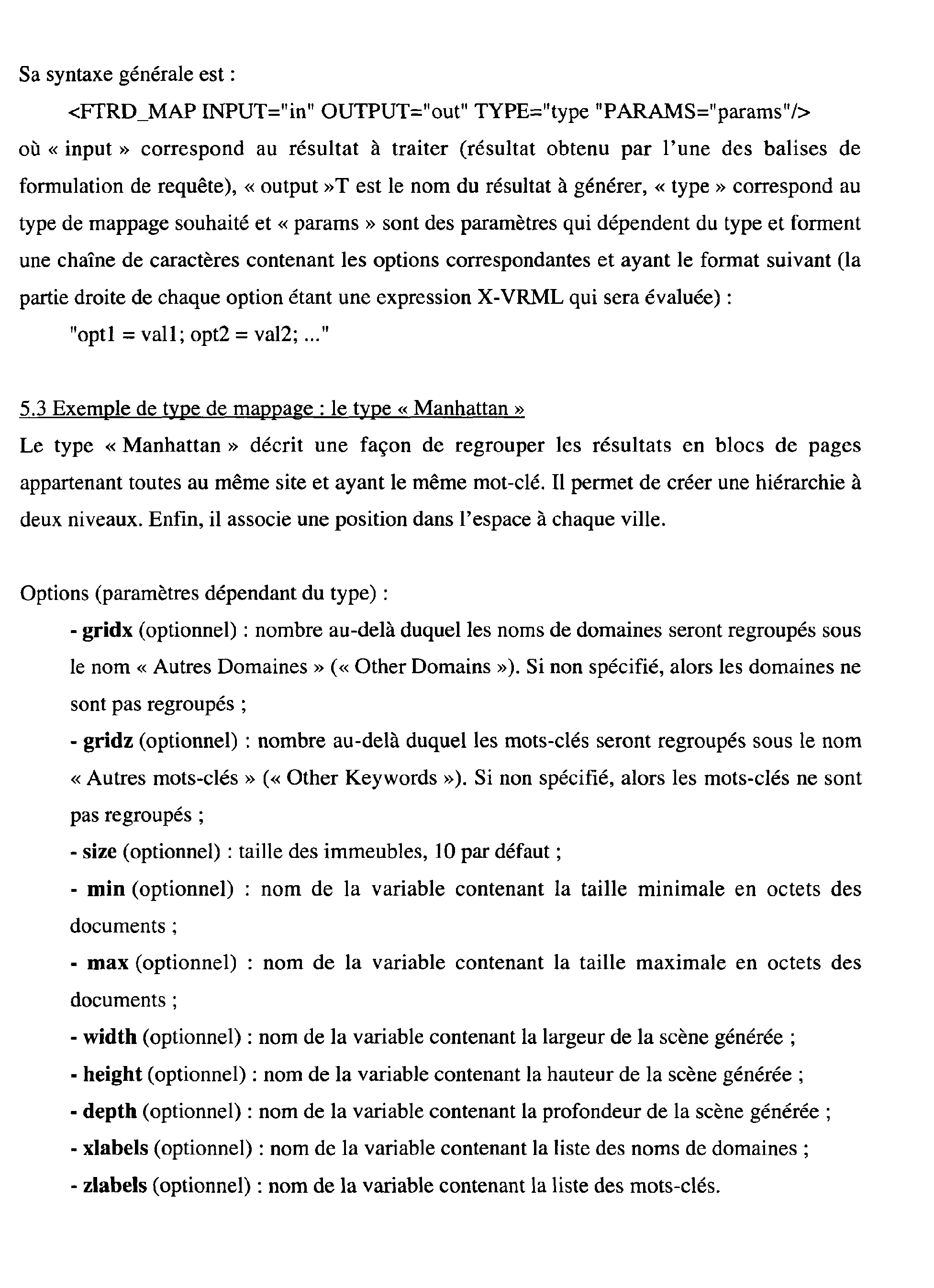

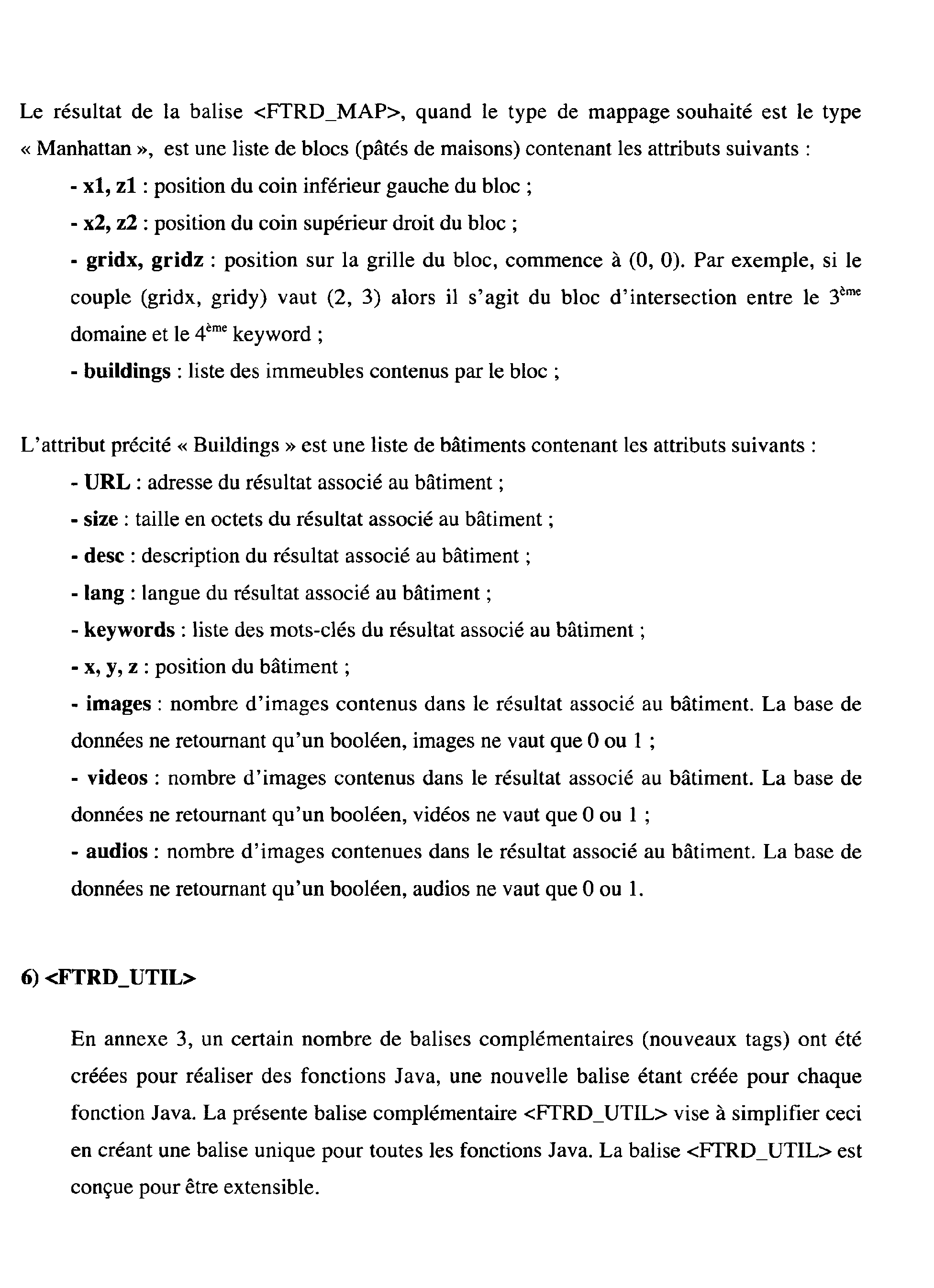

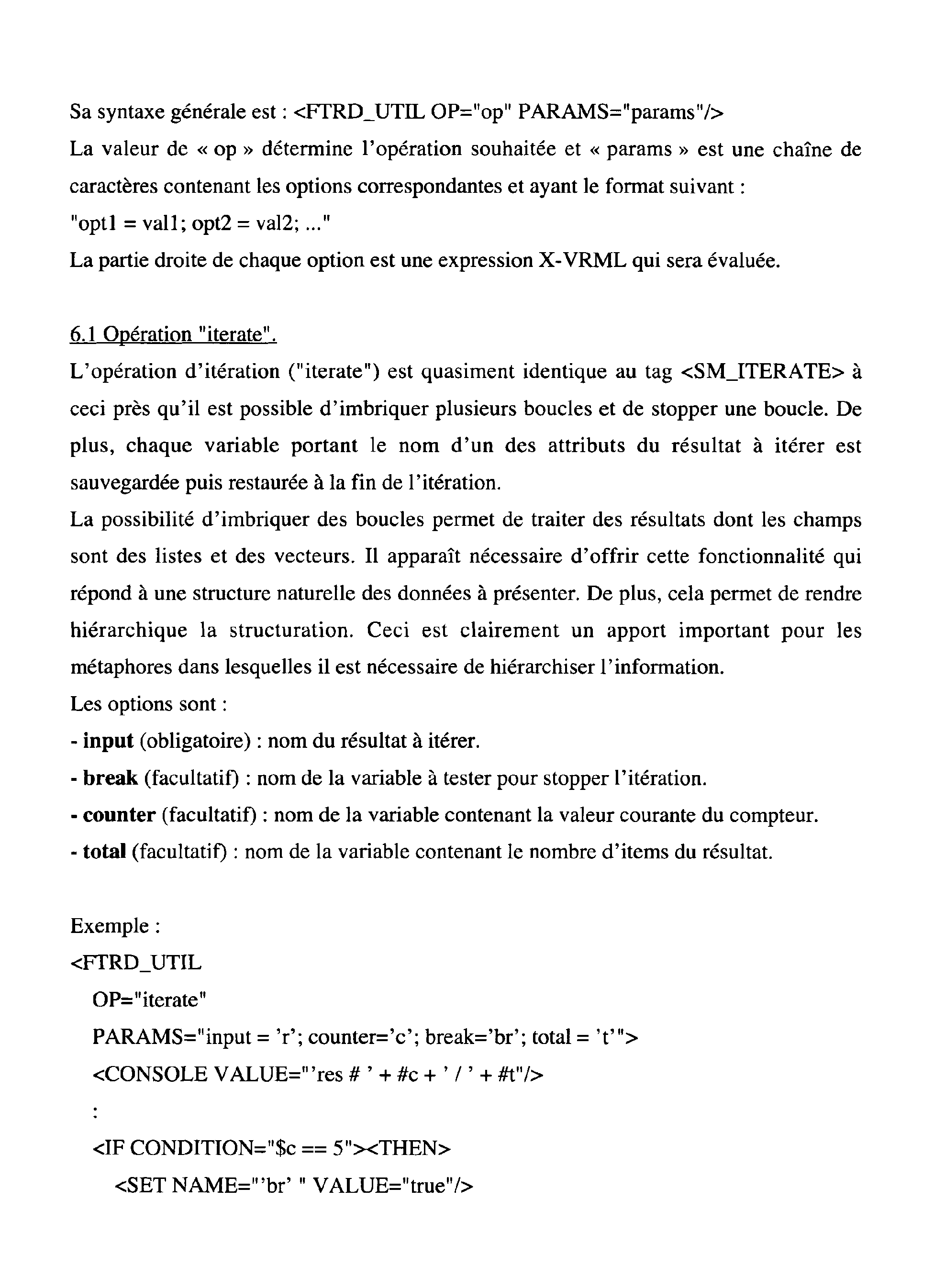

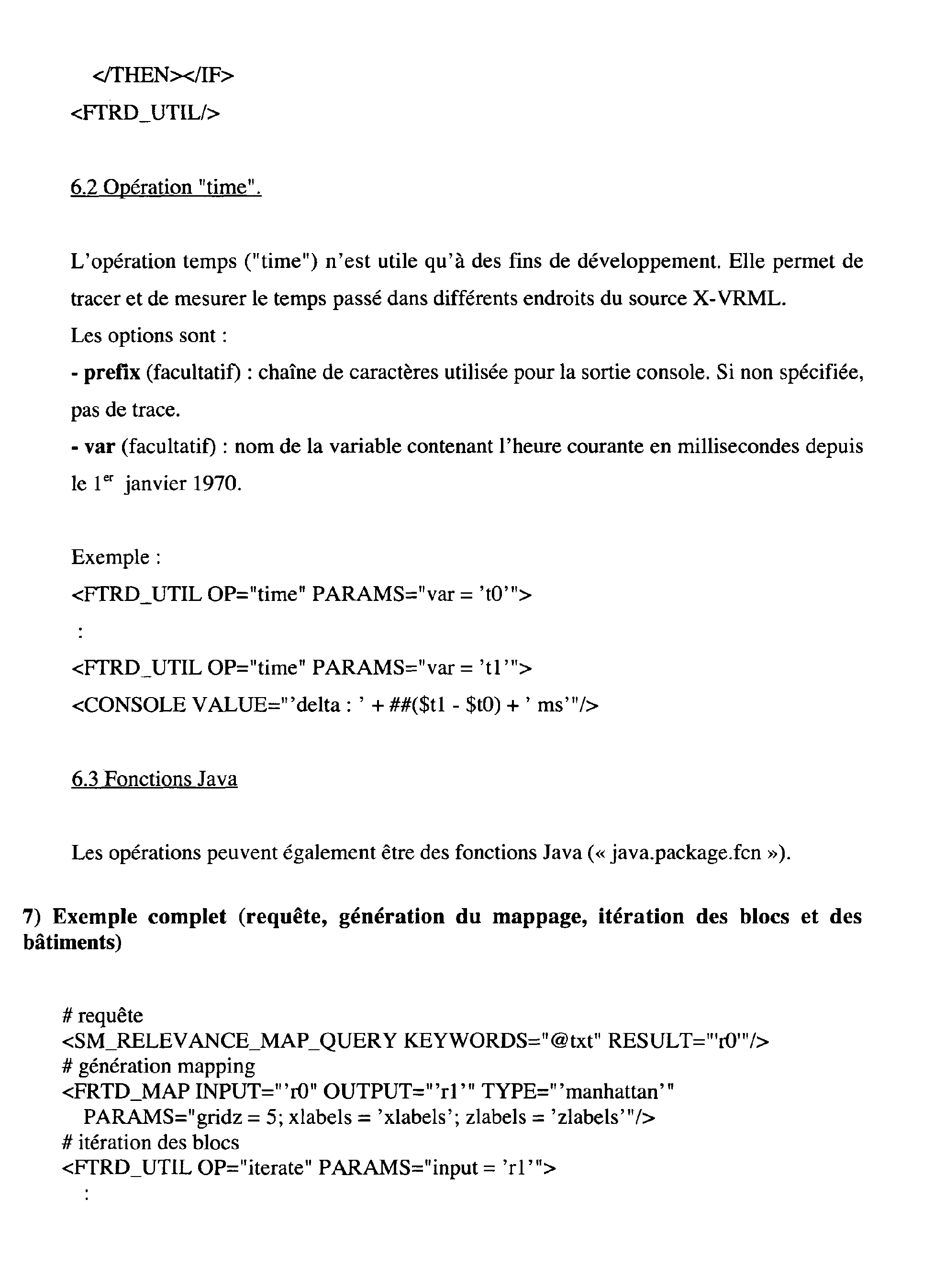

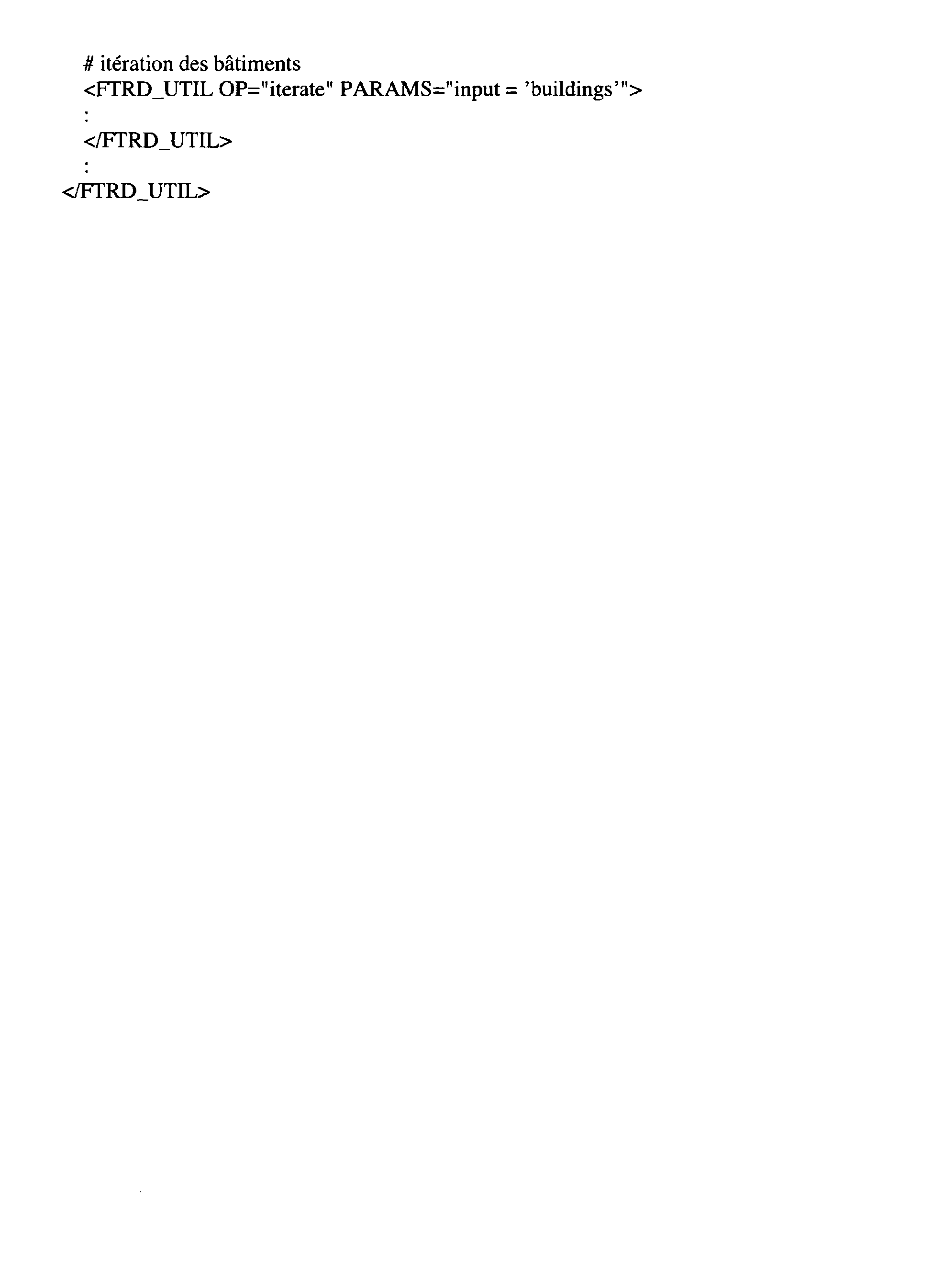

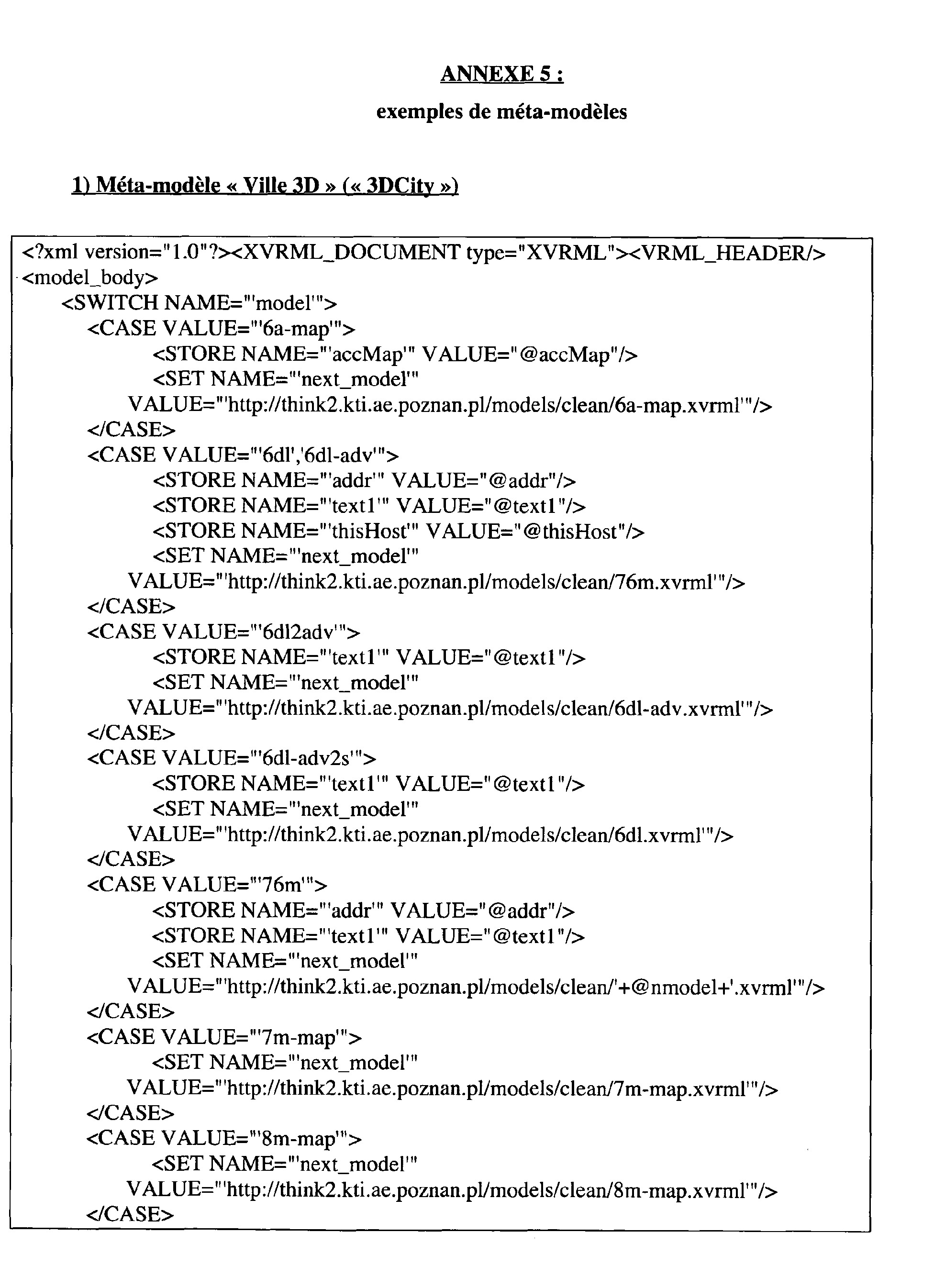

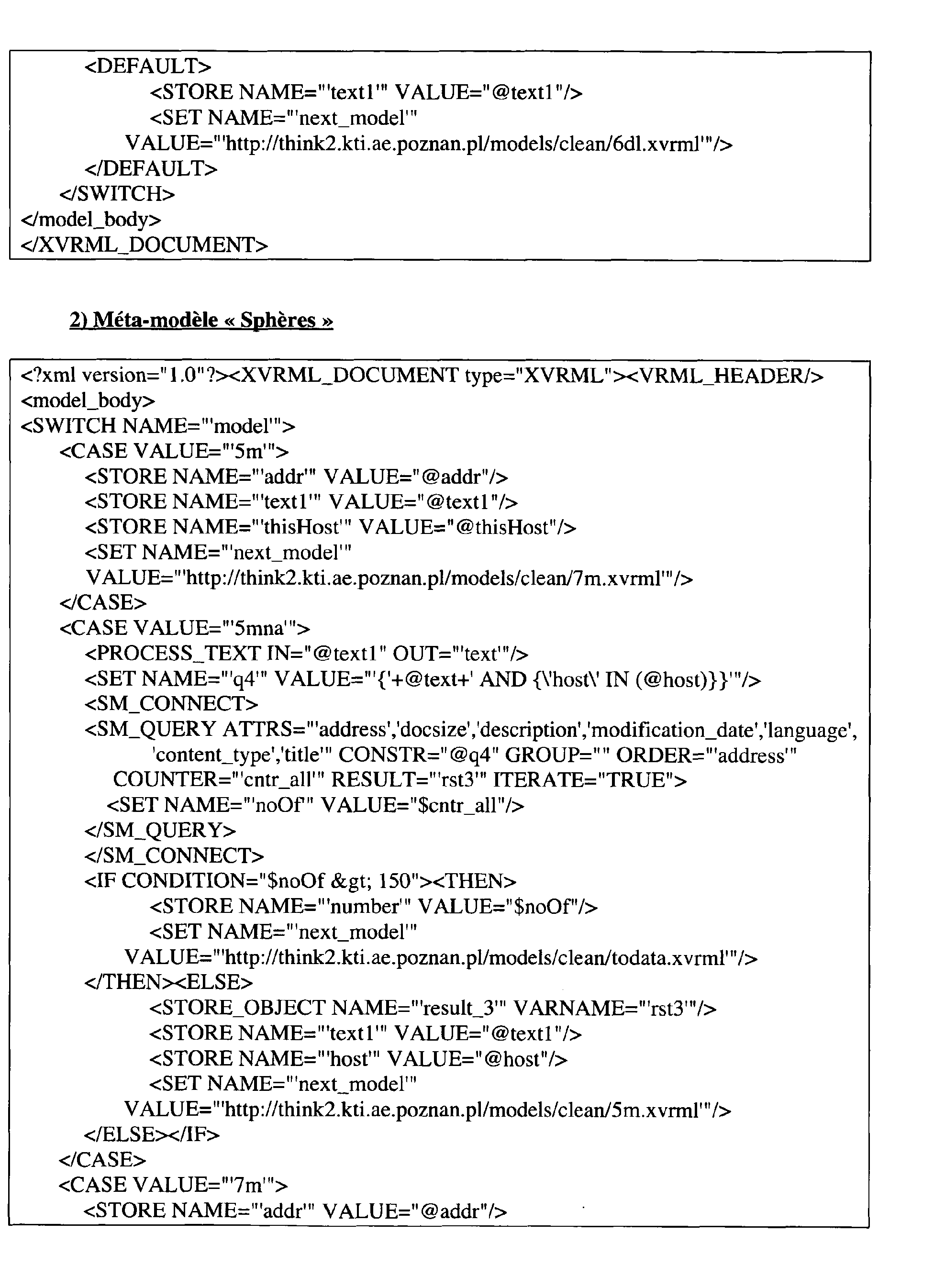

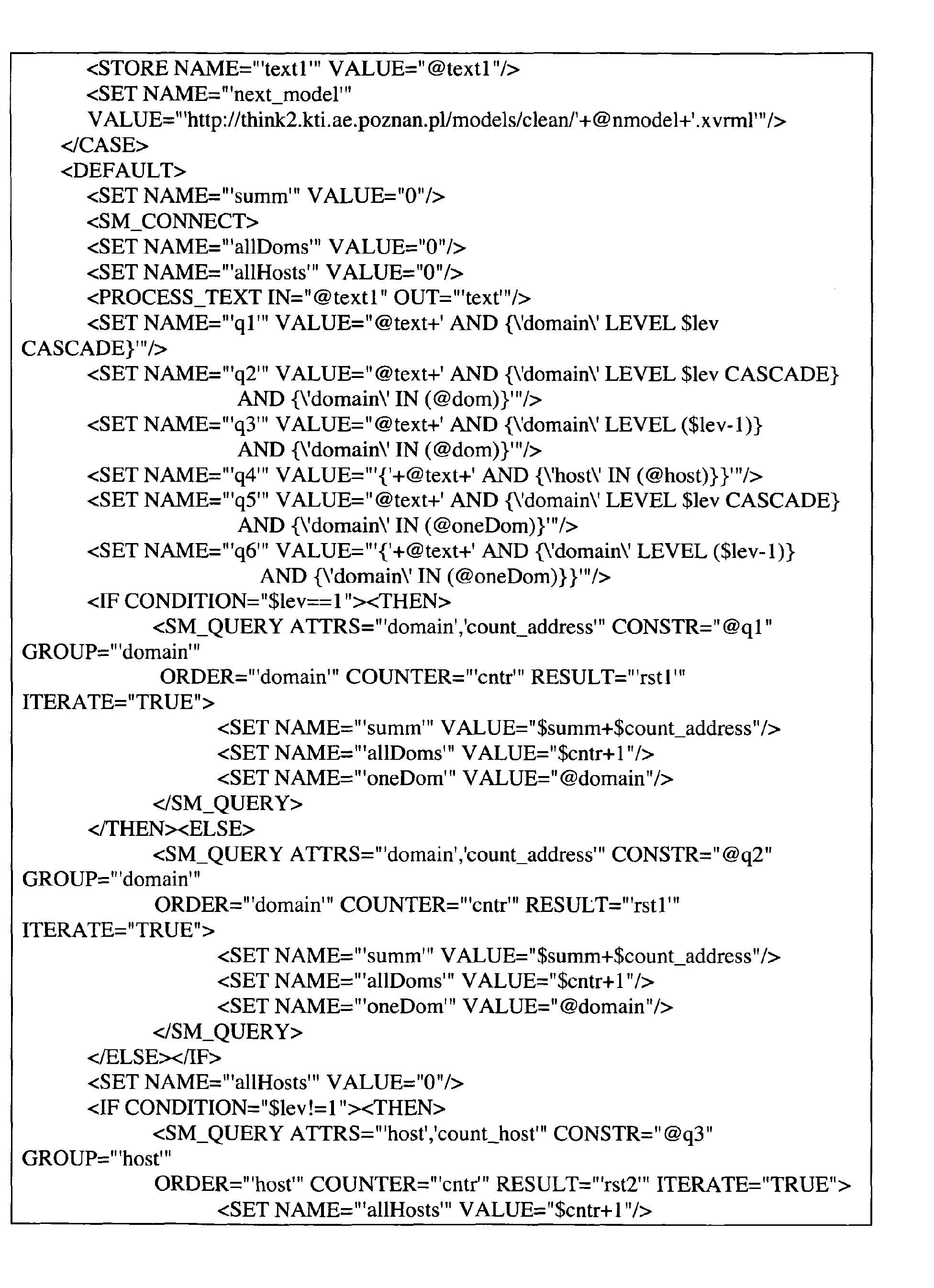

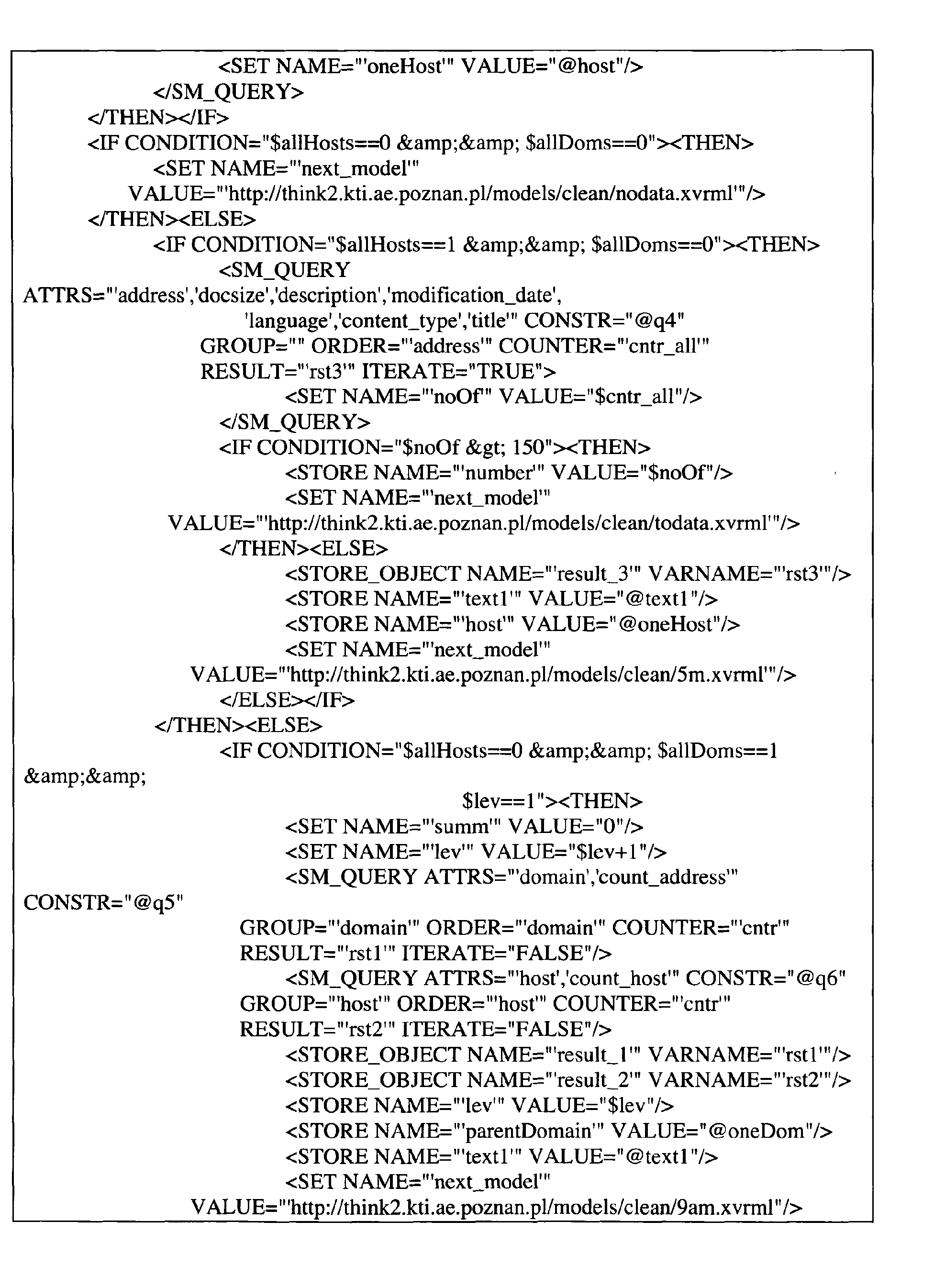

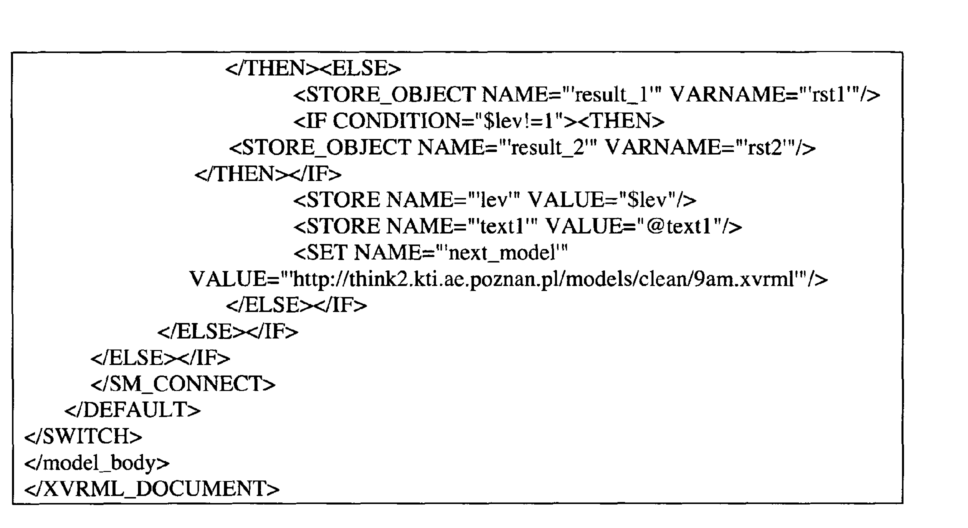

## Revendications

1. Système de traitement et de visualisation des résultats de recherches effectuées par au moins un moteur de recherche à base d'indexation, **caractérisé en ce qu'**il comprend :
- des moyens de gestion d'un ensemble de modèles d'interface, chaque interface de modèle étant associé à un modèle d'interface utilisateur et un modèle de scène virtuelle 3D qui sont liés, chaque modèle de scène virtuelle 3D définissant un mappage particulier entre des paramètres dudit modèle de scène virtuelle 3D et des attributs du résultat d'au moins une recherche, l'ensemble de modèles d'interface comprenant un premier sous-ensemble comprenant au moins deux modèles d'interface dont les modèles de scène virtuelle 3D associés sont distincts et permettent chacun de visualiser la totalité du résultat de la au moins une recherche ;
- des moyens de sélection d'un modèle d'interface, comprenant :
* des moyens de sélection initiale d'un modèle d'interface au sein dudit premier sous-ensemble de modèles d'interface, la sélection initiale étant fonction d'au moins un attribut du résultat de la au moins une recherche et/ou d'au moins une interaction de l'utilisateur avec le système ;
* des moyens de changement du modèle d'interface courant, par sélection d'un modèle d'interface suivant au sein dudit ensemble de modèles d'interface, en fonction d'au moins une interaction de l'utilisateur avec le système et, éventuellement, d'au moins un attribut du résultat de la recherche ;
- des moyens de génération et restitution d'une interface utilisateur, selon le modèle d'interface utilisateur sélectionné par les moyens de sélection ;
- des moyens de génération et restitution d'une scène virtuelle 3D, en fonction du résultat de la au moins une recherche et selon le modèle de scène virtuelle 3D sélectionné par les moyens de sélection, la scène virtuelle 3D restituée permettant à l'utilisateur de visualiser la totalité du résultat de la au moins une recherche.

2. Système selon la revendication 1, **caractérisé en ce que** l'ensemble de modèles d'interface comprend en outre un modèle d'interface, dit modèle d'interface initial, utilisé au moins à l'initialisation du système et permettant à l'utilisateur d'interagir avec le système pour effectuer un choix de modèle d'interface au sein dudit premier sous-ensemble de modèles d'interface,
et **en ce que** les moyens de sélection initiale d'un modèle d'interface effectuent la sélection initiale en fonction du choix de l'utilisateur.

3. Système selon l'une quelconque des revendications 1 et 2, **caractérisé en ce qu'**il comprend des moyens de gestion d'une pluralité de méta-modèles, chaque méta-modèle définissant des changements de modèle d'interface au sein d'un groupe spécifique de modèles d'interface comprenant au moins deux modèles d'interface,
**en ce que** ladite au moins une interaction de l'utilisateur avec le système permet au système de fournir aux moyens de changement du modèle d'interface courant :
- une demande d'exécution d'un méta-modèle donné parmi la pluralité de méta-modèles ;
- au moins une variable passée en paramètre de la demande d'exécution ;
et **en ce que** les moyens de changement du modèle d'interface courant effectuent la sélection du modèle d'interface suivant selon le méta-modèle donné et en fonction de ladite au moins une variable passée en paramètre de la demande d'exécution du méta-modèle donné.

4. Système selon la revendication 3, **caractérisé en ce qu'**au moins un changement de modèle d'interface courant est défini, dans au moins un des méta-modèles, par un mécanisme de routes statiques, dans lequel le choix d'une route statique donnée entre le modèle d'interface courant et un modèle d'interface suivant possible dépend uniquement de la valeur particulière de ladite au moins une variable passée en paramètre de la demande d'exécution du méta-modèle.

5. Système selon la revendication 3, **caractérisé en ce qu'**au moins un changement de modèle d'interface courant est défini, dans au moins un des méta-modèles, par un mécanisme de routes dynamiques, dans lequel le choix d'une route dynamique donnée entre le modèle d'interface courant et un modèle d'interface suivant possible dépend :
- de la valeur particulière de ladite au moins une variable passée en paramètre de la demande d'exécution du méta-modèle ; et
- d'informations obtenues dynamiquement par au moins un calcul algorithmique et/ou une recherche complémentaire effectuée par ledit au moins un moteur de recherche à base d'indexation.

6. Système selon l'une quelconque des revendications 1 à 5, **caractérisé en ce qu'**au moins certains des modèles d'interface utilisateur définissent au moins un des boutons de navigation appartenant au groupe comprenant :
- un bouton « précédent », permettant à l'utilisateur de demander au système d'utiliser le modèle d'interface précédent à la place du modèle d'interface courant ;
- un bouton « suivant », permettant à l'utilisateur de demander au système d'utiliser un modèle d'interface suivant à la place du modèle d'interface courant;
- un bouton « initial », permettant à l'utilisateur de demander au système d'utiliser le modèle d'interface initial à la place du modèle d'interface courant ;
- un bouton « aide », permettant à l'utilisateur de demander au système d'utiliser un modèle d'interface d'aide à la place du modèle d'interface courant.

7. Système selon l'une quelconque des revendications 1 à 6, comprenant des moyens de gestion des échanges avec ledit au moins un moteur de recherche à base d'indexation, permettant de transmettre une requête de recherche et recevoir le résultat de la recherche,
**caractérisé en ce que**, à chaque sélection d'un modèle d'interface suivant, les moyens de gestion des échanges transmettent au moins une requête de recherche spécifique audit modèle d'interface suivant, de façon que la scène virtuelle 3D restituée soit fonction du résultat de ladite au moins une requête de recherche spécifique au modèle d'interface suivant.

8. Système selon l'une quelconque des revendications 1 à 6, comprenant des moyens de gestion des échanges avec ledit au moins un moteur de recherche à base d'indexation, permettant de transmettre une requête de recherche et recevoir le résultat de la recherche,
**caractérisé en ce qu'**il comprend des moyens de stockage d'au moins certains des résultats de recherches déjà effectuées,
et **en ce que**, à chaque sélection d'un modèle d'interface suivant, les moyens de gestion des échanges :
- recherchent dans les moyens de stockage le résultat d'au moins une requête de recherche spécifique audit modèle d'interface suivant,
- transmettent ladite au moins une requête de recherche spécifique audit modèle d'interface suivant, seulement si le résultat correspondant n'a pas été trouvé dans les moyens de stockage,
de façon que la scène virtuelle 3D restituée soit fonction du résultat de ladite au moins une requête de recherche spécifique au modèle d'interface suivant.

9. Système selon la revendication 8, **caractérisé en ce que** les moyens de stockage d'au moins certains des résultats de recherches déjà effectuées comprennent des moyens de mise en oeuvre d'un mécanisme de cache de requêtes de recherche et résultats de recherches déjà effectuées.

10. Système selon la revendication 8, **caractérisé en ce que** les moyens de stockage d'au moins certains des résultats de recherches déjà effectuées comprennent une base de données intermédiaire.

11. Système selon l'une quelconque des revendications 1 à 10, **caractérisé en ce qu'**au moins un des modèles d'interface utilisateur permet à l'utilisateur de modifier le mappage des attributs du résultat d'une recherche aux paramètres du modèle de scène virtuelle 3D lié audit modèle d'interface d'utilisateur.

12. Système selon l'une quelconque des revendications 1 à 11, **caractérisé en ce que** les modèles d'interface sont écrits au moins en partie dans un langage X-VRML complété, comprenant des balises standard du langage X-VRML et des balises complémentaires,
et **en ce que** le système comprend au moins un interpréteur du langage X-VRML complété.

13. Système selon la revendication 12, **caractérisé en ce que** les modèles de scène virtuelle 3D et les modèles d'interface sont écrits au moins en partie dans le langage X-VRML complété.

14. Système selon la revendication 12, **caractérisé en ce que** les modèles de scène virtuelle 3D sont écrits au moins en partie dans le langage X-VRML complété,
**en ce que** les modèles d'interface sont écrits au moins en partie dans un langage de type "markup" autre que le langage X-VRML complété (préférentiellement le langage HTML),
et **en ce que** chaque modèle d'interface définit un mécanisme de gestion des échanges, par au moins une passerelle inter langage, entre le modèle de scène virtuelle 3D et le modèle d'interface associés audit modèle d'interface.

15. Système selon la revendication 3 et l'une quelconque des revendications 12 à 14,
**caractérisé en ce que** les méta-modèles sont écrits au moins en partie dans le langage X-VRML complété.

16. Système selon l'une quelconque des revendications 12 à 15, **caractérisé en ce que** chaque modèle d'interface comprend une balise complémentaire (<model_body>) contenant une définition du modèle de scène virtuelle 3D associé audit modèle d'interface.

17. Système selon la revendication 16, **caractérisé en ce que** la définition du modèle de scène virtuelle 3D utilise au moins une balise complémentaire appartenant au groupe comprenant :
- une balise complémentaire (<CALC_COORDS>) de calcul d'un jeu de coordonnées de points, permettant d'effectuer une distribution uniforme d'un nombre déterminé d'objets 3D sur la surface d'une sphère ;
- une balise complémentaire (<GET_COORDS>) permettant de retrouver ledit jeu de coordonnées de points, préalablement stocké par la balise complémentaire de distribution uniforme.

18. Système selon l'une quelconque des revendications 16 et 17, **caractérisé en ce que** la définition du modèle de scène virtuelle 3D utilise au moins une balise complémentaire appartenant au groupe comprenant :
- une balise complémentaire (<STR_INDEX_OF>) permettant de retourner une valeur entière représentant une position d'un caractère donné dans une chaîne donnée ;
- une balise complémentaire (<STR_NUMBER_OF_CHARS>) permettant de retourner une valeur entière représentant le nombre d'occurrence d'un caractère donné dans une chaîne donnée ;
- une balise complémentaire (<STR_SUBSTRING>) permettant de retourner une sous-chaîne d'une chaîne donnée ;
- une balise complémentaire (<STR_ SUBSTRING _NCHAR>) permettant de retourner une sous-chaîne d'une chaîne donnée, la sous-chaîne commençant à partir d'un indice zéro de la chaîne donnée et se terminant avec la Nième occurrence d'un caractère donné dans la chaîne donnée ;
- une balise complémentaire (<STR_REVERSE>) permettant d'inverser une chaîne donnée ;
- une balise complémentaire (<STR_LENGHT>) permettant de retourner une valeur entière représentant la longueur d'une chaîne donnée ;
- une balise complémentaire (<STR_GET_TOKEN>) permettant de retourner une sous-chaîne d'une chaîne donnée, la sous-chaîne représentant le Nième jeton de la chaîne donnée, chaque jeton étant délimité par un caractère donné.

19. Système selon l'une quelconque des revendications 16 à 18, **caractérisé en ce que** la définition du modèle de scène virtuelle 3D utilise au moins une balise complémentaire appartenant au groupe comprenant :
- une balise complémentaire (<HASHTABLE_CREATE>) permettant de créer une nouvelle table de hachage ;
- une balise complémentaire (<HASHTABLE_DESTROY>) permettant de supprimer une table de hachage donnée ;
- une balise complémentaire (<HASHTABLE_GET>) permettant de retourner une valeur à laquelle une clé donnée est mappée dans une table de hachage donnée ;
- une balise complémentaire (<HASHTABLE_PUT>) permettant de mapper une clé donnée à une valeur donnée dans une table de hachage donnée ;
- une balise complémentaire (<HASHTABLE_ENUMERATION>) permettant, à chaque itération d'un ensemble d'itérations sur toutes les clés d'une table de hachage donnée, d'affecter à deux variables de clé KEYNAME et de valeur VALNAME données les valeurs de la paire correspondante (clé, valeur).

20. Système selon l'une quelconque des revendications 16 à 19, **caractérisé en ce que** la définition du modèle de scène virtuelle 3D utilise au moins une balise complémentaire appartenant au groupe comprenant :
- une balise complémentaire (<COLOR_POOL>) permettant d'insérer des champs de couleur (MFColor fields) dans un lot de couleurs ;
- une balise complémentaire (<SET_COLOR>) permettant de stocker un champ de couleur donné du lot de couleurs dans une variable donnée ;
- une balise complémentaire (<STRING_TO__COLOR>) représentant une fonction de hachage qui mappe une chaîne donnée à un champ de couleur donné.

21. Système selon l'une quelconque des revendications 16 à 20, **caractérisé en ce que** la définition du modèle de scène virtuelle 3D utilise les balises complémentaires suivantes :
- une balise complémentaire (<SWITCH>) « de commutation », permettant d'utiliser une variable donnée comme une variable de contrôle pour les balises « de cas », « de plage de cas » et « de défaut » du jeu de balises complémentaires ;
- une balise complémentaire (<DEFAULT>) « de défaut » permettant de définir des opérations à effectuer si aucune des balises « de cas » et « de plage de cas » ne voit sa condition satisfaite ;
et au moins une des balises complémentaires suivantes :
- une balise complémentaire (<CASE>) « de cas » permettant de prendre une valeur spécifiée en attribut et de la comparer avec la valeur de la variable de contrôle de la balise complémentaire « de commutation » correspondante ; le contenu de la balise « de cas » étant analysé si les deux valeurs sont égales ;
- une balise complémentaire (<CASE_RANGE>) « de plage de cas » permettant de prendre une plage de valeurs spécifiée en attribut et de la comparer avec la valeur de la variable de contrôle de la balise complémentaire « de commutation » correspondante ; le contenu de la balise « de cas » étant analysé si la valeur de la variable de contrôle est comprise dans la plage de valeurs.

22. Système selon l'une quelconque des revendications 16 à 21, **caractérisé en ce que** la définition du modèle de scène virtuelle 3D utilise au moins une balise complémentaire appartenant au groupe comprenant :
- une balise complémentaire (<HASH_01>) permettant de réaliser une fonction de hachage qui transforme une chaîne donnée en une valeur flottante dans la plage 0,0 à 1,0 ;
- une balise complémentaire (<HASH_0N>) permettant de réaliser une fonction de hachage qui transforme une chaîne donnée en une valeur entière dans la plage 0 à N;
- une balise complémentaire (<HASH_LANG>) permettant de réaliser une fonction de hachage qui mappe une chaîne donnée représentant une langue à un champ de couleur ;
- une balise complémentaire (<STRING_PROXIMITY>) permettant d'effectuer une comparaison lexicographique entre deux chaînes données et de retourner une valeur flottante représentant la distance lexicographique entre les deux chaînes données.

23. Système selon l'une quelconque des revendications 16 à 22, **caractérisé en ce que** la définition du modèle de scène virtuelle 3D utilise au moins une balise complémentaire (<COLORED_SPHERE>) permettant de générer une sphère multicolore, découpée en un nombre de zones, préférentiellement des tranches, ayant chacune une largeur donnée et une couleur donnée, chaque zone étant associée à un capteur.

24. Système selon l'une quelconque des revendications 16 à 22, **caractérisé en ce que** la définition du modèle de scène virtuelle 3D utilise au moins une balise complémentaire (<BINDABLENODE>) permettant de définir un objet 3D nommé, comme la balise <NAMEDNODE>, mais ledit objet 3D nommé recevant en outre un événement lié ayant la valeur « vraie » de la part d'une action de lancement de l'analyse d'un modèle de scène virtuelle 3D courante (processCurrentModel3D).

25. Système selon l'une quelconque des revendications 16 à 24, **caractérisé en ce que** la définition du modèle de scène virtuelle 3D utilise au moins une balise complémentaire appartenant au groupe comprenant :
- une balise complémentaire (<STORE>) permettant d'affecter une valeur donnée à une variable de session donnée, dans les moyens de mémorisation des variables de session ;
- une balise complémentaire (<STORE_OBJECT>) permettant d'affecter un objet donné à une variable de session donnée, dans les moyens de mémorisation des variables de session ;
- une balise complémentaire (<REMOVE>) permettant de supprimer une variable de session donnée, dans les moyens de mémorisation des variables de session ;
- une balise complémentaire (<CLEAR_ALL>) permettant de supprimer toutes les variables de session, dans les moyens de mémorisation des variables de session ;
- une balise complémentaire (<INC>) permettant d'incrémenter avec un pas prédéterminé la valeur d'une variable de session donnée, dans les moyens de mémorisation des variables de session.

26. Système selon l'une quelconque des revendications 16 à 25, **caractérisé en ce que** la définition du modèle de scène virtuelle 3D utilise les balises complémentaires suivantes :
- une balise complémentaire (<PROCESS_TEXT>) permettant de traiter une chaîne de requête d'entrée donnée et de la convertir en au moins une contrainte pour la balise complémentaire « d'interrogation » (<SM_QUERY>) ;
- une balise complémentaire (<SM_CONNECT>) permettant d'ouvrir une connexion avec ledit au moins un moteur de recherche à base d' indexation ;
- une balise complémentaire « d'interrogation » (<SM_QUERY>) permettant d'envoyer une requête ;
- une balise complémentaire (<SM_ITERATE>) permettant d'utiliser un résultat donné collecté par la balise complémentaire « d'interrogation » (<SM_QUERY>) et d'itérer ledit résultat un nombre déterminé de fois.

27. Système selon la revendication 26, **caractérisé en ce que** la balise complémentaire « d'interrogation » (<SM_QUERY>) permet d'envoyer une requête dont les attributs comprennent :
- un attribut (ATTRS) comprenant une liste d'attributs que doit comporter le résultat de la recherche demandée par la requête ;
- un attribut (CONSTR) comprenant au moins une contrainte, dynamique ou statique, de la requête ;
- optionnellement, un attribut (GROUP) comprenant une clause de groupement du résultat en fonction d'au moins un attribut spécifique ;
- optionnellement, un attribut (ORDER) comprenant une clause de tri du résultat en fonction d'au moins un attribut spécifique ;
- un attribut (COUNTER) comprenant le nom d'une variable de compteur qui est incrémentée à chaque itération ;
- un attribut (RESULT) comprenant le nom d'une variable, visible par les autres balises et permettant de retrouver l'emplacement de stockage du résultat ;
- un attribut (ITERATE) indiquant si la balise complémentaire « d'interrogation » doit être utilisée comme une balise vide, ou une balise non-vide dont le contenu doit être itéré, ladite variable de compteur étant incrémentée à chaque itération du contenu.

28. Système selon l'une quelconque des revendications 16 à 27, **caractérisé en ce que** la définition du modèle de scène virtuelle 3D utilise au moins une balise complémentaire appartenant au groupe comprenant :
- une balise complémentaire (<listener_action>) de définition d'un unique élément d'écoute (listener), permettant d'écouter un objet 3D de la scène virtuelle 3D courante et de lancer l'exécution d'au moins une action spécifiée en attribut lorsque l'objet 3D écouté envoie un événement spécifié en attribut ;
- une balise complémentaire (<listeners>) de définition d'un jeu d'éléments d'écoute (listeners), chaque élément d'écoute permettant d'écouter un objet 3D de la scène virtuelle 3D courante et de lancer l'exécution d'au moins une action spécifiée en attribut lorsque l'objet 3D écouté envoie un événement spécifié en attribut.

29. Système selon l'une quelconque des revendications 16 à 28, **caractérisé en ce que** la définition du modèle de scène virtuelle 3D utilise un nombre limité de balises complémentaires « de formulation de requête » permettant chacune d'envoyer une requête distincte :
- comprenant un ou plusieurs attribut(s) de contrainte dont le type est prédéfini ; et
- visant à obtenir un ou plusieurs résultats dont le type est prédéfini.

30. Système selon la revendication 29, **caractérisé en ce que** la définition du modèle de scène virtuelle 3D utilise une première balise complémentaire (<SM_RELEVANCE_MAP_QUERY> ou <QUERY_1>) « de formulation de requête », permettant d'envoyer une première requête :
- comprenant un attribut de contrainte (KEYWORDS) définissant une liste d'au moins un mot-clé, les documents à retrouver devant contenir au moins un mot-clé de la liste d'au moins un mot-clé ;
- visant à obtenir un résultat (RESULT) dont le type est prédéfini et comprend, pour chaque document retrouvé, au moins un des champs suivants : l'adresse URL complète du document, la langue du document, le nombre de vidéos contenues dans le document, le nombre d'images contenues dans le document, le nombre d'éléments audio contenus dans le document, la taille du document, le nombre de liens pointés par le document, le nombre de liens qui pointent sur le document, les mots-clés du document.

31. Système selon l'une quelconque des revendications 29 et 30, **caractérisé en ce que** la définition du modèle de scène virtuelle 3D utilise une seconde balise complémentaire (<QUERY_2>) « de formulation de requête », permettant d'envoyer une seconde requête :
- comprenant :
* un premier attribut de contrainte (KEYWORDS) définissant une liste d'au moins un mot-clé, les documents à retrouver devant contenir au moins un mot-clé de la liste d'au moins un mot-clé ;
* un second attribut de contrainte (TYPE) définissant un type de document (audio, vidéo ou image), les documents à retrouver devant être du type défini ;
* optionnellement, un troisième attribut de contrainte (SIZEMIN) définissant une taille minimale pour les documents à retrouver ;
* optionnellement, un quatrième attribut de contrainte (SIZEMAX) définissant une taille maximale pour les documents à retrouver;
- visant à obtenir un résultat (RESULT) dont le type est prédéfini et comprend, pour chaque document retrouvé, au moins un des champs suivants : l'adresse URL complète du document, la langue du document, la taille du document, la liste des liens (adresses URL) pointant sur le document, le nombre de liens qui pointent sur le document, une adresse URL d'un résumé du document si elle existe, les mots-clés du document.

32. Système selon l'une quelconque des revendications 29 à 31, **caractérisé en ce que** la définition du modèle de scène virtuelle 3D utilise une troisième balise complémentaire (<QUERY_3>) « de formulation de requête », permettant d'envoyer une troisième requête :
- comprenant :
* un premier attribut de contrainte (KEYWORDS) définissant une liste d'au moins un mot-clé ;
* optionnellement, un second attribut de contrainte (LANG) définissant une langue pour les mots-clés ;
- visant à obtenir au moins un des résultats appartenant au groupe comprenant :
* un premier résultat (RESULT_KEYW) dont le type est prédéfini et comprend, pour chaque mot-clé du premier attribut de contrainte, au moins un des champs suivants : le mot-clé considéré, la langue du mot-clé considéré, une liste de thèmes associés au mot-clé considéré, une liste de mots-clés associés au mot-clé considéré, un ensemble réduit de pages significatives pour le mot-clé considéré ;
* un second résultat (RESULT_THEM) dont le type est prédéfini et comprend, pour chaque thème de la liste de thèmes associés à l'un des mots-clés du premier attribut de contrainte, au moins un des champs suivants : le thème considéré, une liste de thèmes associés au thème considéré, une liste de mots-clés significatifs pour le thème considéré, un ensemble réduit de pages significatives pour le thème considéré.

33. Système selon l'une quelconque des revendications 29 à 32, **caractérisé en ce que** la définition du modèle de scène virtuelle 3D utilise une quatrième balise complémentaire (<QUERY_4>) « de formulation de requête », permettant d'envoyer une quatrième requête :
- comprenant un attribut de contrainte (SITE) définissant une adresse URL d'un site à retrouver ;
- visant à obtenir un résultat (RESULT) dont le type est prédéfini et comprend, pour le site retrouvé, au moins un des champs suivants : la catégorie du site, la catégorie contenant la catégorie du site, la taille du site, le nombre de pages associées au site, des mots-clés significatifs du site, le nombre de vidéos contenues dans le site, le nombre d'images contenues dans le site, le nombre d'éléments audio contenus dans le site, des adresses URL significatives du site.

34. Système selon l'une quelconque des revendications 29 à 33, **caractérisé en ce que** la définition du modèle de scène virtuelle 3D utilise une balise complémentaire (<FTRD_MAP>) permettant de générer une scène virtuelle 3D à partir de :
- au moins un résultat donné, obtenu par au moins une des balises complémentaires « de formulation de requête » ;
- un type donné de mappage hiérarchisé des attributs du résultat aux paramètres du modèle de scène virtuelle 3D ;
- un jeu de paramètres donnés, qui dépendent du type de mappage et permettent le paramétrage d'au moins une variable paramétrable de définition du type de mappage.

35. Système selon la revendication 34, **caractérisé en ce que** la balise complémentaire (<FTRD_MAP>) permettant de générer une scène virtuelle 3D inclut un appel à au moins un algorithme externe, écrit dans un langage autre que le langage X-VRML complété,
et **en ce que** la partie, écrite dans le langage X-VRML complété, de la balise complémentaire de génération d'une scène virtuelle 3D (<FTRD_MAP>) est limitée à un travail de mise en page, de présentation graphique et de gestion d'interaction.

36. Système selon la revendication 35, **caractérisé en ce que** ledit au moins un algorithme externe définit un mécanisme de pré-extraction (pré-fetch) d'éléments compris dans ledit au moins un résultat donné.

37. Système selon l'une quelconque des revendications 29 à 36, **caractérisé en ce que** la définition du modèle de scène virtuelle 3D utilise une balise complémentaire (<FTRD_UTIL>) permettant de réaliser une opération et comprenant :
- un attribut (OP) définissant l'opération à réaliser parmi une pluralité d'opérations possibles ;
- un attribut (PARAMS) définissant des options correspondant à l'opération à réaliser.

38. Système selon la revendication 37, **caractérisé en ce que** la pluralité d'opérations possibles comprend des fonctions Java (OP="java.package.fcn").

39. Système selon l'une quelconque des revendications 37 et 38, **caractérisé en ce que** la pluralité d'opérations possibles comprend une opération d'itération (OP="iterate"), permettant d'effectuer une itération :
- sur un résultat donné de la balise complémentaire de génération d'une scène virtuelle 3D (<FTRD_MAP>) ; ou
- sur un résultat donné d'une autre balise complémentaire de réalisation d'opération (<FTRD_UTIL>) ayant également réalisé une opération d'itération, dans le cas où plusieurs boucles d'itération sont imbriquées sur plusieurs niveaux de hiérarchie d'un résultat donné de la balise complémentaire de génération d'une scène virtuelle 3D.

40. Système selon l'une quelconque des revendications 12 à 39, **caractérisé en ce que** chaque modèle d'interface comprend en outre une balise complémentaire (<model_interface>) contenant une définition du modèle d'interface utilisateur associé audit modèle d'interface.

41. Système selon la revendication 40, **caractérisé en ce que** la définition du modèle d'interface utilisateur utilise une balise complémentaire (<component>) de contrôles visuels, dont la valeur de l'un des attributs (« dataType ») définit une fonctionnalité de contrôle visuel parmi une pluralité.

42. Système selon la revendication 41, **caractérisé en ce que** les fonctionnalités de contrôle visuel appartiennent au groupe comprenant :
- une fonctionnalité (label) d'affichage d'une chaîne de caractères sur l'interface utilisateur ;
- une fonctionnalité (button) de bouton que l'utilisateur peut activer pour lancer un jeu d'actions défini dans un attribut « actions » ;
- une fonctionnalité (combobox) de contrôle d'un menu ;
- une fonctionnalité (textfield) de contrôle d'une saisie de texte ;
- une fonctionnalité (checkbox) de contrôle d'une boîte de dialogue.

43. Système selon la revendication 42, **caractérisé en ce que** la définition du modèle d'interface utilisateur utilise au moins une action appartenant au groupe comprenant :
- une action (processCurrentModel3D) de lancement de l'analyse (parsing) d'un modèle de scène virtuelle 3D courante ;
- une action (changeModel) de chargement d'un méta-modèle spécifié dans un des attributs de l'action, avec passage audit méta-modèle de paramètres définis dans d'autres attributs de l'action ;
- une action (clear3Dscene) d'effacement de tous les objets 3D de la scène virtuelle 3D courante ;
- une action (sendEvent) d'envoi d'un événement à un objet 3D de la scène virtuelle 3D courante ;
- une action (changeMapping) de lancement d'un mécanisme de modification par l'utilisateur du mappage des attributs du résultat d'une recherche aux paramètres du modèle de scène virtuelle 3D courant ;
- une action (clearInterface) d'effacement de tous les champs de texte de l'interface utilisateur courante.

44. Système selon l'une quelconque des revendications 42 à 43, **caractérisé en ce que** la définition du modèle d'interface utilisateur utilise une balise complémentaire (<initial_actions>) de définition d'une liste d'actions à exécuter au chargement du modèle d'interface utilisateur.

45. Système selon l'une quelconque des revendications 42 à 44, **caractérisé en ce que** chaque modèle d'interface comprend en outre une balise complémentaire (<model_param_mapping>) contenant une définition d'un mappage des attributs du résultat d'une recherche aux paramètres du modèle de scène virtuelle 3D associé audit modèle d'interface.

46. Procédé de traitement et de visualisation des résultats de recherches effectuées par au moins un moteur de recherche à base d'indexation, **caractérisé en ce qu'**il comprend les étapes suivantes :
- une étape de gestion d'un ensemble de modèles d'interface, chaque interface de modèle étant associé à un modèle d'interface utilisateur et un modèle de scène virtuelle 3D qui sont liés, chaque modèle de scène virtuelle 3D définissant un mappage particulier entre des paramètres dudit modèle de scène virtuelle 3D et des attributs du résultat d'au moins une recherche, l'ensemble de modèles d'interface comprenant un premier sous-ensemble comprenant au moins deux modèles d'interface dont les modèles de scène virtuelle 3D associés sont distincts et permettent chacun de visualiser la totalité du résultat de la au moins une recherche ;
- une étape de sélection d'un modèle d'interface, comprenant :
* une étape de sélection initiale d'un modèle d'interface au sein dudit premier sous-ensemble de modèles d'interface, la sélection initiale étant fonction d'au moins un attribut du résultat de la au moins une recherche et/ou d'au moins une interaction de l'utilisateur avec le système ;
* une étape de changement du modèle d'interface courant, par sélection d'un modèle d'interface suivant au sein dudit ensemble de modèles d'interface, en fonction d'au moins une interaction de l'utilisateur avec le système et, éventuellement, d'au moins un attribut du résultat de la recherche ;
- une étape de génération et restitution d'une interface utilisateur, selon le modèle d'interface utilisateur sélectionné au cours de l'étape de sélection ;
- une étape de génération et restitution d'une scène virtuelle 3D, en fonction du résultat de la au moins une recherche et selon le modèle de scène virtuelle 3D sélectionné au cours de l'étape de sélection, la scène virtuelle 3D restituée permettant à l'utilisateur de visualiser la totalité du résultat de la au moins une recherche.

47. Programme d'ordinateur comprenant des instructions de code de programme pour l'exécution des étapes du procédé selon la revendication 46 lorsque ledit programme est exécuté sur un ordinateur.
